# EUROPEAN PATENT APPLICATION

(11) **EP 1 717 607 A1**
(43) Date of publication of application: **02.11.2006**
(21) Application number: 05710163.6
(22) Date of filing: 14.02.2005
(51) Int. Cl.: G02B 1/04, C08F 4/642, C08F 4/654, C08F 8/04, C08F 32/00

(54) **OPTICAL RESIN LENS AND METHOD FOR PRODUCING OPTICAL RESIN MATERIAL**

(30) Priority: 19.02.2004 JP 2004042534; 23.02.2004 JP 2004046042; 26.02.2004 JP 2004051516; 01.03.2004 JP 2004055802; 02.03.2004 JP 2004057288; 02.03.2004 JP 2004057289
(71) Applicant: Konica Minolta Opto, Inc., Hachioji-shi, Tokyo 192-8505 (JP)
(72) Inventor: NAKAMURA, Kazuaki c/o Konica Minolta Tech.Ctr.,Inc, Hachioji-shi, Tokyo 192-8505 (JP); KURACHI, Yasuo c/o Konica Minolta Busin.Tech.Inc., Toyokawa-shi, Aichi 442-8503 (JP)
(74) Representative: McCluskie, Gail Wilson
(86) International application number: PCT/JP2005/002155
(87) International publication number: WO 2005/081019

(57) **Abstract**

An optical resin lens characterized in comprising a polymer prepared employing a production method including a process which polymerizes olefin employing titanium halide and a catalyst comprised of the organic aluminum represented by Formula RₙAlX₃₋ₙ (wherein 1 < n ≤ 2, R represents a hydrocarbon group, and X represents a halogen atom).

## Description

### TECHNICAL FIELD

The present invention relates to an optical resin lens mainly employed in information recording devices and a production method for optical resin materials.

### BACKGROUND TECHNOLOGY

Optically transparent plastics are widely employed in optical products due to their lightweight and high productivity. High performance optical lenses, which are employed in various cameras such as conventional cameras, film-integrated type cameras (lens-fitted films), or video cameras, optical pick-up devices such as CD, CD-ROM, CD-R, CD-RW, CD-Video, MO, or DVD, and various kinds of equipment such as OA machines including copiers and printers, are plastic lenses which are prepared by injection molding employing transparent thermoplastic resins such as polymethyl methacrylate (PMMA), polycarbonate (PC), or cyclopolyolefin (CO) are partly or entirely employed in a part or the entirety of the optical system.

For example, PMMA (polymethyl methacrylate) is a resin that is frequently employed due to low optical anisotropy, but this resin is problematic with its small refractive index of 1.49, and exhibits relatively high hygroscopicity, large elongation and shrinkage depending on humidify differences, and relatively low heat resistance.

To overcome such drawbacks, many methods have been reported stating that methacrylate monomers having a bulky hydroscopic group on the side chain of methyl methacrylate are copolymerized. However, application of the above methods to the production of plastics lenses which are required for high precision and high stability under exposure to laser beams for an extended period of time still results in insufficient heat resistance. Further, PC (polycarbonate), known in the art, exhibits characteristics such as a relatively high refractive index of 1.5,9 and relatively low hygroscopicity, and thus has been applied to lenses and optical disks. However, it has resulted in problems in which distortions tend to remain during molding due to a relatively high melt viscosity, and the benzene ring tends to result in molecular orientation, whereby optical anisotropy tends to occur during molding.

To overcome the above drawbacks, methods are disclosed in which molding properties are enhanced by lowering the melt viscosity via a decrease in the molecular weight, and in order to reduce the molecular orientation, block copolymerization with polystyrene having a benzene ring on the side chain is performed, and monomers having a benzene ring on the side chain are employed.

However, the resulting molding resins tend to result in a decrease in strength and optical non-uniformity due to phase separation. Further, it has been difficult to improve their fluidity. Although the above PC exhibits relatively high heat resistance, molded products tend to result in birefringence, whereby at present, it is not applied to plastics lenses which are required for high precision.

Further, cyclopolyolefin, which has a ring structure in either its entire or part of the skeleton, exhibits blue transmittance. Compared to PC (polycarbonate), it exhibits lower optical anisotropy. However, its characteristics are still insufficient for application to high performance plastic lenses and its improvement has diligently been performed.

For example, improvements of materials have been performed which include cyclopolyolefin based polymers which exhibit low birefringence, high heat resistance, and high moisture resistance (refer, for example, to Japanese Patent Publication for Public Inspection (hereinafter referred to as JP-A)) No. 5-230148; polymers which are developed to improve hue via hydrogenation of cyclopolyolefin based polymers (refer to, for example, JP-A No. 2002-105131); and specifically structured copolymers enabling the production of large-sized thin lenses due to excellent transparency, low birefringence, and excellent mechanical strength, which are prepared by hydrogenating the unsaturated bond incorporating the aromatic ring portion of the block copolymers of styrene with butadiene (refer, for example, to JP-A No. 2002-148401). However, even though employing materials, which exhibit a higher heat resistance than PMMA, problems in which physical properties are degraded via exposure to laser beams for an extended period of time have been remained unsolved.

In recent years, high density high rate recording systems employing light of CD-R, DVD, or MO are increasingly studied and realized, whereby standards required for optical systems have become more sever. When a disk rotates at a high rate, optical performance greatly affects data writing and reading. Further, when high density is required, light focusing capability and stability of an optical system directly affect recording density. Large optical anisotropy is not advantageous for high density and a high rate since a focal point is not dedicated to one point.

On the other hand, studies have increasingly been conducted to achieve higher resolution of VTR and digital still cameras (DSC). In these, moire is occasionally formed due to the relationship between the CCD arrangement and the image capturing scene, whereby lathe lines emerge in captured images. In order to minimize such phenomena, lowpass filters are often employed. However, problems occur in which PC (polycarbonate) is often employed in the plastic lenses of these image capturing devices and it is necessary to employ at least two lowpass filters, since the lathe lines are not minimized by employing one lowpass filter due to large optical anisotropy of the above lenses.

The lowpass filter is costly due to the use of crystallized quartz, resulting in cost increase. In order to overcome the above problem, cited as a component which exhibits small optical anisotropy and a high refractive index, are fluorene skeleton-incorporating resins or optical lenses (refer, for example, to JP-A Nos. 7-198901, 8-109249, 9-302077, 8-160222, 5-215902, and 6-287230). However, no example is found in which the above component is applied to lenses for the use of high density high rate recording and high performance for image capturing. Further, in recent years, these high performance lenses have increasingly downsized due a trend towards a decreased size and weight.

When the above high performance optical lens is prepared employing resins using any of the molding methods, distortion tends to occur since pressure is concentrated to the charging portion of the above resins. Particularly, when a small lens is prepared, the resulting distortion tends to affect the optical surface, whereby problems occur in which optical anisotropy tends to result due to the generation of interior stress. Further, when the temperature increases due to exposure to laser beams or other radiation, problems clearly occur in which cloudiness is generated in the lens. However, at present, no means has been proposed to overcome the above drawbacks.

### DISCLOSURE OF THE INVENTION

An object of the present invention is to provide a highly durable optical resin lens which results in no degradation of optical characteristics even under conditions of exposure to laser beams or other radiation for an extended period of time, and to provide a production method of optical resin materials.

The above drawbacks of the present invention are overcome employing the following embodiments.
(1) An optical resin lens comprising a polymer which is prepared via a production method including a process which polymerizes olefin in the presence of a catalyst comprised of titanium halide and the organic aluminum represented by Formula RₙAlX₃₋ₙ (wherein 1 < n ≤ 2, R represents a hydrocarbon group, and X represents a halogen atom).
(2) An optical resin lens comprising a polymer which is prepared via a production method including a process which polymerizes olefin employing a catalyst comprised of titanium halide and the organic aluminum represented by Formula RₙAlX₃₋ₙ (1 < n ≤ 2, R represents a hydrocarbon group, and X represents a halogen atom) and a process which hydrogenates said polyolefin.
(3) An optical resin lens comprising a polymer which is prepared via a production method including a process which polymerizes olefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended and pulverized, and B) an organic aluminum compound. 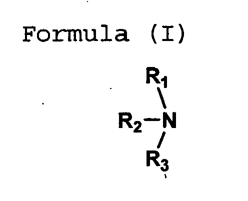 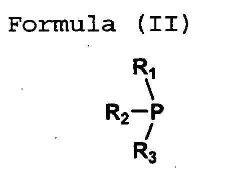 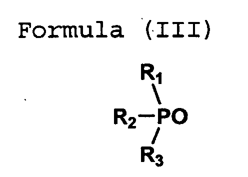
   In above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂, and R₃ may be combined to form a ring.
(4) An optical resin lens comprising a polymer which is prepared via a production method including a process which polymerizes olefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended and pulverized, and B) an organic aluminum compound, and a process which hydrogenates said polyolefin. 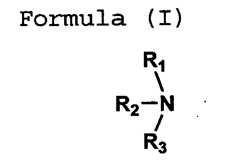 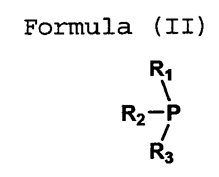 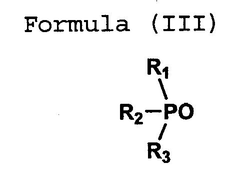
   In above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂, and R₃ may be combined to form a ring.
(5) An optical resin lens comprising a polymer which is prepared via a production method including a process which polymerizes olefin, in a catalyst system comprising (a) an organic aluminum compound, (b) a reaction product of a magnesium compound with titanium halide, and (c) a Lewis base, employing, as such a Lewis base, an aromatic carboxylic acid ester (0 ≤ (c)/(a) < 1/3 (mol/mol) of alcohol having a secondary or tertiary carbon.
(6) An optical resin lens comprising a polymer which is prepared via a production method including a process which prepares polyolefin via polymerizing olefin, in a catalyst system comprising (a) an organic aluminum compound, (b) a reaction product of a magnesium compound with titanium halide, and (c) a Lewis base, employing, as such a Lewis base, an aromatic carboxylic acid ester (0 ≤ (c)/(a) < 1/3 (mol/mol) of alcohol having a secondary or tertiary carbon, and a process which hydrogenates said polyolefin.
(7) An optical resin lens comprising a polymer which is prepared via a production method comprising a process which polymerizes olefin, employing a catalyst system comprising A) a titanium-incorporating solid catalyst component which is prepared via a contact reaction of (a) an organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ (wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), and (c) titanium halide, and B) an organic aluminum compound.
(8) An optical resin lens comprising a polymer which is prepared via a production method including a process to prepare polyolefin by polymerizing olefin, employing a catalyst system comprising A) a titanium-incorporating solid catalyst component which is prepared via a contact reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ (wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), and (c) titanium halide, and B) an organic aluminum compound, and a process which hydrogenates said polyolefin.
(9) An optical resin lens comprising a polymer which is prepared via a production method including a process which polymerizes olefin, employing a catalyst system comprising A) a titanium-incorporating solid catalyst component which is prepared via the contact of (a) at least one of the silanol or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2), (c) at least one of titanium halides, and d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) an organic aluminum compound.
(10) An optical resin lens comprising a polymer which is prepared via a production method including a process which polymerizes olefin to prepare polyolefin, employing a catalyst system comprising A) a titanium-incorporating solid catalyst component which is prepared via the contact of (a) at least one of the silanol or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤(d)/(b) < 0.2 (mol/mol), and B) organic aluminum compound, and a process which hydrogenates said polyolefin.
(11) An optical resin lens comprising a polymer which is prepared via a production method including a process which polymerizes olefin, employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) an organic aluminum compound.
(12) An optical resin lens comprising a polymer which is prepared via a production method comprising a process which polymerizes olefin to prepare polyolefin, employing a catalyst system comprising A) a titanium- incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) organic aluminum compound, and B) an organic aluminum compound, and a process which hydrogenates said polyolefin.
(13) The optical resin lens described in any one of the above Items (1) - (12), wherein said olefin comprises a cyclic olefin.
(14) The optical resin lens described in the above Item (13), wherein said olefin comprises a cyclic olefin and a non-cyclic olefin.
(15) The optical resin lens described in any one of the above Items (1) - (14), wherein said olefin comprises a plasticizer or an antioxidant.
(16) The optical resin lens described in any one of the above Items (1) - (15), which is employed in a pick-up device employing at least a blue laser beam.
(17) A production method of an optical resin material including a process to polymerize olefin employing a catalyst comprised of titanium halide and the organic aluminum represented by Formula RₙAlX₃₋ₙ (wherein 1 < n ≤ 2, R represents a hydrocarbon group, and X represents a halogen atom) .
(18) A production method of an optical resin material, which includes a process to polymerize olefin to prepare polyolefin employing a catalyst comprised of titanium halide and the organic aluminum represented by Formula RₙAlX₃₋ₙ (wherein 1 < n ≤ 2, R represents a hydrocarbon group, and X represents a halogen atom).
(19) A production method of an optical resin material including a process to polymerize olefin employing a catalyst comprised of a mixture of A) a solid powder material which is prepared in such a way that the entire compound, which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound, is fed, blended and pulverized, and B) an organic aluminums compound. 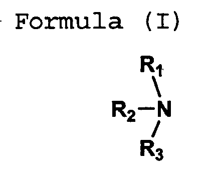 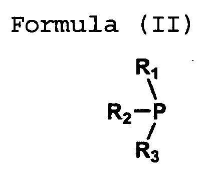 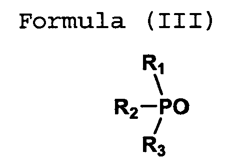
   In the above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂ and R₃ may be combined to form a ring.
(20) A production method of an optical resin material including a process to polymerize olefin to prepare polyolefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended, and pulverized, and B) an organic aluminum compound, and a process which hydrogenates said polyolefin. 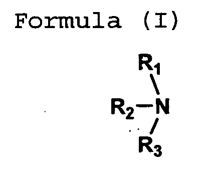 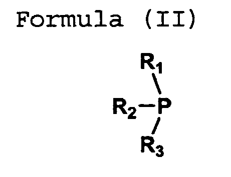 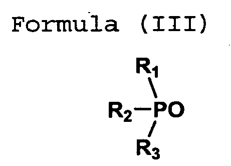
   In the above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂ and R₃ may be combined to form a ring.
(21) A production method of an optical resin material including a process to polymerize olefin in a catalyst system comprising (a) an organic aluminum compound, (b) a reaction product of a magnesium compound with titanium halide, and (c) a Lewis base, employing an aromatic carboxylic acid ester (0 ≤ (c)/(a) < 1/3 (mol/mol) of alcohol having a secondary or tertiary carbon as said Lewis base.
(22) A production method of an optical resin material including a process to polymerize olefin to prepare polyolefin employing, in a catalyst system comprising (a) an organic aluminum compound, (b) a reaction product of a magnesium compound with titanium halide, and (c) a Lewis base, an aromatic carboxylic acid ester (0 ≤ (c)/(a) < 1/3 (mol/mol) of alcohol having a secondary or tertiary carbon, as such a Lewis base, and a process which hydrogenates said polyolefin.
(23) A production method of an optical resin material including a process to polymerize olefin employing a catalyst system comprising A) a titanium-incorporating solid catalyst component which is prepared via a contact reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), (c) a titanium halide, as well as B) an organic aluminum compound.
(24) A production method of an optical resin material including a process to polymerize olefin to prepare polyolefin employing a catalyst system comprising A) a titanium-incorporating solid catalyst component which is prepared via a catalytic reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), (c) a titanium halide, as well as B) an organic aluminum compound, and a process which hydrogenates said polyolefin.
(25) A production method of an optical resin material including a process to polymerize olefin employing a catalyst system comprising A) a titanium-incorporating solid catalyst component which is prepared via the contact of (a) at least one of the silanol compounds or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤(d)/(b) < 0.2 (mol/mol), and B) an organic aluminum compound.
(26) A production method of an optical resin material comprising a process to polymerize olefin to prepare polyolefin employing a catalyst system comprising A) a titanium-incorporating solid catalyst component which is prepared via the contact of (a) at least one of the silanol compounds or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) an organic aluminum compound, and a process which hydrogenates said polyolefin.
(27) A production method of an optical resin material including a process to polymerize olefin employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d) / (b) < 0.1 (mol/mol), and B) an organic aluminum compound.
(28) A production method of an optical resin material comprising a process to polymerize olefin to prepare polyolefin employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) an organic aluminum compound, and a process which hydrogenate said polyolefin.
(29) The production method of an optical resin material described in any one of the above Items (17) - (28), wherein said olefin comprises a cyclic olefin.
(30) The production method of an optical resin material described in the above Item (28), wherein said olefin comprises a cyclic olefin and a non-cyclic olefin.
(31) The production method of an optical resin material described in any one of the above Items (17) - (30), which includes a process which incorporates a plasticizer or an antioxidant in said polymer.

### BRIEF DESCRIPTION OF THE DRAWING

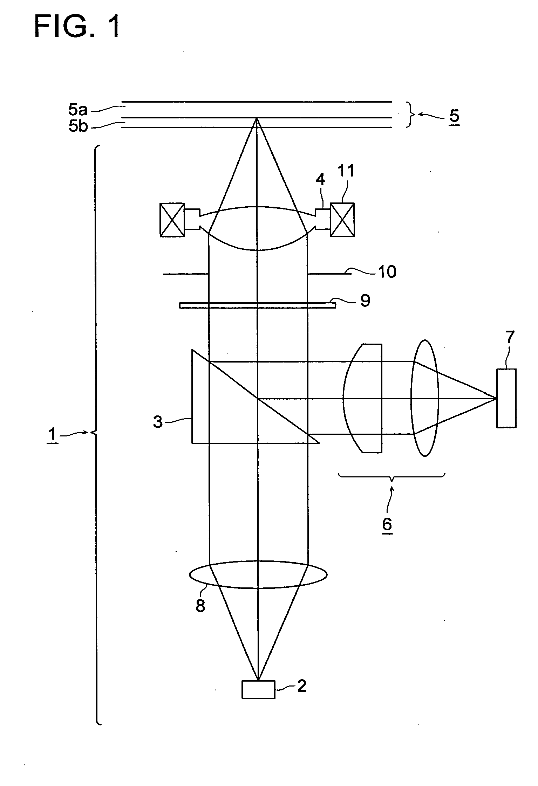

Fig. 1 is a schematic view showing an example of a pick-up device for an optical disk in which the optical resin lens of the present invention is employed as an objective lens.

### PREFERRED EMBODIMENTS TO PRACTICE THE INVENTION

The inventors of the present invention conducted diligent investigation and discovered that by employing the polymer produced employing the above production method, it was possible to produce an optical resin material which exhibited high durability in such a way that optical characteristics were not degraded under exposure to laser beams or other radiation for an extended period of time and further, by employing the above optical resin material, it was possible to produce an optical resin lens that exhibited high durability.

Further, in order to realize the effects of the present invention more, it is preferable that the above olefin incorporates cyclic olefin, the above olefin incorporates cyclic olefin and non-cyclic olefin, and the above polymer incorporates either plasticizers or antioxidants.

The present invention will now be detailed.

In 1953, Karl Ziegler discovered the Ziegler catalyst which enabled polymerization of ethylene under a mild condition such as 10 atmospheric pressure employing organic alkali metals composed of lithium and aluminum, while in 1954, Natta succeeded in polymerization of crystalline polypropylene in such a way that TiCl₄ was reduced to form crystalline TiCl₃ which was combined with alkyl aluminum. Since then, polymerization of polyolefins has been energetically conducted.

At the beginning, TiCl₄ was employed to polymerize ethylene without any modification, but problems inherently occurred in which productivity was degraded due to adhesion of the resulting polymer onto the wall of a polymerization vessel and poor shape of polymer particles. Thereafter, improvements were achieved and industrial production was carried out employing insoluble TiCl₃ which was prepared by reducing TiCl₄. However, due to the low polymerization activity, a complicated ash removal process was required to remove a large amount of the catalyst components remaining in the polymer. Further, the production of polypropylene results in insufficient steric regularity, necessitating a process which removes atactic polymers, and the production process became complicated and much energy was consumed. After the oil shock in 1973, a significant increase in cost of electric power and services necessitated unavoidable intensive simplification of production processes, and significant improvement of yields and selectivity. As a means to solve the above proposition, in 1968, Mitsui Petrochemical Industries, Ltd. discovered a MgCl₂ carrying type Ti catalyst which exhibited markedly high activity. Thereafter, various high activity polymerization carrier provided olefin polymerization catalysts have been proposed. For example, JP-A No. 48-92489 proposes that a solid catalyst which is prepared by allowing the reaction product of diphenylsilanediol with a Grignard compound to react with a halogen compound of titanium or vanadium is employed to polymerize ethylene. Further, JP-A Nos. 46-34098 and 47-42137 propose the use of the reaction product of alcolate with titanium halide for olefin polymerization, and JP-A No. 45-9548 also proposes the use of the reaction product of a magnesium oxide compound with titanium halide for olefin polymerization. In 1975, Mitsui Petrochemical Industries, Ltd. and Montedison Co. found that a catalyst prepared by introducing an electron donor to an MgCl₂ carrier type Ti catalyst enhanced polymerization activity as well as steric regularity and also resulted in high activity even for stereoregularity polymerization of propylene.

In 1992, Natta et al. succeeded in polymerization of cycloolefins employed for optical resin lenses based on the ring-opening metathesis polymerization of cyclobutane and cyclopentane. Thereafter, in 1992, Grubb et al. reported development of various high activity catalysts such as Ru vinylcarvene complexes, and high stereo-selectivity was also developed. At present, polymers which are prepared employing the ring opening metathesis polymerization are employed as an optical material. However, these are degraded under exposure to blue laser beams or other high energy radiation for an extended period of time, and currently, an optical resin lens exhibiting high durability, which is the target of the present invention, has not been realized.

Consequently, in order to overcome the above drawbacks, the inventors of the present invention conducted diligent investigation. As a result, it was discovered that it was possible to produce an optical resin lens which exhibited high durability of optical characteristics employing the polymers produced by employing a specific catalyst, whereby the present invention was achieved.

One of the catalysts usable in the present invention is composed of titanium halide and the organic aluminum represented by formula RₙAlX₃₋ₙ wherein 1 < n ≤ 2, R represents a hydrocarbon group, and X represents a halogen atom.

Each of the components of the above catalysts will now be described.

### (Titanium Halides)

Titanium halides employed in the present invention include the compounds represented by formula TiXₙ wherein X represents C1, Br, or I and n represents 2 - 4. Specific examples include titanium tetrachloride, titanium tetrabromide, titanium tetraiodide, titanium trichloride, and titanium dichloride, as well as oxydihalogenotitanium such as titanium oxydichloride. Of these, titanium tetrachloride and titanium trichloride are particularly preferred. Employed as titanium trichloride may, for example, be one which is prepared by reducing titanium tetrachloride employing hydrogen or aluminum, or the other which is prepared by reducing titanium tetrachloride employing organic aluminum. Further, it is possible to employ a solid solution or an eutectic of titanium trichloride with another metal halide.

### (Organic Aluminum Compounds)

Organic aluminum compounds employed in the second component of the present invention are represented by formula RₙAlX₃₋ₙ wherein n represents 1 or 2, R represents a hydrocarbon group which may incorporate a straight or branched alkyl group having 1 - 18 carbon atoms, an alicyclic hydrocarbon group or an aromatic hydrocarbon group, and X represents a halogen such as Cl, Br, or I).

Specific examples include, but are not limited to, dimethyl aluminum chloride, dimethyl aluminum bromide, dimethyl aluminum iodide, diethyl aluminum chloride, diethyl aluminum bromide, diethyl aluminum iodide, di-n-propyl aluminum chloride, di-i-propyl aluminum chloride, di-n-butyl aluminum chloride, and dicyclohexyl aluminum chloride, as well as mixtures of the above organic aluminum with methyl aluminum dichloride, methyl aluminum dibromide, methyl aluminum diiodide, ethyl aluminum dichloride, ethyl aluminum dibromide, ethyl aluminum diiodide, n-propyl aluminum dichloride, n-propyl aluminum dibromide, n-propyl aluminum diiodide, cyclohexyl aluminum dichloride, cyclohexyl aluminum dibromide, cyclohexyl aluminum diiodide, methyl aluminum sesquichloride, methyl aluminum sesquibromide, methyl aluminum sesquichloride, methyl aluminum sesquibromide, methyl aluminum sesquiiodide, ethyl aluminum sesquichloride, ethyl aluminum sesquibromide, or ethyl aluminum sesquiiodide. The above organic aluminum compounds are not limited thereto.

The mol ratio of titanium halide to organic aluminum employed in the present invention as a catalyst component is preferably in the range of 10 : 1 - 1 : 50, but is more preferably in the range of 2 : 1 - 1 : 10.

The other catalysts usable in the present invention are composed of a mixture of A) a compound prepared by allowing (a) a low valent eutectic which is prepared by reducing titanium halide or a mixture of titanium halide and vanadium halide, to contact with (b) at least one compound selected from the compounds represented by the above Formula (I) - (III), or at least one compound selected from the compounds represented by formula (I) - (III) and organic aluminum compound and B) an organic aluminum compound.

Each component employed in the above catalyst system will now be detailed.

Examples of titanium halides employed in the present invention include titanium tetrachloride, titanium tetrabromide, titanium tetraiodide, and titanium trichloride, titanium dichloride, as well as oxydihalogenotitanum such as titanium oxydichloride.

Examples of vanadium halides employed in the present invention include vanadium tetrahalides such as vanadium tetrachloride or vanadium tetrabromide, as well as oxyhalides such as vanadium oxytrichloride or vanadium oxydichloride. Of these, vanadium tetrachloride is particularly preferred. When polymerized, combinations such as titanium tetrahalide and vanadium tetrahalide are preferred.

The preferred mixing ratio of halides of the above transition metals (being titanium or vanadium) is that the ratio of vanadium halides is at most 10 mol% with respect to titanium halides.

The above reduction is performed employing, as a reducing agent, the organic aluminum compounds represented by following Formula (IV).

Formula (IV) AlRₙX₃₋ₙ

In above Formula (IV), R represents 1 - 14, X represents a halogen atom, and n represents an integer of 1 - 3.

Examples of organic aluminum compounds include those in which the hydrocarbon group in above Formula (IV) is an alkyl group such as methyl, ethyl, propyl, butyl, octyl, or decyl; and an aryl group such as tolyl, xylyl, or naphthyl; an aralkyl group such as benzyl; or a cycloalkyl group such as cyclohexyl, and the halogen atom is chlorine, bromine and iodine. Cited as those may be trimethyl aluminum, triisobutyl aluminum, diethyl aluminum monohalide, dibutyl aluminum monohalide, ethyl aluminum sesquihalide or alkyl aluminum sesquihalides analogous to these or alkyl aluminum compounds analogous to these.

The consumed amount of these metal or organic aluminum compounds is preferably in the range of 0.01 - 10 in terms of mol ratio with respect to to the above transition metal halides, but is most preferably in the rang of 0.1 - 1.

Reduction is performed in the presence of inert gases and inactive solvents so that titanium and/or vanadium is converted to a state of lower valence from its maximum valence. A relatively low reduction temperature is preferred since a high temperature tends to undesirably decrease polymerization activity. The temperature is commonly at most 10 °C, but is most preferably at most 0 °C.

After the reduction, it is preferable to completely remove unreacted raw materials and solvents employing appropriately selected methods such as solvent filtration, centrifugal separation or washing.

Subsequently, the low valence eutectics, prepared as above, are subjected to blending and milling described below. However, prior to the blending and milling, they may be thermally treated. The thermal treatment is commonly performed under an inert gas atmosphere at 180 - 230 °C for at least one hour. Further, prior to the blending and milling, the above low valence eutectics may be subjected to activation milling. Conditions of activation milling are not particularly limited and common activation milling conditions may be acceptable which have been employed which have been accepted during transition of α, β, or γ type titanium trichloride to δ type titanium trichloride. For example, cited may be activation milling conditions described in Japanese Patent Publication Nos. 46-26921 and 46-26922.

In the present invention, it is possible to employ commercial products as the above low valence eutectics. For example, titanium trichloride which is commercially available as "AA type titanium trichloride" is included in the low valence eutectics defined in the present invention and is usable in the present invention.

In the present invention, to low valence eutectics (hereinafter, referred to as (a) component) prepared as above, supplied was all of the at least one compound selected from the compounds represented by above Formulas (I) - (III), or a compound (hereinafter referred to as (b) component) prepared by allowing at least one selected from the compounds represented by above Formulas (I) - (III) with organic aluminum compounds. The resulting mixture was blended and milled. The main point in the present invention is that the resulting solid powder compound is employed as a first component (hereinafter referred to as (A) component) of the catalyst.

The compounds represented by above Formula (I) - (III) are generally known as an organic Lewis base compound.

Examples of specific compounds represented by above Formula (I) may include primary amines, secondary amines, and tertiary amines; diamines such as ethylenediamine or piperazine; cyclic amines such as pyridine or piperazine; and heterocyclic aromatic compounds such as quinoline.

Further, examples of specific compounds represented by above Formula (II) are trialkylphosphine and triarylphosphine, as well as compounds in which all or some of those alkyl groups or aryl groups are substituted with an amino group or an alkoxy group.

Further, examples of the compounds represented by above Formula (III) include trialkylphosphine oxide and triarylphosphine oxide, as well as all or some of those alkyl groups or aryl groups that are substituted with an amino group or an alkoxy group.

Still further, it is possible to employ compounds which are prepared by contacting these organic Lewis base compounds with organic aluminum compounds. In such a case, it is possible to employ the aluminum compounds represented by Formula (IV). On the other hand, dialkyl aluminum monohalides such as dimethyl aluminum chloride or diethyl aluminum chloride give targeted results.

The consumed amount of the organic Lewis base compounds and the organic aluminum compounds is preferably in the range of 0.5 : 1 - 5 : 1 in terms of mol ratio of the former : the latter. Contact of both of these compounds is performed via simple mixing in the presence or absence of inert solvents. In such a case, temperature and the processing period are not particularly limited. The temperature is commonly 0 - 100 °C, but preferably nearly room temperature, while the period is commonly 1 minute - 1 day, but is preferably 10 - 60 minutes. The prepared product may be employed in the form of a mixed liquid composition without any modification, or if desired, employed via separation and purification.

In the present invention, at least one selected from these organic Lewis base compounds, or compounds prepared by contacting organic Lewis base compounds with organic aluminum compounds is employed as the (b) component, and the consumed amount is preferably in the range of 0.01 - 1 in terms of mol ratio (b/a) with respect to the above transition metal compounds, which are (a) component, but is most preferably in the range of 0.05 - 0.5.

Methods to add (b) component to (a) component include one in which the total amount is supplied at a uniform rate over the specified milling period, or the other in which (b) component is equally divided and the equally divided portion is supplied while varying the amount of the equally divided portion at a factor of 0.3 - 3.

Blending and milling of both components are commonly performed employing a ball mill or a vibration mill. The blending and milling period is preferably several hours to several hundred hours, but is more preferably 5 - 50 hours.

The blending and milling temperature is commonly in the range of -50 to 100 °C, but is preferably in the range of -10 to 50 °C. During milling, it is possible to change the milling temperature. Specifically, for example, it is preferable that milling is performed during the first half of the milling period at a relatively high temperature and during the second half, it is performed at a relatively low temperature.

Blending and milling are commonly performed in an ambience of inert gasses such as argon, nitrogen, or methane. It is possible to blend other inert gasses such as water vapor, oxygen, hydrogen, ammonia, phosphine, unsaturated hydrocarbon, with dried inert inorganic compounds such as alumina, silica, sodium chloride or magnesium chloride. Further, at room temperature, it is possible to coexist saturated hydrocarbon. Further, blending and milling may be carried out simultaneously with active milling of low valence eutectics.

It is possible to provide the solid powder compounds, prepared as above, without any modification, as a catalyst first component ((A) component) in the polymerization reaction of cyclic olefin copolymers described below. However, when the thermal treatment and/or activation milling is not carried out prior to or during blending and milling, it is preferable to employ it as the catalyst first component after carrying out the thermal treatment and/or activation milling.

On the other hand, the catalyst second component in the present invention is employed while it is being blended with the organic aluminum compound represented by following Formula (V) or (VI).

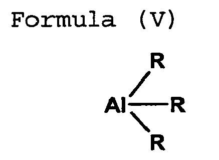

In above Formula (V), R represents hydrocarbon having 1 - 12 carbon atoms.

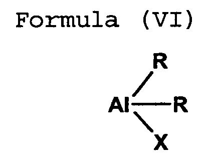

In above Formulas (V) and (VI), commonly employed as R are an alkyl group having 1 - 12 carbon atoms, an aryl group, an aralkyl group, an alkylaryl group, and a cycloalkyl group, while simultaneously employed as the halogen atom are chlorine, bromine, and iodine. Specific examples include trialkyl aluminum such as trimethyl aluminum, triisopropyl aluminum, or triisobutyl aluminum, as well as mixtures of any of these trialkyl aluminum with any of the dialkyl aluminum monohalides such as dimethyl aluminum monochloride, dimethyl aluminum monobromide, dimethyl aluminum monoiodide, diethyl aluminum monochloride, diethyl aluminum monobromide, diethyl aluminum monoiodide, dipropyl aluminum monochloride, or dipropyl aluminum monobromide.

In the present invention, olefin is synthesized employing the catalyst system substantially composed of the above first catalyst component ((A) component) and second catalyst component ((B) component). However, other than the above two components, a third component (hereinafter referred to as (C) component) may be employed in the polymerization reaction. Particularly preferred as such a third component ((C) component) are compounds which are prepared by contacting those listed as raw material (B) component during preparation of (A) component, namely at least one selected from the Lewis base compounds or the compounds represented by above Formula (I) - (III), with organic aluminum compounds.

In the present invention, at least two compounds listed as a (b) component, which is the third component, may be blended and then employed.

The catalyst according to the present invention is prepared by simply blending (A) component and (B) component, and if desired, (C) component. Even when (C) component is employed, the mixing order and method are not particularly limited. After blending two components of the three components, the rest may be blended. Further, it is possible to employ at least one of (b) components by successive stepwise addition to the polymerization system. The used ratio of each component is optional. However, the ratio of (A) component : (B) component is preferably in the range of 1 : 0.1 - 50 in terms of mol ratio, but is most preferably in the range of 1 : 2 - 20. When (C) component is employed, the mol ratio of (A) component : (C) component is preferably in the range of 1 : 0.01 - 5 in terms of mol ratio, but is most preferably in the range of 1 : 0.1 - 2.

In these methods, each of the above components may be pure or appropriately diluted with diluting agents. Cited as such diluting agents are aromatic hydrocarbons such as benzene or toluene; saturated aliphatic hydrocarbons such as n-pentane, n-hexane, n-heptane, n-octane, n-dodecane, or liquid paraffin; alicyclic hydrocarbons such as cyclohexane or methylcyclohexane; and ethers such as diethyl ether or dibutyl ether.

Another catalyst employed in the present invention form a catalyst system composed of (a) organic aluminum compounds, (b) reaction products of magnesium compounds and titanium halides, and (c) Lewis bases. The above catalyst system incorporates, as the Lewis base of (c) component, aromatic carboxylic acid esters of alcohols having a secondary or tertiary carbon in a ratio of 0 ≤ (c)/(a) < 1/3(mol/mol).

Preferred organic aluminum compounds employed as component (a) include those represented by Formula RₐAlX₃₋ₐ (in the formula, R represents a hydrocarbon group; X represents a hydrogen atom, a halogen atom, or an alkoxy group; and a represents 0 < n ≤ 3). It is possible to list, as specific examples, trimethyl aluminum, triisopropyl aluminum, tri-n-butyl aluminum, triisobutyl aluminum, tri-n-hexyl aluminum, diethyl aluminum hydride, diisopropyl aluminum hydride, di-n-hexyl aluminum hydride, diethyl aluminum chloride, diisopropyl aluminum chloride, diisobutyl aluminum chloride, di-n-hexyl aluminum chloride, diethyl aluminum ethoxide, diisopropyl aluminum ethoxide, diisobutyl aluminum ethoxide, and d-n-hexyl aluminum ethoxide, as well as mixtures thereof.

Employed as catalyst components (b) composed of the reaction products of magnesium compounds and titanium halides are those which are synthesized employing various methods.
(1) Anhydrous magnesium halide is crushed together with a Lewis base and subsequently allowed to react with titanium halide.
(2) Anhydrous magnesium halide is crushed together with an 1 : 1 adduct complex of the Lewis base of titanium halide.
(3) The hydrous salt of magnesium halide is burned and allowed to react with titanium halide.
(4) The reaction product of the Grignard reagent and alcohol is allowed to react with titanium halide.
(5) The reaction product of the Grignard reagent and silicon halide compound is treated with an ester, and allowed to react with titanium halide.
(6) Precipitates obtained by allowing a halogenated hydrocarbon compound to react with magnesium are treated with the Lewis base in an inert solvent and subsequently allowed to react with titanium halide.
(7) Precipitates obtained by allowing halogenated hydrocarbon to react with magnesium in the presence of a small amount of ethers in inert solvents are treated with a mixture of alcohol and the Lewis base, and subsequently allowed to react with titanium halide.

Compositions of the magnesium compounds employed herein are not particularly limited. However, the compounds represented by MgX₂, MgR₁X₂₋₁, or MgY₁X₂₋₁·αD (wherein R represents a hydrocarbon group, X represents a halogen atom, Y represents an alkoxy group, D represents a Lewis base, and α represents 0.1 ≤ 1 ≤ 2) are preferred.

Examples of titanium halides include titanium tetrachloride, titanium tetrabromide, titanium tetraiodide, titanium trichloride, and titanium dichloride, as well as oxydihalogenotitanium such as titanium oxydichloride. Of these, titanium tetrachloride is particularly preferred.

The structure of the aromatic carboxylic acid esters employed as catalyst component (c) is as follows: 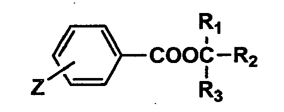 wherein R₁ represents an alkyl group, Z represents a hydrogen atom, an alkyl group, an alkoxy group, or an amino group. Specific examples include isopropyl benzoate, sec-butyl benzoate, cyclohexyl benzoate, tert-butyl benzoate, isopropyl p-anisate, sec-butyl p-anisate, cyclohexyl p-anisate, tert-butyl p-anisate, isopropyl o-anisate, sec-butyl o-anisate, cyclohexyl o-anisate, tert-butyl o-anisate, isopropyl p-toluylate, sec-butyl p-toluylate, cyclohexyl p-toluylate, tert-butyl p-toluylate, isopropyl N,N-dimethyl-p-aminobenzoate, sec-butyl N,N-dimethyl-p-aminobenzoate, cyclohexyl N,N-dimethyl-p-aminobenzoate, and butyl N,N-dimethyl-p-aminobenzoate. These esters of alcohols having a secondary or tertiary carbon enable catalytic activity to-be maintained at a very high level compared to the esters of alcohols having a primary carbon. These catalyst components (a) - (c) are employed in the following manner:
(1) Organic aluminum of component (a) is blended with carboxylic acid ester and subsequently brought into contact with unit catalyst of component (b).
(2) Three components (a), (b), and (c) are simultaneously brought into contact with each other.
(3) Components (a) and (b) are blended, and subsequently component (c) is added.

As noted above, several methods are employed. Catalyst component (c) is employed commonly at less than 1/3 in terms of mol of the organic aluminum compounds of component (a), but is preferably at most 1/10. Further, when solvents are employed, the organic aluminum compounds of component (a) are employed at a concentration of 0.5 - 100 mmol/L.

The olefin polymerization reaction employing the catalyst system according to the present invention is performed in the same manner as the olefin polymerization reaction employing Ziegler-type catalysts. Namely, the reaction is performed in a gas phase, in inert solvents, or in liquidized monomers under a suspension or in a solution state while oxygen and water are completely removed. Employed as solvents or dispersing agents may be inert hydrocarbons having about 3 - about 20 carbon atoms, the examples of which include propane, pentane, hexane, heptane, cyclohexane, methylcyclohexane, benzene, and toluene.

The other usable catalyst systems in the present invention include A) titanium-incorporating solid catalyst components prepared via the contact reaction of (a) the organic magnesium compounds represented by Formula R₁MgOR₂ (wherein R₁ and R₂ each represents an aliphatic or aromatic hydrocarbon group, and R₁ and R₂ may be the same or different), (b) the halides represented by Formula R₃₍ₙ₋ₘ₎MXₘ (wherein M represents an element in Groups 3B, 4B, or 5B of the periodic table, R₃ represents an aliphatic or aromatic hydrocarbon group, and X represents a halogen atom), and (c) titanium halide, as well as B) organic aluminum compounds.

The titanium-incorporating catalyst components employed in the present invention are prepared by contacting at least (a) the organic magnesium compound represented by Formula R₁MgOR₂ (wherein R₁ and R₂ each represents an aliphatic or aromatic hydrocarbon group, and R₁ and R₂ may be the same or different), (b) the halide represented by Formula R₃₍ₙ₋ₘ₎MXₘ (wherein M represents an element in Group 3B, 4B, or 5B of the periodic table, R₃ represents an aliphatic or aromatic hydrocarbon group, and X represents a halogen atom, and n represent the valence of M and m represents an integer of at least 1, and (c) titanium chloride.

Each component employed in the present invention will now be described.

### (a) Organic Magnesium Compounds

Organic magnesium compounds employed as a component of the catalyst of the present invention are represented by Formula R₁MgOR₂ (wherein R₁ and R₂ each represents an aliphatic or aromatic hydrocarbon group, and R₁ and R₂ may be the same or different), and are preferably soluble in aliphatic or aromatic hydrocarbon solvents. It is possible to produce the above organic magnesium compounds employing several methods as described on pages 192 - 196 of Methoden Der Organischen Chemie Band XIII/2a, 1973 (Houben-Weyl). One example of the synthesis method of the above organic magnesium compounds will be listed. As shown in the following formula, a nearly quantitative amount of the organic magnesium compound is prepared by contacting magnesium metal, alcohol, and halogenated hydrocarbon in a cyclohexane solvent.

2Mg + (CH₃)₂ CHOH + 2CH₃(CH₂)₃Cl → CH₃ (CH₂) MgOCH (CH₃)₂

Specifically, listed as R₁ and R₂ are an alkyl group having 1 - 20 carbon atoms, a cycloalkyl group, an aryl group, and an aralkyl group. Particularly preferred alkyl groups include ethyl, n-propyl, i-propyl, n-butyl, t-butyl, decyl, and dodecyl, while an aryl group such as phenyl and an aralkyl group such as benzyl are preferred. R₁ and R₂ may be the same or different.

### (b) Halides

Halides employed as a component of the catalysts of the present invention are represented by Formula R₃₍ₙ₋ₘ₎MXₘ (wherein M represents an element in Group 3B, 4B, or 5B of the periodic table, R₃ represents an aliphatic or aromatic hydrocarbon group, and X represents a halogen atom, while n represents the valance of M, and m represents an integer of at least 1). The elements in Group 3B, 4B, or 5B are defined based on the rule of the IUPAC Inorganic Chemical Nomenclature Committee of 1965. Listed as M are boron, aluminum, carbon, silicon, tin, and phosphor, while listed as R₃ are those exemplified in R₁ and R₂. Specific examples include boron halide compounds such as boron trichloride, boron tribromide, or boron triiodide; aluminum halide compounds such as aluminum chloride, aluminum bromide, aluminum iodide, diethyl aluminum chloride, or ethyl aluminum dichloride; halogenated hydrocarbons such as carbon tetrachloride, chloroform, chlorobenzene, benzyl chloride, or benzyl bromide; silicon halide compounds such as silicon tetrachloride, trichlorosilane, methyltrichlorosilane, trimethylchlorosilane, phenyltrichlotosilane, or diphenyldichlorosilane; tin halide compounds such as tin tetrachloride, tin tetrabromide, tin tetraiodide, trimethylchlorostannum, dimethylchlorostannum, methyltrichlorostannum, tributylchlorostannum, or phenyltrichlorostannum, as well as chlorides and bromides of nitrogen and phosphor. Of these, particularly preferred are aluminum chloride compounds such as aluminum chloride or ethyl aluminum dichloride, as well as silicon chloride compounds such as silicon tetrachloride, phenyl trichlorosilane, phenyldichlorosilane, or methyltrichlorosilane. Further, it is possible to prepare solid catalyst components by appropriately combining at least two of these halides.

Further, the added amount is at most a factor of 3 with respect to mol of the organic magnesium compound, but is more preferable at most the same mol.

### (c) Titanium Halides

Examples of titanium halides employed in the catalyst component of the present invention include titanium tetrachloride, titanium tetrabromide, titanium tetraiodide, titanium trichloride, and titanium dichloride, as well as oxydihalogenotitanium such as titanium oxydihalide. Of these, titanium tetrachloride is particularly preferred.

In the present invention, the above three components (a), (b), and (c) are brought into contact in the appropriate order, whereby a titanium-incorporating solid catalyst component is prepared. Several methods may be employed. For example, (a) an organic magnesium compound and (b) halides undergo contact reaction followed by treatment employing titanium halides.

In these methods, organic magnesium compounds, halides, and titanium halides may be employed as they are or upon being appropriately diluted with diluting agents. Cited as such diluting agents are aromatic hydrocarbons such as benzene or toluene; saturated aliphatic hydrocarbons such as n-pentane, n-hexane, n-heptane, n-octane, n-dodecane, or liquid paraffin; alicyclic hydrocarbons such as cyclohexane or methylcyclohexane; and ethers such as diethyl ether or dibutyl ether.

The contact method of the titanium-incorporating solid catalysts will now be more specifically described.

Between about room temperature - about 100 °C, organic magnesium compounds and halides are brought into contact, and subsequently undergo reaction for several hours between 50 - 200 °C, but preferably between 80 - 150 °C. Subsequently, the resulting products are either naturally or vacuum dried to result in a powder. Subsequently, titanium halides are added and contact reaction is performed at 60 - 160 °C, but preferably at 80 - 150 °C for at least 0.1 hour, but preferably for 0.5 - 2 hours. The reaction products are sufficiently washed with hydrocarbon solvents. Employed as such hydrocarbon solvents may be aromatic hydrocarbons such as benzene or toluene, saturated aliphatic hydrocarbons such as n-pentane, n-hexane, n-heptane, n-octane, n-dodecane, and liquid paraffin, and alicyclic hydrocarbons such bad cyclohexane or methylcyclohexane.

Each component amount employed in these methods is chosen from the following range. The amount of halides is commonly 0.1 - 20 mol per mol of the organic magnesium compounds, but is preferably 0.5 - 5 mol, while the amount of titanium halides is commonly 0.1 - 50 mo, but is preferably 1 - 30 mol.

By making the organic magnesium compounds, halides, and titanium halides undergo a contact reaction, it is possible to prepare pale brown or pale yellowish brown solids incorporating titanium in an amount of 0.1 - 30% by weight, but preferably 0.1 - 10% by weight. These are washed with the above hydrocarbon solvents and are employed to polymerize oleffins.

Olefin polymerization is conducted employing the catalyst system in which the above titanium-incorporating solid catalyst component is combined with the aluminum compounds. Employed as such organic aluminum compounds are, for example, those represented by Formula AlR⁴kX¹₃₋ₓ (wherein R⁴ represents an alkyl stoup having 1 - 8 carbon atoms, and when at least two R⁴ exist, each of them may be different, while k represents an integer of 1 - 3, and X¹ represents a halogen atom). Particularly preferred are trialkyl aluminum such as trimethyl aluminum, tripropyl aluminum, triisobutyl aluminum, trihexyl aluminum, or trioctyl aluminum. The used amount of such organic aluminum compounds is selected from the range of 1 - 20 mol per gram atom of Ti.

Another usable catalyst in the present invention is a catalyst system which is composed of A) a titanium-incorporating solid catalyst component which is prepared by contacting (a) at least one of silanol compounds or polysilanol compounds, (b) at least one of the compounds represented by formula Mg(OR)ₙX₂₋ₙ (wherein R represents a hydrocarbon group having 1 - 20 carbon atoms, X represent a halogen atom, and 0 < n ≤ 2), (c) at least one of the titanium halides, and (d) at least one of electron-donating compounds selected from amine carboxylic acid amide, phosphine, phosphoric acid ester, phosphoric acid amide, ketone, and carboxylic acid ester under the relationship of 0 ≤ (d)/(b) < 0.2 (mol/mol), and B) organic aluminum compounds.

The titanium incorporating catalyst component employed in the present invention is prepared by contacting (a) silanol or polysilanol compounds, (b) the magnesium compounds represented by Formula Mg(OR)ₙX₂₋ₙ (wherein R, X, and n are as defined above), (c) titanium halides, and (d) electron-donating compounds under the relationship of 0 ≤ (d)/(b) < 0.2 (mol/mol).

Each component employed in the present invention will now be described.
(a) Silanol Compounds or Polysilanol Compounds
   Silanol compounds are represented by Formula R'ₘSi(OH)₄₋ₘ (wherein R' represents a hydrocarbon group, and m represents an integer of 1 - 3).
   It is possible to readily prepare silanol compounds by hydrolyzing the corresponding halogen compounds as shown in the following formula.

   C₆H₅SiCl + H₂O → C₆H₅SiOH + HCl

   Specifically, cited as R' are an alkyl group having at most 20 carbon atoms, a cycloalkyl group, a cycloalkenyl group, an aryl group, an aralkyl group, an alkaryl group, and a cycloaralkyl group. Particularly preferred are an alkyl group such as a methyl group, an ethyl group, a propyl group, a butyl group, an amyl group, a hexyl group, a heptyl group, an octyl group, or a decyl group; an aryl group such as a phenyl group; and an aralkyl group such as a benzyl group. Further, m may be 1, 2, or 3, while preferred are those in which m represents commonly 3, and m represents 2 while R' represents an aryl group.
   On the other hand, it is also possible to readily prepare polysilanol compounds by hydrolyzing the corresponding organic halosilane. For example, at least one of the organic trihalosilane and/or the organic dihalosilane represented by Formula R'SiX₃ or R'₂SiX₂ (wherein R' represents a hydrocarbon group, while X represents a halogen atom) is allowed to react with water or an aqueous alkali solution in an amount, which is equal to or greater equivalent with respect to the halogen in the organic halosilane, in inert hydrocarbon solvents such as heptane, cyclohexane, benzene, or toluene at about -50 to about 100 °C but is preferably at about -50 to 20 °C. Subsequently, the resulting solution is washed with water until the effluent became neutral, and is then dried, whereby it is possible to prepare a polysilanol solution. During the above operation, it is possible to control the degree of polymerization of the polysilanol compounds by regulating the hydrolysis temperature and the alkali concentration. Polysilanol compounds may be separated from the above solution, while the solution may be employed without any additional treatment.
   Further, it is possible to readily prepare the targeted polysilanol compounds via heating, to at least 50 °C, at least one silanol compound represented by Formula R'₂Si(OH)₂ (wherein R' represents a hydrocarbon group) in the presence of alkalis, desirably in alcohol.
   The polysilanol compounds prepared as above are not identified due to the presence of various structures. For example, the case in which preparation is conducted employing organic halosilane as a raw material, based on the above method, will be described. When polysilanol organic dihalosilane, represented by Formula (R'Si)ₓ(OH)_{y}O_{z} (wherein R' represents a hydrocarbon group, while x, y, and z each represents a numerical value of x, y ≤ 2 and z ≤ 1), is hydrolyzed, each of the polysilanol compounds, represented by Formula HO(R'₂SiO)ₒH or (R'₂SiO)ₚ (wherein R' represents a hydrocarbon group, while o and p each represents a numerical value of at least 2) is prepared. However, when a mixture of organic trihalosilane and organic dihalosilane is hydrolyzed, cyclic and/or chain polysilanol compounds are derived in such a manner that polysilanol compounds represented by above formula mutually undergo dehydration condensation, whereby the resulting structures are not identified.
   However, the polysilanol compounds employed in the present invention are those incorporating a siloxane bond which is formed via condensation of silanol compounds represented by R'₂Si(OH)₂ or R'Si(OH)₃. The structure may be chained, cyclic, or a three-dimensional net, but in regard to the content of the hydroxyl group, employed are those which incorporate at least one hydroxyl group per molecule. It is also preferable that the content of the hydroxyl group in polysilanol compounds is 4 - 14 mmol/g.
   R' in the above formulas of polysilanol compounds, organic trihalosilane, organic dihalosilane, and silanol compounds includes an alkyl group having at most 20 carbon atoms, a cycloalkyl group, a cycloalkenyl group, an aryl group, an aralkyl group, an alkaryl group, and a cycloaralkyl group. Particularly preferred are alkyl groups such as a methyl group, an ethyl group, a propyl group, a butyl group, an amyl group, a hexyl group, a heptyl group, an octyl group, or a decyl group, aryl groups such as a phenyl group, and aralkyl groups such as benzyl group. Specifically, when polysilanol compounds are produced employing the organic dihalosilane represented by R'₂SiX₂ and the silanol raw materials represented by R'₂Si(OH)₂, it is preferable that R' is an alkyl group.
   It is not always necessary to employ the pure polysilanol compounds described above, and a mixture of at least two of them may be acceptable. However, it is desirous that during reaction with the Grignard agent, the above polysilanol compounds are employed which are freed from moisture and oxygen via dehydration and degassing. Further, in the present invention, it is possible to employ a mixture of silanol and polysilanol compounds.
(b) Magnesium Compounds
   Magnesium compounds are represented by Formula Mg(OR)ₙX₄₋ₙ (wherein R represents a hydrocarbon group having 1 - 20 carbon atoms, and X represents a halogen atom, while n represents a numerical value of 0 < n ≤ 2). Specific examples of R include an alkyl group, an aryl group and an aralkyl group, each of which has at most 20 carbon atoms. Of these, particularly preferred are alkyl groups such as a methyl group, an ethyl group, a propyl group, a butyl group, an amyl group, or a hexyl group; aryl groups such as a phenyl group; and aralkyl groups such as a benzyl group. Listed as X are chlorine, bromine, and iodine. It is possible to readily synthesize the above compounds employing the Grignard compound and the corresponding alcohol.

   R"MgCl + ROH → ROMgCl + R"H

   Further, it is possible to synthesize them employing metal Mg and alcohol based on common methods known in the art.

   Mg + 2ROH → Mg(OR)₂ + H₂

   In the following, the magnesium compounds represented by the above formula are simply called "magnesium compounds."
(c) Titanium Halides
   Examples of titanium halides include titanium tetrachloride, titanium tetrabromide, titanium tetraiodide, titanium trichloride, and titanium dichloride, as well as titanium oxydihalide such as titanium oxydichloride in which titanium tetrachloride is particularly preferred.
(d) Electron-Donating Compounds
   It is possible to employ nitrogen-incorporating compounds selected from amines and carboxylic acid amides, phosphorous incorporating compounds selected from phosphine, phosphoric acid esters, and phosphoric acid amides, and oxygen incorporating compounds selected from ketones and carboxylic acid esters. In the carboxylic acid esters as described herein, the hydrocarbon group of the carboxylic acid residues may have a substituent such as an amino group or an alkoxy group. Such examples include amino acid esters.

Specific examples of electron-donating compounds include nitrogen incorporating compounds such as tetramethylethylenediamine, tetraethylethylenediamine, or acetamide; phosphorous incorporating compounds such as trimethyl phosphate, tributyl phosphate, triphenylphosphine, triphenyl phosphite, trimethyl phosphine oxide, triphenyl phosphine oxide, toris-nonylphenyl phosphite, or hexamethyl phosphoric acid triamide; and oxygen incorporating compounds such as methyl benzoate, ethyl benzoate, propyl benzoate, butyl benzoate, phenyl benzoate, methyl p-methoxybenzoate, ethyl p-methoxybenzoate, propyl p-methoxybenzoate, butyl m-methoxybenzoate, phenyl o-methoxybenzoate, methyl p-ethoxybenzoate, ethyl o-ethoxybenzoate, phenyl acetate, phenyl propionate, ethyl acrylate, methyl methacrylate, ethyl crotonate, propyl crotonate, butyl crotonate, ethyl cinnamate, propyl cinnamate, butyl cinnamate, dimethylglycine ethyl ester, dimethylglycine propyl ester, dimethylglycine butyl ester, diphenylglycine ethyl ester, diphenylglycine propyl ester, or diphenylglycine butyl ester, ethyl p-dimethylaminobenzoate. Of these, particularly preferred are carboxylic acid esters.

Further, the added amount is preferably less than 1/5 with respect to mol of the magnesium compounds, but is more preferably at most 1/10.

In the present invention, three components of above (a), (b), (c), and (d) are brought into contact in the appropriate order, whereby a titanium-incorporating solid catalyst is prepared. For example:
A) A method in which, in the presence of electron-donating compounds, (a) silanol compounds or polysilanol compounds and (b) magnesium compounds undergo contact reaction and the resulting products are treated with (c) titanium halides,
B) a method in which (a) silanol compounds or polysilanol compounds and (b) magnesium compounds undergo contact reaction, and the resulting products are treated with added (d) electron-donating compounds and subsequently treated with (c) titanium halides,
C) a method in which (a) silanol compounds or polysilanol compounds, and (b) magnesium compounds undergo contact reaction, and the resulting products are treated with (c) titanium halides, and subsequently treated with (d) electron-donating compounds, and
D) a method in which (a) silanol compounds or polysilanol compounds and (b) magnesium compounds undergo contact reaction, and the resulting products are treated with compounds formed by blending (d) electron-donating compounds with (c) titanium halides.

In these methods, silanol compounds, polysilanol compounds, magnesium compounds, titanium halides, and electron-donating compounds need not be pure and may be employed after dilution with appropriate diluting agents, which include aromatic hydrocarbons such as benzene or toluene; saturated aliphatic hydrocarbons such as n-pentane, n-hexane, n-heptane, n-octane, n-dodecane, or liquid paraffin; alicyclic hydrocarbons such as cyclohexane or methylcyclohexane; and ethers such as diethyl ether or dibutyl ether.

More specifically, the contact method of the titanium-incorporating solid catalysts will now be described in cases of above A) - D) .
A) Either silanol compounds or polysilanol compounds, and magnesium compounds are added to electron-donating compounds at -50 to 100 °C, but preferably at less than room temperature, and subsequently, by increasing the temperature to 50 - 200 °C a reaction is performed for several hours. Thereafter, the reaction products are naturally or vacuum dried to result in a powder form, which is added to titanium halides. The resulting mixture is treated at 60 - 150 °C, but preferably at 80 - 130 °C, for at least 0.1 hour, but preferably for 0.5 - 1.0 hour. When the powder compound is treated with titanium halides, hydrocarbon solvents are added to the resulting treated composition to precipitate solids. Employed as hydrocarbon solvents are aromatic hydrocarbons such as benzene or toluene, saturated aliphatic hydrocarbons such as n-pentane, n-hexane, n-heptane, n-octane, n-dodecane, or liquid paraffin, and alicyclic hydrocarbons such as cyclohexane or methylcyclohexane.
B) Magnesium compounds are added to a silanol or polysilanol compound suspension at -50 to 100 °C but preferably at a temperature equal to or lower than room temperature, or in the reverse order, both are brought into contact. Subsequently, reaction is performed at 50 - 200 °C for several hours. After lowering to room temperature, electron-donating compounds are added and then heated to 60 - 200 °C, followed by a treatment for at least 0.1 hour. During the above operation, when toluene, xylene, or kerosene is employed in the electron-donating compounds as a diluting agent, the operation is advantageously conducted at the boiling point of those. After the addition of the electron-donating compounds, it is possible to treat, at the above temperature, the resulting products which are prepared via distilling out the diluting agents and drying. Subsequently, the resulting products are treated with titanium halides in the same manner as in above A).
C) In the same manner as above B), either silanol compounds or polysilanol compounds and magnesium compounds are brought into contact, and the resulting products are treated with titanium halides in the same manner as above A), followed by the treatment with the electron-donating compounds in the same manner as above B).
D) In the same manner as B), either silanol compounds or polysilanol compounds and magnesium compounds are brought into contact. The product obtained by mixing electron-donating compounds and titanium halides is added to the resulting products. The temperature is increased to 60 - 200 °C and the treatment is conducted for at least 0.1 hour. Each component amount employed in these methods is selected within the following range.

Hydroxyl groups in silanol compounds or polysilanol compounds/or groups in the magnesium compounds is commonly 0.1 - 10 (in terms of mol ratio), but is preferably 1 - 2; electron donating compounds/magnesium compounds is less then 0.2, but is preferably at most 0.1 (in terms of mol ratio); while titanium halides/magnesium compounds is 0.1 - 50, but is preferably 5 - 30 (in terms of mol ratio).

Thus, by performing a contact reaction of each component of either silanol compounds or polysilanol compounds, magnesium compounds, and electron-donating compounds selected from specified compounds, it is possible to prepare pale yellowish brown solids incorporating titanium in an amount of 0.1 - 10% by weight, but preferably 0.1 - 10% by weight. The resulting product is washed with the above hydrocarbon solvents and employed to polymerize olefins.

Olefin polymerization is performed employing a catalyst system composed of a combination of the above titanium-incorporating solid catalyst component and organic aluminum compounds. Employed as such organic aluminum compounds are, for example, those represented by Formula AlR'"₁X₃₋₁ (wherein R'" represents an alkyl group having 1 - 8 carbon atoms, and when at least two groups represented by R'" exist, they may be different, while 1 represents a numerical value of 1 - 3, and X represents a halogen atom). Of these, particularly preferred are trialkyl aluminum compounds such as trimethyl aluminum, tripropyl aluminum, triisobutyl aluminum, trihexyl aluminum, or trioctyl aluminum. The used amount of organic aluminum compounds is preferably 1 - 100 mol per Ti atom, but is more preferably 1 - 15 mol, but is most preferably 2 - 8 mol.

Further, other usable catalysts in the present invention include catalyst systems composed of A) a titanium-incorporating solid catalyst component prepared by contacting: (a) at least one of the silanol compounds, (b) at least one of the Grignard compounds, (c) at least one of the titanium halides, and (d) at least one of the electron-donating compounds selected from amine, acid amide, phosphine, phosphoric acid ester, phosphoric acid amide, ketone, and carboxylic acid ester under the condition of 0 ≤ (d)/(b) < 0.1 (mol/mol), as well as B) organic aluminum compounds.

Initially, described is each component of the titanium-containing solid catalysts according to the present invention, prepared by contacting: (a) at least one of the silanol compounds, (b) at least one of the Grignard compounds, (c) at least one of the titanium halides, and (d) at least one of the electron-donating compounds selected from amine, acid amide, phosphine, phosphoric acid ester, phosphoric acid amide, ketone, and carboxylic acid ester under the condition of 0 ≤ (d)/(b) < 0.1 (mol/mol).
(a) Silanol Compounds
   It is possible to represent the silanol compounds according to the present invention employing following Formula (I).

   Formula (I) RₙSi(OH)₄₋ₙ

   wherein R represents a hydrocarbon group, and n represents 1, 2, or 3.
   It is possible to readily synthesize silanol compounds via hydrolysis of the corresponding halides, for example, as shown by the following formula.

   C₆H₅SiCl + H₂O → C₆H₅SiOH + HCl

   Specific examples of R include an alkyl group, a cycloalkyl group, a cycloalkenyl group, an aryl group, an aralkyl group, an alkaryl group, a cycloalkyl group, each of which has at most 20 carbon atoms. Particularly preferred are an alkyl group such as a methyl group, an ethyl group, a propyl group, a butyl group, an amyl group, a hexyl group, a heptyl group, an octyl group, or a decyl group, an aryl group such as a phenyl group, and an aralkyl group such as benzyl group. Further, n may be 1, 2, or 3, while in terms of stability of silanol compounds, those in which n represents 2 or 3 are preferred.
(b). Grignard Compounds
   It is possible to represent the Grignard compounds according to the present invention via following Formula (II).

   Formula (II) R' MgX

   wherein R' represents a hydrocarbon group, and X represents a halogen atom.
   Specific examples of R' includes an alkyl group, an aryl group, and an aralkyl group, each of which has at most 20 carbon atoms. Particularly preferred are an alkyl group such as a methyl group, an ethyl group, a propyl group, a butyl group, an amyl group, or a hexyl group; an aryl group such as a phenyl group; and an aralkyl group such as a benzyl group, while listed as X are, for example chlorine, bromine, and iodine.
   These Grignard compounds are commonly employed in the form of an ether solution or an ether adduct. Examples of ethers include diethyl ether, dibutyl ether, dihexyl ether, and dioctyl ether.
(c) Titanium Halides
   Examples of titanium halides include titanium tetrachloride, titanium tetrabromide, titanium tetraiodide, titanium trichloride, and titanium dichloride, as well as titanium dioxyhalides such as titanium oxydichloride, of which titanium tetrachloride is particularly preferred.
(d) Electron-Donating Compounds
   Employed as electron-donating compounds may be nitrogen incorporating compounds selected from amine and acid amide, phosphorous incorporating compounds selected from phosphine, phosphoric acid ester, and phosphoric acid amide, and oxygen incorporating compounds selected from ketone and carboxylic acid ester. Specific examples include nitrogen incorporating compounds such as tetramethylethylenediamine, tetraethylethylenediamine, or acetamide; phosphorous incorporating compounds such as trimethyl phosphate, tributyl phosphate, triphenyl phosphine, triphenyl phosphite, trimethyl phosphine oxide, triphenyl phosphine oxide, tris-nonylphenyl phosphite, or hexamethyl phosphoric acid triamide; and oxygen incorporating compounds such as methyl benzoate, ethyl benzoate, propyl benzoate, butyl benzoate, phenyl benzoate, methyl p-methoxybenzoate, ethyl p-methoxybenzoate, propyl p-methoxybenzoate, butyl m-methoxybenzoate, phenyl o-methoxybenzoate, methyl p-ethoxybenzoate, ethyl o-ethoxybenzoate, phenyl acetate, phenyl propionate, ethyl acrylate, methyl methacrylate, ethyl crotonate, propyl crotonate, butyl crotonate, ethyl cinnamate, propyl cinnamate, butyl cinnamate, dimethylglycine ethyl ester, dimethylglycine propyl ester, dimethylglycine butyl ester, diphenylglycine ethyl ester, diphenylglycine propyl ester, diphenylglycine butyl ester, or ethyl p-dimethylaminobenzoate. Of these, phosphoric acid ester and carboxylic acid ester are particularly preferred.

Further, the added amount is preferably less than 1/10 of mol of the Grignard compounds, but is more preferably at most 1/20.

In the present invention, four components of above (a), (b), (c), and (d) are brought into contact in the appropriate order, whereby a titanium-incorporating solid catalyst is prepared.

It is possible to prepare the solid catalyst employing various methods such as:
Method A: In the presence of (d) electron-donating compounds, (a) silanol compounds and (b) Grignard compounds undergo contact reaction and the relation products are treated with (c) titanium halides,
Method B: (a) silanol compounds and (b) Grignard compounds undergo contact reaction and the reaction products are added and treated with (d) electron-donating compounds followed by a treatment with (c) titanium halides, and
Method C: (a) silanol compounds and (b) Grignard compounds undergo contact reaction and the reaction products are treated with (c) titanium halides followed by a treatment with (d) electron-donating compound.

In each of these methods, the silanol compounds, Grignard compounds, and electron-donating compounds may be pure or may be employed upon being diluted with appropriate diluting agents, examples of which include aromatic hydrocarbons such as benzene or toluene; saturated aliphatic hydrocarbons such as n-pentane, n-hexane, n-heptane, n-octane, n-dodecane, or liquid paraffin; alicyclic hydrocarbons such as cyclohexane or methylcyclohexane; and ethers such as diethyl ether or dibutyl ether.

Further, in the cases of above Methods A - C, the contact method of titanium-incorporating solid catalysts will now be specifically described.
Method A: Silanol compounds and Grignard compounds are added to electron-donating compounds at -50 to 100 °C, but preferably at equal to or less than room temperature. The resulting mixture is heated to 50 - 200 °C, preferably to 50 - 150 °C, but most preferably to 70 - 80 °C, and undergoes reaction for several hours. Subsequently, the resulting products are dried at normal or reduced pressure to form powders. Titanium halides are added to the resulting powders, and the resulting mixture is treated at 60 - 150 °C but preferably at 80 - 130 °C for at least 0.1 hour, but preferably for 0.5 - 1.0 hour. When the resulting powders are treated with titanium halides, hydrocarbon solvents are added to the treated products, whereby solids are precipitated. Employed as hydrocarbon solvents may, for example, be aromatic hydrocarbons such as benzene or toluene, saturated aliphatic hydrocarbons such as n-pentane, n-hexane, n-heptane, n-octane, n-dodecane, or liquid paraffin, and alicyclic hydrocarbons such as cyclohexane or methylcyclohexane.
Method B: Grignard compounds are added to silanol compounds at -50 to 100 °C, but preferably at equal to or less than room temperature, or in the alternate method, both are brought into contact. Subsequently a reaction is performed preferably at 50 - 200 °C, more preferably at 50 - 150 °C, but most preferably at 70 - 80 °C for several hours. After cooling the products to room temperature, electron-donating compounds are added, and the resulting mixture is heated to 60 - 200 °C and treated for an additional 0.1 hour. During the above operation, the use of, for example, toluene, xylene to the electron-donating compounds as a diluting agent is advantageous for the operation, since it is possible to perform the treatment at the boiling point. It is possible to treat, at the above temperature, a product prepared by distilled out diluting agents after adding electron-donating compounds, and then dried. Subsequently, the resulting products are treated with titanium halides in the same manner as above Method A.
Method C: In the same manner as above Method B, silanol compounds and Grignard compounds are brought into contact, and the resulting products are treated with titanium halides in the same manner as above Method A, followed by a treatment with electron-donating compounds in the same manner as above Method B.
   Each component amount employed in these methods is selected within the following range.

Hydroxyl groups of silanol compound/alkyl groups of Grignard compound is commonly 0.1 - 10, but preferably 1 - 2 (in terms of mol ratio).

Electron-donating compound/Grignard compound is commonly less than 0.1, but preferably at most 0.05 (in terms of mol ratio) .

The titanium halide/Grignard compound is commonly 0.1 - 50, but is preferably 1 - 20 (in terms of mol ratio).

Each component of the silanol compounds, the Grignard compounds, and the electron-donating compounds selected from the specified compounds undergoes contact reaction, whereby it is possible to prepare pale yellowish brown solids incorporating titanium in an amount of 1 - 20% by weight, but preferably in an amount of 1 - 10% by weight.

Polymerization of olefins is performed employing a catalyst system composed of a combination of the above titanium incorporation solid catalyst component and organic aluminum compounds. Preferred as such organic aluminum compounds are, for example, those represented by following Formula (III).

Formula (III) AlR"ₘX₃₋ₘ

In above Formula (III), R" represents an alkyl group having 1 - 8 carbon atoms and when at least two R" exist, they may be different, while m represents an integer of 1 - 3, and X represents a halogen atom.

Particularly preferred examples include trialkyl aluminum such as trimethyl aluminum, tripropyl aluminum, triisobutyl aluminum, trihexyl aluminum, or trioctyl aluminum.

The used amount of organic aluminum compounds is commonly 1 - 100 mol per Ti atom, is preferably 1 - 15 mol, but is more preferably 2 - 8 mol.

In the present invention, polymerization or copolymerization may be performed employing various polymerization methods such as solution polymerization or slurry polymerization in the presence of inert hydrocarbon solvents, or vapor phase polymerization in the absence of solvents. Further, polymerization may also be performed employing a continuous system or a batch system. Still further, if desired, it is possible to incorporate third components known in the art.

Listed as cyclic olefins constituting polymers are the cyclic olefins represented by following Formula (1) or (2). 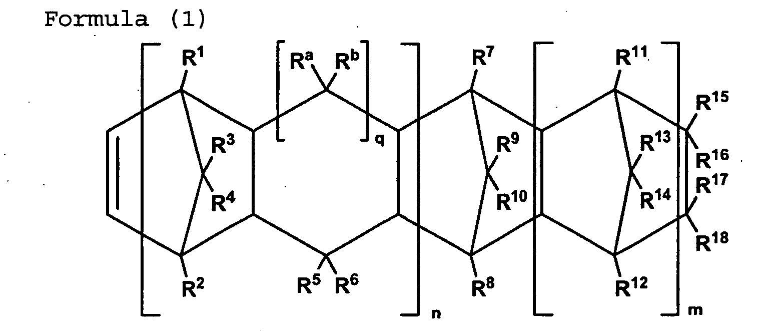 wherein n represents 0 or 1, and m represents 0 or a positive integer, while k represents 0 or 1. When k represents 1, the ring represented by k becomes a 6-membered ring, while when k is 0, the ring becomes a 5-membered ring.

R¹ - R¹⁸ as well as Rₐ and R_{b} each independently represents a hydrogen atom, a halogen atom, or a hydrocarbon group. Herein, the halogen atoms include a fluorine atom, a chlorine atom, a bromine atom, or a iodine atom.

Further, commonly listed as such hydrocarbons are an alkyl group having 1 - 20 carbon atoms, a halogenated alkyl group having 1 - 20 carbon atoms, a cycloalkyl group having 1 - 15 carbon atoms, and an aromatic hydrocarbon group. Specific examples of the above alkyl group include a methyl group, an ethyl group, a propyl group, an isopropyl group, an amyl group, a hexyl group, an octyl group, a decyl group, a dodecyl group, and an octadecyl group. These alkyl groups may be substituted with a halogen atom.

The above cycloalkyl group includes a cyclohexyl group, while the above aromatic hydrocarbon group includes a phenyl group and a naphthyl group. Further, in above Formula (1), R¹⁵ and R¹⁶, R¹⁷ and R¹⁸, R¹⁵ and R¹⁷, R¹⁶ and R¹⁸, R¹⁵ and R¹⁸, or R¹⁶ and R¹⁷ each may bond (being mutually collaborated) to form a single ring or a polycyclic ring, and in addition, the single ring or polycyclic ring, formed as above, may incorporate double bonds. Specific examples of the single ring or polycyclic ring follow.

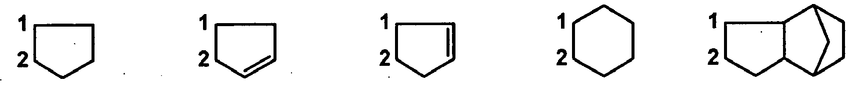

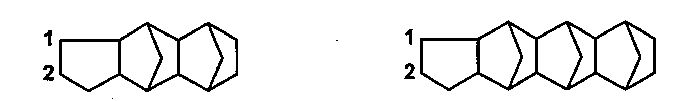

In the above examples, each of the carbon atoms numbered by 1 or 2 represents a carbon atom which bonds R¹⁵ (R¹⁶), or R¹⁷ (R¹⁸) in above Formula (1).

Further, R¹⁵ and R¹⁶ or R¹⁷ and R¹⁸ may bond to form an alkylidene group. Such alkylidene groups are commonly those having 2 - 20 carbon atoms. Specific examples of such alkylidene groups include an ethylidene group, a propylidene group, and an isopropylidene group. 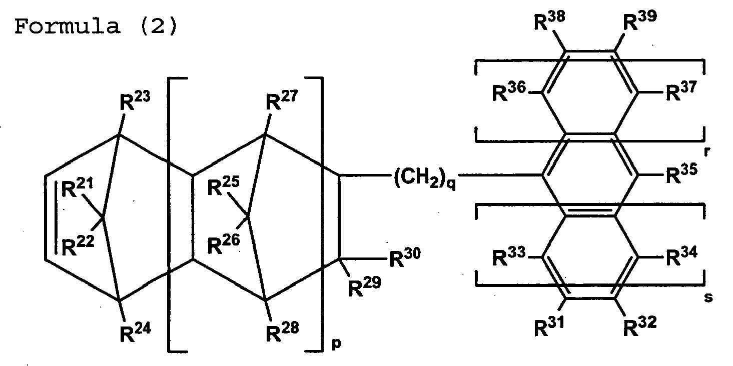 wherein p and q each independently represents 0 or a positive integer, and r and s each independently represents 0, 1, or 2, while R²¹ - R³⁹ each independently represents a hydrogen atom, a halogen atom, or an alkoxy group.

The above halogen atom is as defined in above Formula (1). Further, commonly cited as the hydrocarbon groups are an alkyl group having 1 - 20 carbon atoms, a cycloalkyl group having 3 - 15 carbon atoms, and an aromatic hydrocarbon group. Specific examples of the alkyl groups include a methyl group, an ethyl stoup, a propyl group, an isopropyl group, an amyl group, a hexyl group, an octyl group, a decyl group, a dodecyl group, and an octadecyl group. These alkyl group may be substituted with a halogen atom.

Cited as the cycloalkyl group is a cyclohexyl group, while cited as the aromatic hydrocarbon group are an aryl group and an aralkyl group, specific examples of which include a phenyl group, a tolyl group, a naphthyl group, a benzyl group, and a phenylethyl group.

Cited as the alkoxy group are a methoxy group, an ethoxy group, and a proxy group. The carbon atom which bonds to R²⁰ and R³⁰, the carbon atom which bonds to R₃₃ bonds, or the carbon atom which bonds to R₃₁ may be combined directly or via an alkylene group having 1 - 3 carbon atoms. Namely, when the above two carbon atoms are combined via an alkylene group, R²⁹ and R³³ or R³⁰ and R³¹ are combined to form any of the alkylene groups of a methylene group (-CH₂-), an ethylene group (-CH₂CH₂-), or a propylene group (-CH₂CH₂CH₂-).

Furthermore, when both r and s represent 0, the following aromatic rings, which are formed via R³⁵ and R³² are cited. 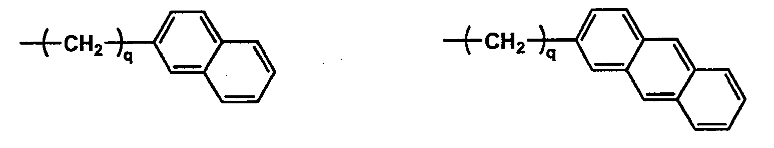 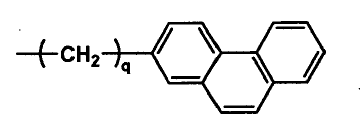 wherein q is as defined in Formula (2). Specific examples of cyclic olefins represented by above Formula (1) or (2) include bicyclo-2-heptane derivatives (bicyclohepto-2-ene derivatives), tricyclo-3-decene derivatives, tricyclo-3-undecene derivatives, tetracyclo-3-dodecene derivatives, pentacyclo-4-pentadecene derivatives, pentacyclopentadecadiene derivatives, pentacyclo-3-pentadecene derivatives, pentacyclo-3-héxadecene derivatives, pentacyclo-4-hexadecene derivatives, hexacyclo-4-heptadecene derivatives, heptacyclo-5-eicocene derivatives, heptacyclo-4-eicocene derivatives, heptacyclo-5-heneicocene derivatives, octacyclo-5-dococene derivatives, nonacyclo-5-pentacocene derivatives, nonacylo-6-hexacocene derivatives, cyclopentadiene-acenaphthylene adducts, 1,4-methano-1,4,4a, 9a-tetrahydrofluorene derivatives, and 1,4-methano-1,4,4a,5,10,10a-hexahydroanthrathene derivatives.

More specific examples of the cyclic olefins represented by above Formula (1) or (2) will follow. Bicyclo[2.2.1]hepto-2-ene derivatives such as:

| | |
|---|---|
| 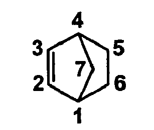 | bicyclo[2.2.1]hepto-2-ene (= norbornene) |
| 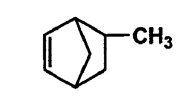 | 5,6-dimethylbicyclo[2.2.1]hepto-2-ene |
| 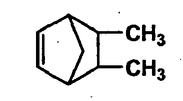 | 5,6-dimethylbicyclo[2.2.1]hepto-2-ene |
| 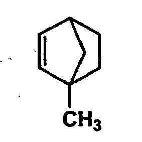 | 1-methylbicyclo[2.2.1]hepto-2-ene |
| 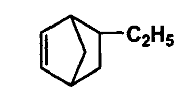 | 5-ethylbicyclo[2.2.1]hepto-2-ene |
| 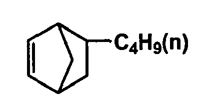 | 5-n-butylbicyclo[2.2.1]hepto-2-ene |
| 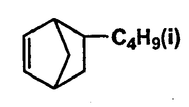 | 5-isobutylbicyclo[2.2.1]hepto-2-ene |
| 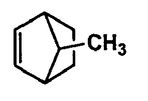 | 7-methylbicyclo[2.2.1]hepto-2-ene |

Tetracyclo[4.4.0.1^{2.5}.1^{7.10}]-3-dodecene derivatives such as:

| | |
|---|---|
| 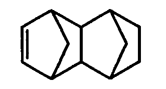 | tetracyclo [4.4.0.1^{2.5}.1^{7.10}]-3-dodecene |
| 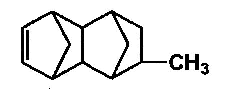 | 8-methyltetracyclo [4.4.0.1^{2.5}.1^{7.10}]-3-dodecene |
| 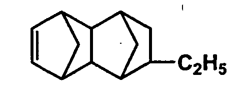 | 8-ethyltetracyclo [4.4.0.1^{2.5}.1^{7.10}]-3-dodecene |
| 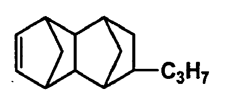 | 8-propyltetracyclo [4.4.0.1^{2.5}.1^{7.10}]-3-dodecene |
| 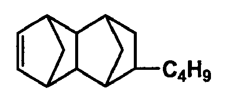 | 8-butyltetracyclo [4.4.0.1^{2.5}.1^{7.10}]-3-dodecene |
| 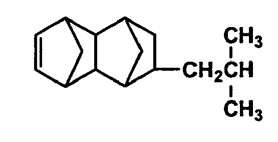 | 8-isobutyltetracyclo [4.4.0.1^{2.5}.1^{7.10}]-3-dodecene |
| 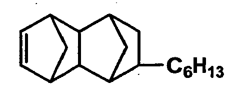 | 8-hexyltetracyclo [4.4.0.1^{2.5}.1^{7.10}]-3-dodecene |
| 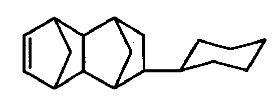 | 8-cyclohexyltetracyclo [4.4.0.1^{2.5}.1^{7.10}]-3-dodecene |
| 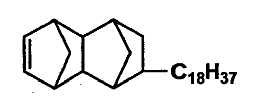 | 8-ethyltetracyclo [4.4.0.1^{2.5}.1^{7.10}]-3-dodecene |
| 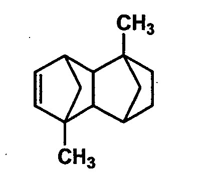 | 5,10-dimethyltetracyclo [4.4.0.1^{2.5}.1^{7.10}]-3-dodecene |
| 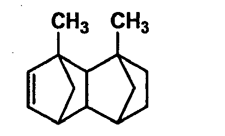 | 2,10-dimethyltetracyclo [4.4.0.1^{2.5}.1^{7.10}]-3-dodecene |
| 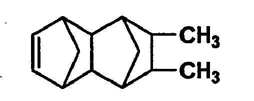 | 8,9-dimethyltetracyclo [4.4.0.1^{2.5}.1^{7.10}]-3-dodecene |
| 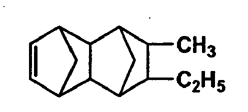 | 8-ethyl-9-methyltetracyclo [4.4.0.1^{2.5}.1^{7.10}]-3-dodecene |
| 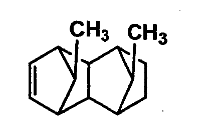 | 11,12-dimethylteytracyclo [4.4.0.1^{2.5}.1^{7.10}]-3-dodecene |
| 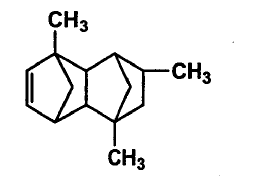 | 2,7,9-ethyltetracyclo [4.4.0.1^{2.5}.1^{7.10}]-3-dodecene |
| 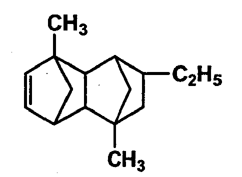 | 2,7-dimetyl-9-ethyltetracyclo [4.4.0.1^{2.5}.1^{7.10}]-3-dodecene |
| 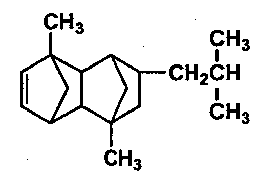 | 9-isobutyl-2,7-dimethyltetracyclo [4.4.0.1^{2.5}.1^{7.10}]-3-dodecene |
| 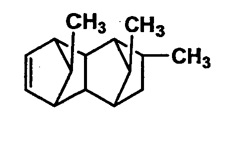 | 9,11,12-trimethyltetracyclo [4.4.0.1^{2.5}.1^{7.10}]-3-dodecene |
| 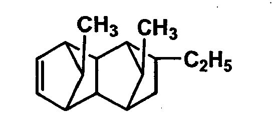 | 9-ethyl-11,12-dmethyltetracyclo [4.4.0.1^{2.5}.1^{7.10}]-3-dodecene |
| 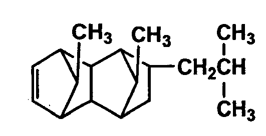 | 9-isobutyl-11,12-dimethylteytracyclo [4.4.0.1^{2.5}.1^{7.10}]-3-dodecene |
| 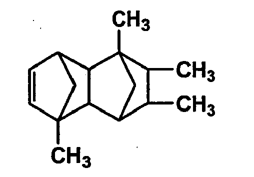 | 5,8,9,10-tetramethyltetracyclo [4.4.0.1^{2.5}.1^{7.10}]-3-dodecene |
| 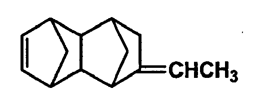 | 8-ethylidenetetracyclo [4.4.0.1^{2.5}.1^{7.10}]-3-dodecene |
| 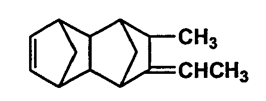 | 8-ethylidene-9-methyltetracyclo [4.4.0.1^{2.5}.1^{7.10}]-3-dodecene |
| 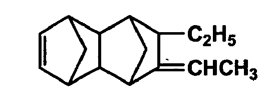 | 8-ethylidene-9-ethyltetracyclo [4.4.0.1^{2.5}.1^{7.10}]-3-dodecene |
| 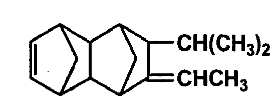 | 8-ethylidene-9-isopropyltetracyclo [4.4.0.1^{2.5}.1^{7.10}]-3-dodecene |
| 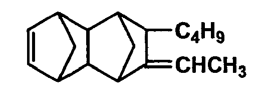 | 8-ethylidene-9-butyltetracyclo [4.4.0.1^{2.5}.1^{7.10}]-3-dodecene |
| 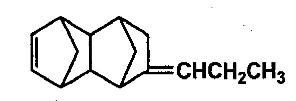 | 8-n-propylidenetetracyclo [4.4.0.1^{2.5}.1^{7.10}]-3-dodecene |
| 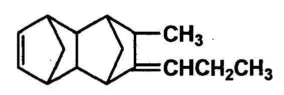 | 8-n-propylidenetetracyclo [4.4.0.1^{2.5}.1^{7.10}]-3-dodecene |
| 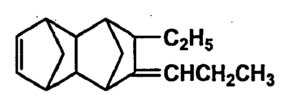 | 8-n-propylidene-9-ethyltetracyclo [4.4.0.1^{2.5}.1^{7.10}]-3-dodecene |
| 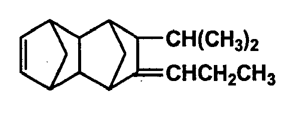 | 8-n-propylidene-9-isopropyltetracyclo [4.4.0.1^{2.5}.1⁷.¹⁰]-3-dodecene |
| 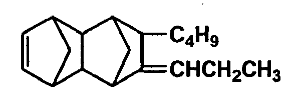 | 8-n-propylidene-9-butyltetracyclo [4.4.0.1^{2.5}.1^{7.10}]-3-dodecene |
| 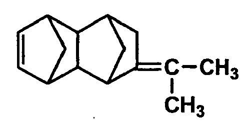 | 8-isopropylidenetetracyclo [4.4.0.1²⁻⁵.1⁷⁻¹⁰]-3-dodecene |
| 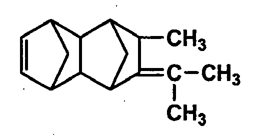 | 8-isopropylidene-9-methyltetracyclo [4.4.0.1^{2.5}.1^{7.10}]-3-dodecene |
| 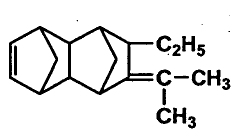 | 8-isopropylidene-9-ethyltetracyclo [4.4.0.1^{2.5}.1^{7.10}]-3-dodecene |
| 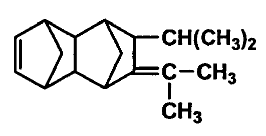 | 8-isopropylidene-9-isoprpyltetracyclo [4.4.0.1²⁻⁵.1⁷⁻¹⁰]-3-dodecene |
| 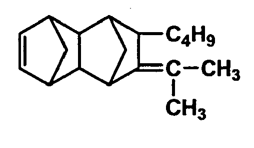 | 8-isopropylidene-9-butyltetracyclo [4.4.0.1²⁻⁵.1⁷⁻¹⁰]-3-dodecene |
| 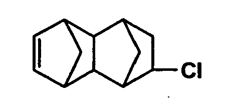 | 8-chlorotetracyclo [4.4.0.1^{2.5}.1^{7.10}]-3-dodecene |
| 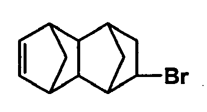 | 8-buromotetracyclo [4.4.0.1^{2.5}.1^{7.10}]-3-dodecene |
| 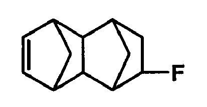 | 8-floorotetracyclo [4.4.0.1^{2.5}.1^{7.10}]-3-dodecene |
| 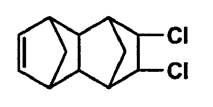 | 8,9-dichlorotetracyclo [4.4.0.1^{2.5}.1^{7.10}]-3-dodecene |

Hexacyclo [6.6.1.1^{3.6}.1^{10.13}.0^{2.7}.0^{9.14}]-4-heptadecene derivatives:

| | |
|---|---|
| 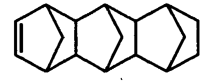 | hexacyclo [6.6.1.1^{3.6}.1^{10.13.}0^{2.7}.0^{9.14}]-4-heptadecene |
| 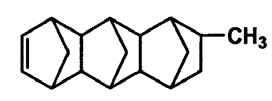 | 12-methylhexacyclo [6.6.1.1^{3.6}.1^{10.13}.0^{2.7}.0^{9.14}]-4-heptadecene |
| 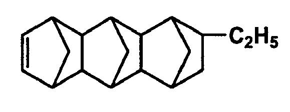 | 12-ethylhexacyclo [6.6.1.1^{3.6}.1^{10.13}.0^{2.7}.0^{9.14}]-4-heptadecene |
| 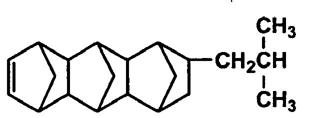 | 12-isobutylhexacyclo [6.6.1.1^{3.6}.1^{10.13}.0^{2.7}.0^{9.14}]-4-heptadecene |
| 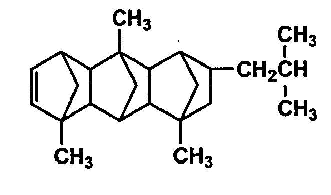 | 1,6,10-trimethyl-12-isobutylhexacyclo [6.6.1.1^{3.6}.1^{10.13}.0^{2.7}.0^{9.14}]-4-heptadecene |

Octacyclo [8.8.0.1^{2.9}.1^{4.7}.1^{11.18}.1^{13.16}.0^{3.8}.0^{12.17}]-5-dococene derivatives such as:

| | |
|---|---|
| 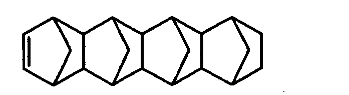 | octacyclo [8.8.0.1^{2.9}.1^{4.7}.1^{11.18}.1^{13.16}.0^{3.8}.0^{12.17}]-5-dococene |
| 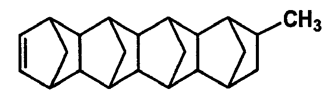 | 15-methyloctacyclo [8.8.0.1^{2.9}.1^{4.7}.1^{11.18}.1^{13.16}.0^{3.8}.0^{12.17}]-5-dococene |
| 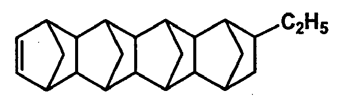 | 15-ethyloctacyclo [8.8.0.1^{2.9}.1^{4.7}.1^{11.18}.1^{13.16}.0^{3.8}.0^{12.17}] -5-dococene |

Pentacyclo[6.6.1.1^{3.6}.0^{2.7}.0^{9.14}] -4-hexadecene derivatives:

| | |
|---|---|
| 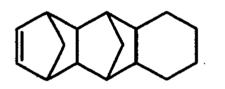 | pentacyclo. [6.6.1.1^{3.6}.0^{2.7}.0^{9.14}] -4-hexadecene |
| 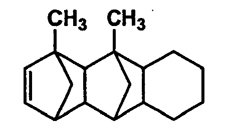 | 1,3-dimethylpentacyclo [6.6.1.1^{3.6}.0^{2.7}.0^{9.14}] -4-hexadecene |
| 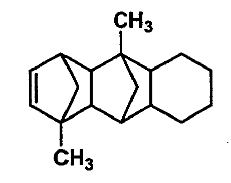 | 1,6-dimethylpentacyclo [6.6.1.1³.⁶.0².⁷.0⁹.¹⁴] -4-hexadecene |
| 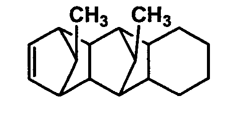 | 15,16-dimethylpentacyclo [6.6.1.1^{3.6}.0^{2.7}.0^{9.14}]-4-hexadecene |

Heptacyclo-5-eicocene derivatives or heptacyclo-5-heneicocne derivatives such as:

| | |
|---|---|
| 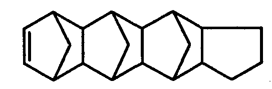 | heptacyclo [8.7.0.1^{2.9}.1^{4.7}.1^{11.17}.0^{3.8}.0^{12.16}]-5-eicocene |
| 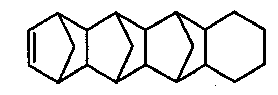 | heptacyclo [8.8.0.1^{2.9}.1^{4.7}.1^{11.17}.0^{3.8}.0^{12.16}]-5-eicocene |

Tricyclo[4.3.0.1^{2.5}]-3-decene derivatives such as:

| | |
|---|---|
| 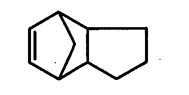 | tricyclo [4.3.0.1^{2.5}]-3-decene |
| 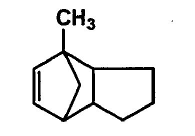 | 2-methyltricyclo [4.3.0.1^{2.5}] -3-decene |
| 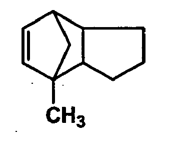 | 5-methyltricyclo [4.3.0.1^{2.5}] -3-decene |

Tricyclo [4.4.0.1^{2.5}]-3-undecene derivatives such as:

| | |
|---|---|
| 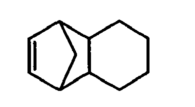 | tricyclo[4.4.0.1^{2.5}] -3-undecene |
| 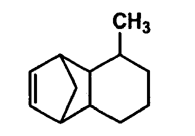 | 10-methyltricyclo [4.4 .0.1^{2.5}]-3-undecene |

Pentacyclo [6.5.1.1^{3.6}.0^{2.7}.0^{9.13}]-4-pentadecene derivatives:

| | |
|---|---|
| 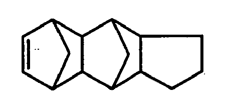 | pentacyclo [6.5.1.1³⁻⁶.0^{2.7}.0⁹⁻¹³]-4-pentadecene |
| 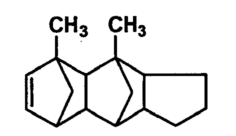 | 1,3-dimethylpentacyclo [6.5.1.1^{3.6}.0^{2.7}.0⁹⁻¹³]-4-pentadecene |
| 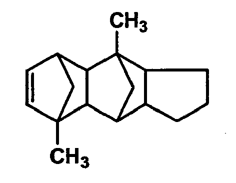 | 1,6-dimethylpentacyclo [6.5.1.1^{3.6}.0^{2.7}.0^{9.13}]-4-pentadecene |
| 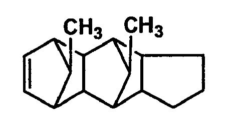 | 14,15-dimethylpentacyclo [6.5.1.1^{3.6}.0^{2.7}.0^{9.13}]-4-pentadecene |
| 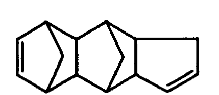 | Diene compounds such as pentacyclo [6.5.1.1^{3.6}.0^{2.7}.0^{9.13}] -4, 10-pentadecadiene |

Pentacyclo [7.4.0.1^{2.5}.1^{9.12}.0^{8.13}] -3-pentadecene derivatives such as;

| | |
|---|---|
| 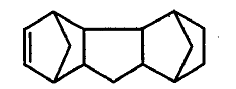 | pentacyclo [7.4.0.1^{2.5}.1^{9.12}.0^{8.13}]-3-pentadecene |
| 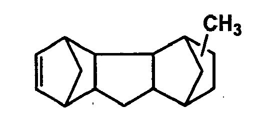 | methyl-substituted pentacyclo[7.4.0.1^{2.5}.1^{9.12}.0^{8.13}] -3-pentadecene |

Heptacyclo [8.7.0.1^{3.6},1^{10.17}.1^{12.17}.0^{2.7}.0^{11.16}]-4-eicocene derivatives such as:

| | |
|---|---|
| 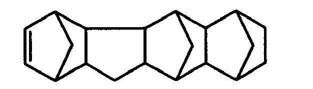 | pentacyclo [8.7.0.1^{3.6}.1^{10.17}.1^{12.15}.0^{2.7}.0^{11.16}]-4-eiconcene |
| 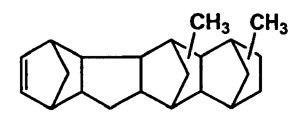 | dimethyl-substituted heptacyclopentacyclo [8.7.0.1^{3.6}.1^{10.17}.1^{12.15}.0^{2.7}.0^{11.16}]-4-eiconcene |

Nonacyclo [10.9.1.1^{4.7}.1^{13.20}.1^{15.18.}0^{3.8}.0^{2.10.}0^{12.21}.0^{14.19}]-5-pentacocene derivatives such as:

| | |
|---|---|
| 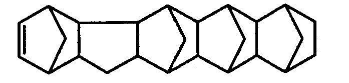 | nonacyclo [10.9.1.1^{4.7}.1^{13.20}.1^{15.18}.0^{3.8}.0^{2.10}.0^{12.21}.0^{14.19}] -5-pentacocene |
| 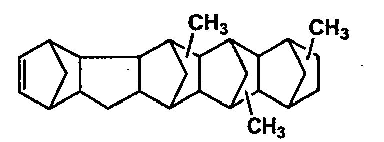 | trimethyl substituents nonacyclo [10.9.1.1^{4.7}.1^{13.20}.1^{15.18}.0^{3.8}.0^{2.10}.0^{12.21}.0^{14.19}] -5-pentacocene |

Pentacyclo[8.4.0.1^{2.5}.1^{9.12}.0^{8.13}]-3-hexadecene derivatives such as:

| | |
|---|---|
| 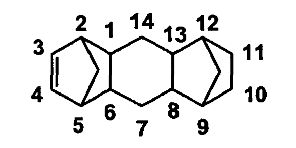 | pentacyclo [8.4.0.1^{2.5}.1^{9.12}.0^{8.13}]-3-hexadecene |
| 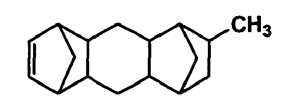 | 11-methyl-pentacyclo [8.4.0.1^{2.5}.1^{9.12}.0^{8.13}]-3-hexadecene |
| 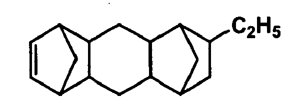 | 11-ethyl-pentacyclo [8.4.0.12.5.19.12.Oa.13]-3-hexadecene |
| 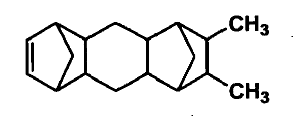 | 10,11-dimethyl-pentacyclo [8.4.0.1^{2.5}.1^{9.12}.0^{8.13}]-3-hexadecene |

Heptacyclo [8.8.0.1^{4.7}.1^{11.18}.1^{13.16}.0^{3.8}.0^{12.17}]-5-heneicocene derivatives such as;

| | |
|---|---|
| 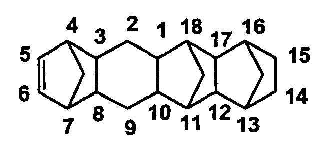 | heptacyclo [8.8.0.1^{4.7}.1^{11.18}.1^{13.16}0^{3.8}.0^{12.17}] -5-heneicocene |
| 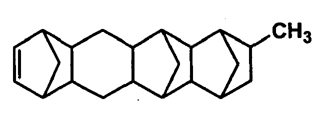 | 15-methylheptacyclo [8.8.0.1^{4.7}.1^{11.18}.1^{13.16}.0^{3.8}.0^{12.17}] -5-heneicocene |
| 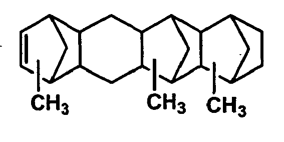 | trimethylheptacyclo [8.8.0.1^{4.7}.1^{11.18}.1^{13 .16}.0^{3.8}.0^{12.17}] -5-heneicocene |

Nonacyclo [10.10.1.1^{5.8}.1^{14.21}.1^{16.19}.0^{2.11}.0^{4.9}.0^{13.22}.0^{15.20}]-5-hexacocene derivative such as:

| | |
|---|---|
| 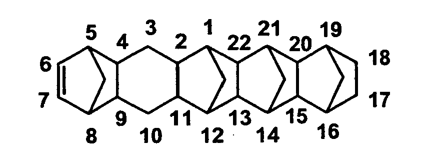 | nonacyclo [10.10.1.1^{5.8}.1^{14.21}.1^{16.19}.0^{2.11}.0^{4.9}.0^{13.22}.0^{15.20}] -5-hexacocene |

Further,

| | |
|---|---|
| 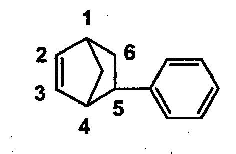 | 5-phenyl-bicyclo[2.2.1]hepto-2-ene |
| 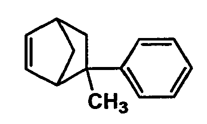 | 5-methyl-5-phenyl[2.2.1]hepto-2-ene |
| 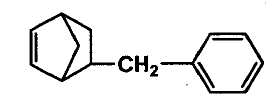 | 5-benzyl-bicyclo[2.2.1]hepto-2-ene |
| 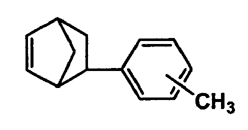 | 5-tolyl-bicyclo[2.2.1]hepto-2-ene |
| 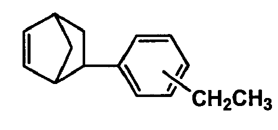 | 5-(ethylphenyl)-bicyclo[2.2.1]hepto-2-ene |
| 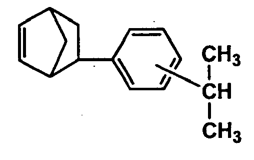 | 5- (isopropylphenyl;) -bicyclo [2.2.1]hepto-2-ene |
| 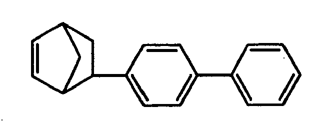 | 5-(biphenyl)-bicyclo[2.2.1]hepto-2-ene |
| 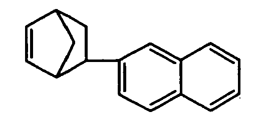 | 5-(b-naphthyl)-bicyclo[2.2.1]hepto-2-ene |
| 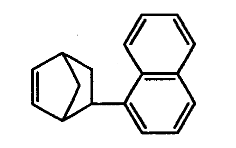 | 5-(a-naphthyl)-bicyclo[2.2.1]hepto-2-ene |
| 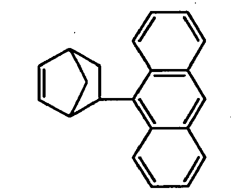 | 5-(anthracenyl)-bicyclo[2.2.1]hepto-2-ene |
| 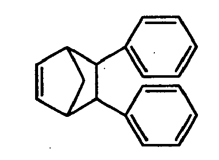 | 5,6-diphenyl-bicyclo[2.2.1]hepto-2-ene |
| 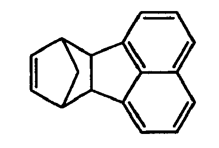 | cyclopentadiene-acenaphthylene adducts |
| 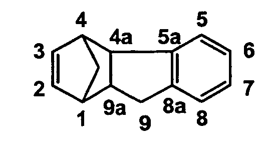 | 1,4-methano-1,4,4a,9a-tetrahydrofluorene |
| 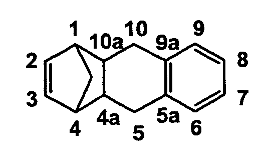 | 1,4-methano-1,4,4a,5,10,10a-hexahydroanthracene |
| 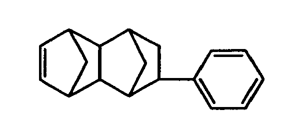 | 8-phenyl-tetracyclo [4.4.0.1^{2.5}.1^{7.10}]-3-dodecene |
| 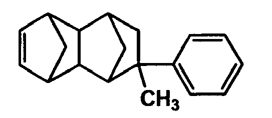 | 8-methyl-8-phenyl-tetracyclo [4.4.0.1^{2.5}.1^{7.10}]-3-dodecene |
| 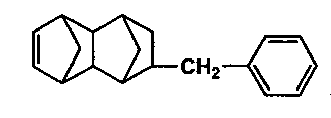 | 8-benzyl-tetracyclo [4.4.0.1^{2.5}.1^{7.10}]-3-dodecene |
| 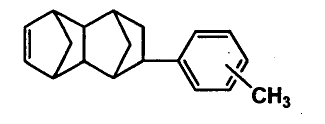 | 8-tolyl-tetracyclo [4.4.0.1^{2.5}.1^{7.10}]-3-dodecene |
| 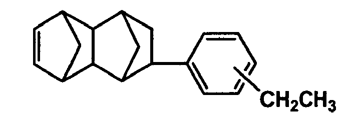 | 8-(ethylphenyl)-tetracylo [4.4.01^{2.5}.1^{7.10}]-3-dodecene |
| 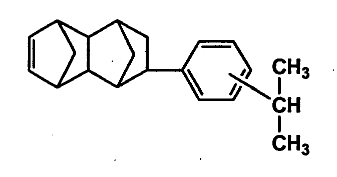 | 8-(isopropylphenyl)-tetracyclo [4.4.0.1^{2.5}.1^{7.10}] -3-dodecene |
| 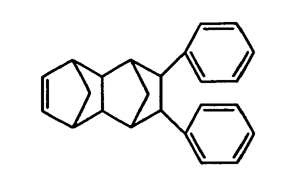 | 8,9-diphenyl-tetracyclo [4.4.0.1²⁻⁵.1^{7.10}]-3-dodecene |
| 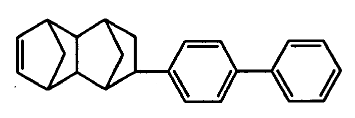 | 8-(biphenyl)-tetracyclo [4.4.0.1^{2.5}.1^{7.10}]-3-dodecene |
| 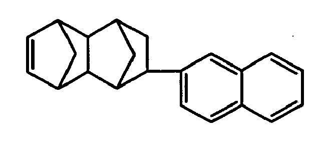 | 8-(b-naphthyl)-tetracyclo [4.4.0.1^{2.5}.1^{7.10}]-3-dodecene |
| 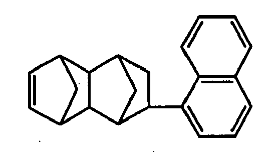 | 8-(a-naphthyl)-tetracyclo [4.4.0.1^{2.5}.1^{7.10}]-3-dodecene |
| 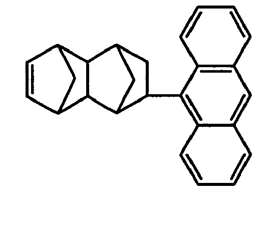 | 8-(anthracenyl)-tetracyclo [4 .4.0.1²⁻⁵.1⁷⁻¹⁰]-3-dodecene |
| 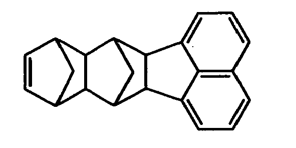 | Adducts prepared by further adding cyclopentadiene to (cyclopentadiene-acenaphthylene adduct) |
| 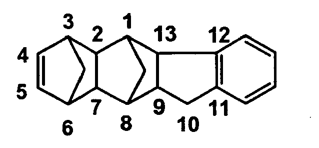 | 11,12-benzo-pentacyclo [6.5.1.1^{3.6}.0^{2.7}.0^{9.13}]-4-pentadecene |
| 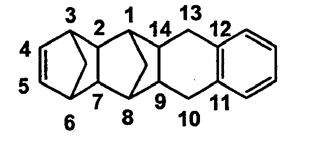 | 11,12-benzo-pentacyclo [6.6.1.1^{3.6}.0^{2.7}.0^{9.14}]-4-hexadecene |
| 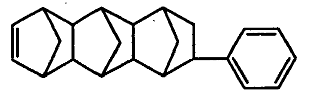 | 11-phenyl--hexacyclo [6.6.1.1^{3.6}.1^{10.13}.0^{2.7}.0^{9.14}]-4-heptadecene |
| 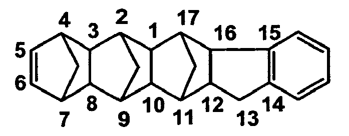 | 14,15-benzo-heptacyclo [8.7.0.1^{2.9}.1^{4.7}.1^{11.17}.0^{3.8}.0^{12.16}]-5-eicocene |

Examples of non-cyclic olefins which constitute polymers include straight chain α-olefins such as ethylene, propylene, 1-butene, 1-pentane, 1-hexane, 1-octane, 1-dodecene, 1-tetradecene, 1-hexadecene, 1-octadecene, or 1-eicocene, as well as branched α-olefins such as 4-methyl-1-pentane, 3-methyl-1-pentane, or 3-methyl-1-butane. Such straight chain or branched α-olefins may be substituted with a substituent, and they may be employed singly or in combinations of at least two types.

Cited as such substituents are various ones, and are not particularly limited. Representative substituents include each of an alkyl, aryl, alinino, acylamino, sulfonamide, alkylthio, arylthio, alkenyl, cycloalkyl, cycloalkenyl, alkynyl, heterocyclyl, alkoxy, aryloxy, heterocyclic oxy, siloxy, amino, alkylamino, imido, ureido, sulfamoylamino, alkoxycarbonylamino, aryloxycarbonylamino, alkoxycarbonyl, aryloxycarbonyl, heterocyclic thio, thioureido, hydroxyl and mercapto group, as well as a spiro compound residue, each of a sulfonyl, sulfinyl, sulfonyloxy, sulfamoyl, phosphoryl, carbamoyl, acyl, acyloxy, oxycarbonyl, carboxyl, cyano, nitro, halogen-substituted alkoxy, halogen-substituted aryloxy, pyrrolyl, and tetrazolyl group, and a halogen atom.

The above alkyl groups which have 1 - 32 carbon atoms are preferred and they may incorporate a straight or branched chain. Of the aryl groups, preferred is a phenyl group.

Cited as acylamino groups are an alkylcarbonylamino group and an arylcarbonylamino group; cited as sulfonamido groups are an alkylsulfonylamino group and an arylsulfonylamino group, while cited as alkyl components and aryl components in the alkylthio group and the arylthio group are the above alkyl and aryl groups.

Preferred as the alkenyl groups are those having 2 - 23 carbon atoms. Preferred as the cycloalkyl groups are those having 3 - 12 carbon atoms, particularly 5 - 7 carbon atoms. The alkenyl group may be in the form of either a straight or branched chain. Preferred as the cycloalkyl groups are those having 3 - 12 carbon atoms, particularly 5 - 7 carbon atoms.

Preferred as the ureido groups are an alkylureido group and an arylureido group, while preferred as the sulfamoylamino groups are an alkylsulfamoylamino group and an arylsulfamoylamino group. Preferred as the heterocyclyl groups are those which are 5- to 7-membered and specific examples include a 2-furyl group, a 2-thienyl group, a 2-pyrimidyl group, and a 2-benzothiazolyl group. Preferred as the saturated heterocyclyl groups are those which are 5- to 7-membered, and specific examples include a tetrahydropyranyl group and a tetrahydrothiopyranyl group. Preferred as the heterocyclic oxy groups are those which have a 5- to 7-membered heterocyclic ring, and examples include a 3,5,6-tetrahydropyranyl-2-oxy group and a 1-phenyltetrazole-5-oxy group. Preferred as heterocyclic oxy groups are those which are 5- to 7-membered and examples include a 2-pyridylthio group, a 2-benzothiazolylthio group, a 2,4-diphenoxy-1,3,5-triazole-6-thio group. The siloxy groups include a trimethylsiloxy group, a triethylsiloxy group, and a dimethylbutylsiloxy group; the imido groups include a succinimide group, a 3-heptadecyl succinimide, a phthalimide group, and a glutarimide group; the spiro compound residues include a spiro[3.3]heptane-1-yl group; and the bridge-incorporating hydrocarbon residues include a bicycle[2.2.1]heptane-1-yl group, a tricycle[3.3.1.1.3.7]decane-1-yl group, and a 7,7-dimethyl-bicyclo[2.2.1]heptane-1-yl group.

The sulfonyl groups include an alkylsulfonyl group, an arylsulfonyl group, a halogen-substituted alkylsulfonyl group, and a halogen-substituted arylsulfonyl group; the sulfinyl groups include an alkylsulfinyl group, and an arylsulfinyl group; the sulfonyl groups include an alkylsulfonyloxy group and an arylsulfonyloxy group; the sulfamoyl groups include an N,N-dialkylsulfamoyl group, an N,N-diarylsulfamoyl group, and an N-alkyl-N-arylsulfamoyl group; the phosphoryl groups include an alkoxyphosphoryl group, an aryloxyphosphoryl group, an alkylphosphoryl group, and an arylphosphoryl group; the carbamoyl groups include an N,N-dialkylcarbamoyl group, an N,N-diarylcarbamoyl group, and an N-alkyl-N-arylcarbamoyl group; the acyl groups include an alkylcarbonyl group and an arylcarbonyl group; the acyloxy groups include an alkylcarbonyloxy group; the oxycarbonyl groups include an alkoxycarbonyl group and an aryloxycarbonyl group; the halogen-substituted alkoxy groups include an α-halogen-substituted alkoxy group; the halogen-substituted aryloxy groups include a tetrafluoroaryloxy group and a pentafluoroaryloxy group; the pyrrolyl groups include a 1-pyrrolyl group; and tetrazolyl groups include a 1-tetrazolyl group.

Other than the above substituents, preferably employed is any of the trifluoromethyl, heptafluoro-i-propyl, or nonylfluoro-i-butyl group, as well as a tetrafluoroaryl group and a pentafluoroaryl group. Further, these substituents may be substituted with other substituents.

In terms of molding, the content of the non-cyclic monomers in the polymers of the present invention is preferably at least 20% by weight, is more preferably 25 - 90% by weight, but is still more preferably 30 - 85% by weight.

The glass transition temperature (Tg) of polymers of the present invention is preferably in the range of 80 - 250 °C, is more preferably in the range of 90 - 220 °C, but is most preferably in the range of 100 - 200 °C. Number average molecular weight (Mn), which is determined via gel permeation chromatography (GPC), is preferably in the range of 10,000-1,000,000 in terms of polystyrene conversion value, is more preferably in the range of 20,000 - 500,000, but is most preferably in the range of 50,000 - 300,000. When a molecular weight distribution is represented by a ratio (such as Mw/Mn), the resulting ratio is preferably at most 2.0, wherein Mw represents a weight average molecular weight which is determined in the same manner as above Mn employing GPC.

When Mw/Mn is excessively large, the mechanical strength and heat resistance of molded products are degraded. In order to improve mechanical strength, heat resistance, and molding properties, Mw/Mn is more preferably at most 1.8, but is most preferably at most 1.6.

It is possible to perform targeted polymerization in the temperature range of 90 - 300 °C. When the temperature is equal to or lower than 90 °C, polymerization activity is markedly degraded, while when the temperature exceeds 300 °C, it is not possible to prepare polymers, whereby it is preferable to perform polymerization commonly at 90 - 250 °C. The applied pressure is chosen within the range of 1 - 10 MPa. Further, it is possible to readily control the molecular weight of polymers due to the presence of hydrogen in the polymerizable range.

The olefin based resins of the present invention may be composed of a polymer synthesized from single component cyclic monomers. However, polymers are preferred which are synthesized employing cyclic monomers composed of at least two components or cyclic monomers and non-cyclic monomers. In regard to polymers, production may be performed employing at least 100 components, but in terms of production efficiency and polymerization stability, the mixture of monomers is preferably at most 10 components, but is more preferably at most 5 components.

Further, the prepared polymers may be crystalline or amorphous, but the crystalline polymers are more preferred.

It is possible to employ prior art methods to hydrogenate the carbon-carbon unsaturated bonds (including an aromatic ring) of the polymers (polyolefins) of the present invention. Of these methods, in order to increase the hydrogenation ratio and decrease a polymer chain breaking reaction which simultaneously occurs during the hydrogenation reaction, it is preferable to perform the hydrogenation reaction in organic solvents employing catalysts incorporating at least one metal selected from the group consisting of nickel, cobalt, iron, titanium, rhodium, palladium, platinum, ruthenium, and rhenium. Employed as hydrogenation catalysts may be either heterogeneous or homogenous catalysts. Heterogeneous catalysts such as metals or metal oxides may be employed without modification, or they may be employed while carried by suitable carriers. Examples of such carriers include active carbon, silica, alumina, calcium carbide, titania, magnesia, zirconia, diatomaceous earth, and silicon carbide. The carrier amount of the catalysts is commonly in the range of 0.01 - 80% by weight in terms of the metal content with respect to the total catalyst weight, but is preferably in the range of 0.05 - 60% by weight. Homogeneous catalysts include nickel, cobalt, and titanium; catalysts prepared by combining titanium or iron compounds with organic metal compounds (for example, organic aluminum compounds or organic lithium compounds), or organic metal complex catalysts incorporating rhodium, palladium, platinum, ruthenium, or rhenium. These hydrogenation catalysts may be employed individually or in combinations of at least two types. The used amount is commonly 0.01 - 100 parts by weight with respect to 100 parts by weight of the polymers, is preferably 0.05 - 50 parts by weight, but is more preferably 0.1 - 30 parts by weight.

The hydrogenation temperature is commonly in the range of 0 - 300 °C, is preferably in the range of room temperature - 250 °C, but is most preferably in the range of 50 - 200 °C.

Further, hydrogen pressure is commonly 0.1 - 30 MPa, is preferably 1 - 20 MPa, but is more preferably 2 - 15 MPa. In view of heat resistance and weather resistance, the hydrogenation ratio of the resulting hydrogenated products is commonly at least 90% of the carbon-carbon unsaturated bond of the main chain, when determined via 1H-NMR, is preferably at least 90%, but is still more preferably at least 99%. A decrease in the hydrogenation ratio degrades optical characteristics such as transmittance, birefringence, or thermal stability of the resulting polymers.

Solvents employed in the hydrogenation reaction of polymers of the present invention are not particularly limited as long as they dissolve the polymers of the present invention, and do not undergo hydrogenation. Examples include ethers such as tetrahydrofuran, diethyl ether, dibutyl ether, or dimethoxyethane; aromatic hydrocarbons such as benzene, toluene, xylene, or ethylbenzene; aliphatic hydrocarbons such as pentane, hexane, or heptane; alicyclic hydrocarbons such as cyclopentane, cyclohexane, methylcylohexane, dimethylcyclohexane, or decalin; and halogenated hydrocarbons such as methylene dichloride, dicycloethane, dichloroethylene, tetrachloroethane, chlorobenzene, or trichlorobenzene. These may be employed in combinations of at least two types via blending.

It is possible to produce hydrogenated polymers of the present invention in such a manner that a hydrogenated polymer is isolated from the polymer solution and thereafter re-dissolved in solvents. However, without carrying out isolation, it is possible to employ a method in which a hydrogenation reaction is performed via the addition of hydrogenation catalysts composed of the above organic metal complexes and organic aluminum compounds. After completion of the hydrogenation reaction, it is possible to remove the hydrogenation catalysts remained in the polymers employing prior art methods. Examples of the above methods include an adsorption method employing adsorbents, a method in which organic acid such as lactic acid, poor solvents, and water are added to a solution composed of good solvents, and the resulting system is removed via extraction at normal temperature or elevated temperature, and a method in which after carrying out, under an atmosphere of nitrogen or hydrogen gas, a contact treatment of a solution composed of good solvents or polymer slurries with basic compounds such as trimethylenediamine, aniline, pyridine, ethanediamide, or sodium hydroxide, or after simultaneously carrying out a contact treatment with acidic compounds such as acetic acid, citric acid, benzoic acid, or hydrochloric acid, removal is performed via washing.

Collecting methods of hydrogenated polymers from the hydrogenated polymer solution are not particularly limited, and prior art methods are usable. Examples of such methods include a method in which, while stirring, hydrogenated polymers are precipitated by pouring the reaction solution into poor solvents, and then collected employing a filtration method, a centrifugal separation method, a decantation method, a steam stripping method in which steam is introduced into a reaction solution, whereby hydrogenated polymers are precipitated, and a method in which solvents are directly removed from the reaction solution via heating.

When the hydrogenation method of the present invention is employed, it is possible to readily achieve a hydrogenation ratio of at least 90%, further to achieve a hydrogenation ratio of at least 95%, and particularly at least 99%. Hydrogenated polymers prepared as above are not readily oxidized and exhibit excellent targeted properties.

### (Preparation Method of Resinous Compositions)

The preparation method of resinous compositions employing the polymers according to the present invention will now be described.

It is preferable that resinous compositions undergo specified treatment prior to the molding process. During the stages of the treatment, additives such as plasticizers or antioxidants, which are commonly incorporated into resins, may be incorporated.

Cited as preferable preparation methods of resinous compositions is a kneading process or a process in which a mixture is dissolved in solvents, followed by removing the solvents and drying, whereby the targeted composition is prepared. Of these, more preferred is the kneading process. Employed as the kneading process is a process which is employed to blend common resins. Examples of kneaders include a roller, a banbury mixer, a biaxial kneader, and a kneader-ruder. To minimize oxidation of resins, devices capable of kneading in a sealed system are suitably employed, and it is more preferable to carry out the kneading process under inert gases such as nitrogen or argon.

### (Preparation Method of Optical Resin Lenses)

The preparation method of Optical Resin Lenses of the present invention will now be described.

The optical resin lenses of the present invention are prepared via an initial process in which a resinous composition (which may be composed of a single resin or a mixture of resins and additives) is prepared and a process in which the resulting resinous composition is molded.

The molded products of the resinous composition according to the present invention are prepared via molding the molding material composed of the above resinous composition. Molding methods are not particularly limited, but melt molding is preferred to prepare molding products which exhibit excellent characteristics such as low birefringence, high mechanical strength, and high dimensional stability. Examples of melt molding methods include a commercial press molding, commercial extrusion molding, and commercial injection molding. Of these, in view of molding properties and productivity, injection molding is preferred. Molding conditions are appropriately selected based on purposes of their use or molding methods. For example, in order to provide resins with appropriate fluidity during molding to minimize distortion of molded products, formation of silver streaks due to thermal decomposition of resins and effectively minimize yellowing of molded products, the temperature of a resinous composition (which may be composed of single resin or a mixture of resins and additives) during injection molding is preferably in the range of 150 - 400 °C, is more preferably in the range of 200 - 350 °C, but is most preferably in the range of 200 - 330 °C.

It is possible to employ the molded products according to the present invention in various shapes such as a sphere, rod, plate, cylinder, barrel, tube, fiber, film, or sheet. Further, the above products exhibit low birefringence, high transparency, high mechanical strength, high heat resistance, and low water absorption, and are employed as optical resin lenses of the present invention, but are also suitably employed for other optical parts.

### (Optical Resin Lenses)

The optical resin lenses of the present invention are prepared via the above preparation method and specific applied examples to optical parts are as follows.

As an optical lens or an optical prism, examples include image capturing lenses for cameras; lenses for microscopes, endoscopes, and telescopes; total light transmitting type lenses such as lenses for glasses; pick-up lenses of optical disks such as CD, CD-ROM, WORM (write-once-read-many optical disk), MO (rewritable optical disk; photo-electro-magnetic disk), MD (minidisk), DVD (digital video disk); laser scanning lenses such as the fθ lens of laser beam printers and lenses for sensors; as well as prism lenses for camera finder systems.

Cited as functions for optical disks are CD, CD-ROM, WORM (write-once-read-many optical disk), MO (rewritable optical disk; photo-electro-magnetic disk), MD (minidisk), and DVD (digital video disk). Listed as other optical uses are light leading plates such as a liquid crystal display, optical films such as a polarizing film, a retardation film, or a light diffusing film; light diffusing plates; photo cards; and liquid crystal display element substrates.

Of these, the optical resin lenses of the present invention are suitable for pick-up lenses required for low birefringence and laser scanning system lenses, and are most suitably employed for the pick-up lens of a pick-up device employing a blue laser beam.

During preparation of the resinous compositions and molding process of resinous compositions according to the present invention, if desired, it is possible to incorporate various additives (also called compounding agents). Additives are not particularly limited, but include stabilizers such as antioxidants, heat stabilizers, lightfastness enhancing agents, weatherfastness enhancing agents, UV absorbing agents, or near infrared absorbing agents; resinous quality improving agents such as plasticizers or lubricants; cloudiness minimizing agents such as soft polymers or alcoholic compounds; colorants such as dyes or pigments; antistatic agents; flame retardants; and fillers. These compounding agents may be employed individually or in combinations of at least two types. The compounding amount may be selected in the suitable range in which the described effects of the present invention are not adversely affected.

### (Plasticizers)

Plasticizers are not particularly limited, and may include phosphoric acid ester based plasticizers, phthalic acid ester based plasticizers, trimellitic acid ester based plasticizers, pyromellitic acid based plasticizers, glycolate based plasticizers, citric acid ester based plasticizers, and polyester based plasticizers.

Examples of phosphoric acid ester based plasticizers include triphenyl phosphate, tricresyl phosphate, cresyl diphenyl phosphate, octyl diphenyl phosphate, diphenyl vinyl phosphate, trioctyl phosphate, and tributyl phosphate; examples of phthalic acid ester based plasticizers include diethyl phthalate, dimethoxyethyl phthalate, dimethyl phthalate, dioctyl phthalate, dibutyl phthalate, di-2-ethylhexyl phthalate, butylbenzyl phthalate, diphenyl phthalate, and dicyclohexyl phthalate; examples of trimellitic acid based plasticizers include tributyl trimellitate, triphenyl trimellitate, trimethyl trimellitate; examples of pyromellitic acid ester based plasticizers include tetrabutyl pyromellitate, tetraphenyl pyromellitate, and tetraethyl pyrromelitate; examples of glycolate plasticizers include triacetin, tributin, ethyl phthalyl ethyl glycolate, methyl phthalyl glycolate, butyl phthalyl butyl glycolate; and examples of citric acid ester based plasticizers include trimethyl citrate, tri-n-butyl citrate, acetyl trimethyl citrate, acetyl tri-n-butyl citrate, and acetyl tri-n-(2-ethylhexyl) citrate.

### (Antioxidants)

The antioxidants employed in the present invention will now be described.

Cited as antioxidants are phenol based antioxidants, phosphorous based antioxidants, and sulfur based antioxidants. Of these, phenol based antioxidants, particularly alkyl-substituted phenol based antioxidants are preferred. By compounding these antioxidants, it is possible to minimize coloration and a decrease in strength of lenses due to oxidation degradation during molding without degrading transparency and heat resistance. These antioxidants may be employed individually or in combinations of at least two types. The compounding amount is selected in the appropriate range which does not adversely affect the targeted functions of the present invention, and is 0.001 - 5 parts by weight with respect to 100 parts by weight of the polymers according to the present invention, but is more preferably 0.01 - 1 part by weight.

Employed as such phenol based antioxidants are ones known in the art. Examples include acrylate based compounds such as 2-t-butyl-6-(3-t-butyl-2-hydroxy-5-methylbenzyl)-4-methylphenyl acrylate or 2,4-di-t-amyl-6-(1-(3,5-di-t-amyl-2-2hydroxyphenyl)ethyl)phenyl acrylate, described in JP-A Nos. 63-179953 and 1-168643; alkyl-substituted phenol based compounds such as octadecyl-3-(3,5-di-t-butyl-4-hydroxydiphenyl) propionate, 2,2'-methylene-bis(4-methyl-6-t-butylphenol), 1,1,3-tris(2-methyl-4-hydroxy-5-t-butylphenyl)butane, 1,3,5-trimethyl-2,4,6-tris(3,5-di-tpbutyl-4-hydroxybenzyl)benzene, tetrakis(methylene-3-(3',5-di-t-butyl-4'-hydroxyphenylpropionate))methane (namely, pentaerythritol-tetrakis3-(3,5-di-t-butyl-4-hydroxypgenyl propionate))), triethylene glycol bis(3-(3-t-butyl-4-hydroxy-5-methylphenyl)propionate); and triazine group incorporating phenol based compounds such as 6-(4-hydroxy-3,5-di-t-butylanilino)-2,4-bisoctylthio-1,3,5-triazine, 4-bisoctylthio-1,3,5-triazine, or 2-octylthio-4,6-bis-(3,5-dit-butyl-4-oxyanilino)-1,3,5-triazine.

Phosphorous based antioxidants are not particularly limited as long as they are commonly employed in resin industry. Examples include monophosphite based compounds such as triphenyl phosphite, diphenylisodecyl phosphite, phenyldiisodecyl phosphite, tris(nonylphenyl)phosphite, tris(dinonylphenyl)phosphite, tris(2,4-di-t-butylphenyl)phosphite, 10-(3,5-di-t-butyl-4-hydroxybenzyl)-9,10-dihydro-9-oxa-10-phosphaphenamtholene-10-oxide, as well as diphosphite based compounds such as 4,4'-butylydene-bis(3-methyl-6-t-butylphenyl-di-tridecyl phosphite), and 4,4'isopropylydene-bis(phenyl-di-alkyl (C12 - C15) phosphite. Of these, preferred are monophosphite compounds and, particularly preferred are tris(nonylphenyl)phosphite, tris(dinonylphenyl)phosphite, and tris(2,4-di-t-butylphenyl)phosphite.

Examples of sulfur based antioxidants include dilauryl3,3-thiodipropionate, dimyrystyl3,3'-thiodipropionate, disteary13,3-thiodipropinate, laurylstearyl3,3-thiodipropionate, pentaerythritol-tetrakis-(β-lauryl-thio-propionate), and 3,9-bis(2-dodecylthioethyl)-2,4,8,10-tetraoxaspiro[5,5]undecane.

### (Lightfastness Enhancing Agents)

Lightfastness enhancing agents employed in the present invention will now be described.

Cited as lightfastness enhancing agents are benzophenone based lightfastness enhancing agents, benzotriazole based lightfastness enhancing agents, and hindered amine based lightfastness enhancing agents. In the present invention, in view of transparency and coloration resistance of lenses, it is preferable that the hindered amine based lightfastness improving agents are employed. In the hindered amine based lightfastness improving agents (hereinafter referred to as HALS), preferred are those which exhibit a polystyrene converted Mn of 1,000 - 10,000 which is determined via GCP employing THF as a solvent, more preferred are those which exhibit an Mn of 2,000 - 5,000, but most preferred are those which exhibit an Mn of 2,800 - 3,800. When Mn is excessively small, during compounding of HALS into block polymers via heating, fusing, and kneading, it may not be possible to compound the specified amount due to sublimation, or processing stability may be degraded due to bubble formation and silver streaking during heat-melt molding, such as injection molding. Further, when lenses are employed for an extended period while lamps are lit, subliming components form a gas. On the other hand, when Mn is excessively large, the transparency of lenses is degraded due to a decrease in dispersion into block polymers, whereby lightfastness improving effects are lowered. Consequently, in the present invention, by controlling HALS to remain within the above range, it is possible to prepare lenses which exhibit processing stability, low gas generation, and excellent transparency.

Specific examples of such HALS include high molecular weight HALS, in which a plurality of piperidine rings bond via a triazine skeleton, such as N,N',N",N"'-tetrakis-[4,6-bis-{butyl-(N-methyl-2,2,6,6-tetramethylpiperidine-4-yl)amino}-triazine-2-yl]-4,7-diazadecane-1,10-diamine, polycondensation products of dibutylamine, 1,3,5-triazine, and N,N'-bis(2,2,6,6-tetramethyl-4-piperydyl)butylamine, polycondensation products of poly[{(1,1,3,3-tetramethylbutyl)amino-1,3,5-triazine-2,4-diyl}{2,2,6,6-tetramethyl-4-piperidyl)imino}hexamethylene{2,2,6,6-tetramethyl-4-piperydyl)imino}], 1,6-hexadiamine-N,N'-bis(2,2,6,6-tetramethyl-4-piperydyl), and morphline-2,4,6-trichloro-1,3,5-triazine, poly[(6-morphlino-s-triazine-2,4-diyl)(2,2,6,6,-tetramethyl-4-piperydyl)imino]-hexamethylene[(2,2,6,6-tetramethyl-4-piperydyl)imino], as well as high molecular weight HALS, in which piperidine rings bond via an ester bond, such as polymers of dimethyl succinate and 4-hydroxy-2,2,6,6-tetramethyl-1-piperidine ethanol and an esterified mixture of 1,2,3,4-butanetertacarocxylic acid, 1,2,2,6,6-pentamethyl-4-piperidinol, and 3,9-bis(2-hydroxy-1,1-dimethylethyl)-2, 4, 8, 10 tetraoxaspiro[5,5]undecane.

Of these, preferred are those of an Mn of 2,000 - 5,000, such as polycondensation products of dibutylamine, 1,3,5-triazine, and N,N'-bis(2,2,6,6-tetramethyl-4-piperydyl)butylamine, and polymers of poly[{(1,1,3,3-tetramethylbutyl)amino-1,3,5-triazine-2,4-diyl}{2,2,6,6-tetramethyl-4-piperidyl)imino}hexamethylene{2,2,6,6-tetramethyl-4-piperydyl)imino}], dimethyl succinate, and 4-hydroxy-2,2,6,6-tetramethyl-1-pyperidine ethanol.

The above compounding amount with respect to the resins according to the present invention is preferably 0.01 - 20 parts by weight with respect to 100 parts by weight of the polymers, is more preferably 0.02 - 15 parts by weight, but is most preferably 0.05 - 10 parts by weight. When the added amount is excessively small, lightfastness is not efficiently enhanced and coloration occurs when employed outdoors, while when the compounding amount of the HALS is excessively large, some generate gas, or lens transparency is degraded due to poor dispersion into the resins.

Further, by compounding, into the resinous composition according to the present invention, compounds of the lowest glass transition temperature of at most 30 °C, it is possible to minimize formation of cloudiness under high temperature and high humidity for an extended period without degrading characteristics such as transparency, heat resistance, and mechanical strength.

### EXAMPLES

### (Synthesis of Copolymers and Hydrogenated Products)

Representative synthesis examples of the copolymers and hydrogenated products of the present invention will now be described, however, the present invention is not limited thereto.

Physical properties of prepared copolymers and hydrogenated products were determined via the following methods.

Average molecular weight (Mn): GPC was employed. A prepared copolymer or hydrogenated product was dissolved in chloroform, and the molecular weight was determined at a flow rate 0.6 ml/minute and 40 °C, employing HLC-8220 GPC and a TSKgel Super HM-M column, produced by TOSOH, and the resulting molecular weight was corrected employing the polystyrene standard. '

Glass transition temperature (Tg): Under a nitrogen atmosphere, 10 mg powder of a copolymer or hydrogenated product was used to determine the glass transition temperature at a temperature elevating rate of 10 °C/minute employing DSC-50, produced by Shimadzu Corp., and the glass transition temperature was determined in accordance with the method specified in JIS k 7121.

Hydrogenation rate: Hydrogenated copolymer powder was dissolved in dueteriated chloroform, and a decrease due to hydrogenation in the peak assigned to the carbon-carbon double bond of the main chain δ of 4.5 - 6.0 ppm was calculated employing 400 MHz1H-NMR.

### Example 1

### Synthesis Example 1-1

### Synthesis of Ethylene-Norbornene Copolymer A-1: Present Invention

At room temperature, charged into a 15 L autoclave, which had been dried under vacuum, the ambience of which had been replaced with nitrogen, were 887 g (9.42 mol) of norbornene, 777 ml of cyclohexane, and 1.12 g (9.33 mol) of diethyl aluminum chloride. Subsequently, while stirring, the pressure of ethylene was increased to 600 kPa and then released. This pressure increase and release operation was repeated three times. Thereafter, the pressure in the system was increased to 150 kPa with ethylene, and the temperature was raised to 150 °C. Subsequently, the inner pressure was increased to reach 600 kPa employing ethylene. After stirring for 15 minutes, copolymerization of ethylene and norbornene was initiated by adding 436.5 mg of AA type titanium trichloride, produced by Stauffer Co., into the system. During polymerization, the inner pressure was maintained at 600 kPa by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and the solid portion (being copolymers) was collected via filtration. Under a flow of nitrogen, drying was conducted at 130 °C and 47 kPa for 12 hours.

The yield of Ethylene-Norbornene Copolymer A-1, prepared as above, was 305 g. The number average molecular weight Mn, determined via GPC, was 117,200 and Mw/Mn was 1.84, the glass transition temperature (Tg) was 137 °C, while the norbornene content was 48.6 mol%.

### Synthesis Example 1-2

### Synthesis of Norbornene·1-Hexane Copolymer B-1: Present Invention

At room temperature, charged into a 15 L autoclave, which had been dried under vacuum, the ambient atmosphere of which had been replaced with nitrogen, 887 g (9.42 mol) of norbornene, 1,178 ml (9.42 mol) of 1-hexane, 777 ml of cyclohexane, and 1.12 g (9.33 mol) of diethyl aluminum chloride. Subsequently, while stirring, the pressure of nitrogen was increased to 600 kPa and then released. This pressure increase and release operation was repeated three times. Thereafter, the pressure of nitrogen in the system was increased to 150 kPa, and the temperature was raised to 100 °C. Subsequently, the inner pressure was increased to reach 600 kPa employing nitrogen. After stirring for 15 minutes, copolymerization of ethylene and norbornene was initiated by adding 436.5 mg of AA type titanium trichloride, produced by Stauffe Co. into the system. During polymerization, the inner pressure was maintained at 600 kPa by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and polymers were precipitated. Thereafter, sufficient washing was carried out employing acetone, and a solid portion (copolymers) was collected via filtration. Under a flow of nitrogen, drying was conducted at 130 °C and 47 kPa for 12 hours.

The yield of Norbornene-1-Hexane Copolymer B-1, prepared as above, was 289 g. The number average molecular weight Mn, determined via GPC, was 83,400, Mw/Mn was 1.73, and the glass transition temperature (Tg) was 127 °C, while the norbornene content was 54.7 mol%.

### Comparative Synthesis Example 1-1

### Synthesis of Ethylene-Norbornene Copolymer C-1: Comparative Example

Synthesis was performed in the same manner as Synthesis Example 1-1, except that 1.18 g (9.33 mol) of ethyl aluminum dichloride was added into the system. The yield of Ethylene·Norbornene Copolymer C-1 was 256 g. The number average molecular weight Mn, determined via GPC, was 80,300 and Mw/Mn was 1.62, and the glass transition temperature (Tg) was 121 °C, while the norbornene content 42.9 mol%.

### Synthesis Example 1-3

### Synthesis of copolymer in which the carbon-carbon double bond is hydrogenated: Present Invention

In a 25 L autoclave, 250.0 g of Copolymer Powder A-1 prepared in Synthesis Example 1 was dissolved in dried tetrahydrofuran (13.5 L), and a dried tetrahydrofuran solution (1.5 L) incorporating dichlorotris(triphenylphosphine)ruthenium (200 mg, 0.21 mmol) and trimethyl aluminum (125 mg, 1.06 mmol) previously prepared as a hydrogenation catalyst was added, and hydrogenation was performed at a hydrogen pressure of 8.5 MPa and 165 °C for 5 hours. Thereafter, the temperature was lowered to room temperature and the hydrogen gas was released.

While stirring, the resulting hydrogenated copolymer incorporating solution was added to methanol (50 L) to precipitate the above hydrogenated copolymer. After collecting the precipitates via filtration, the precipitates were vacuum dried, whereby white powder Hydrogenated Product A-2 was prepared. The prepared hydrogenated polymer exhibited no peak assigned to the proton of the primary chain whereby the calculated hydrogenation ratio, based on 1H-NMR, was 100%. The number average molecular weight Mn, determined via GPC, was 102,500, Mw/Mn was 1.73, and the glass transition temperature, determined via DSC, was 133 °C.

### Synthesis Example 1-4

### Synthesis of a copolymer in which the carbon-carbon double bond is hydrogenated: Present Invention

White powder Hydrogenated Copolymer Product B-2 was prepared in the same manner as Synthesis Example 1-3, except that powder Copolymer A-1 was replaced with powder Copolymer B-1.

The prepared hydrogenated polymer exhibited no peak assigned to the proton of the primary chain whereby the calculated hydrogenation ratio, based on 1H-NMR, was 100%. The number average molecular weight Mn, determined via GPC, was 87,100 and Mw/Mn was 1.72, while`the glass transition temperature, determined via DSC, was 127 °C.

### Comparative Synthesis Example 1-2

White powder Hydrogenated Copolymer C-2 was prepared in the same manner as Synthesis Example 3, except that powder Copolymer A-1 prepared in Synthesis Example 1-1 was replaced with powder Copolymer C-1 prepared in Comparative Synthesis Example 1-1.

The prepared hydrogenated polymer exhibited no peak assigned to the proton of the primary chain whereby the calculated hydrogenation ratio, based on 1H-NMR, was 100%. The number average molecular weight Mn, determined via GPC, was 77,600 and Mw/Mn was 1.60, while the glass transition temperature, determined via DSC, was 118 °C.

As one example of the use of the optical resin lens of the present invention, with reference to Fig. 1, an example is described in which the above optical resin lens is employed as an objective lens employed in the pick-up device for optical disks.

In the present embodiment, targeted is a "high density optical disk" employing a so-called blue laser beam source at a used wavelength of 405 nm. The thickness of the protective substrate of the above optical disk is 0.1 mm and its memory capacity is approximately 30 GB.

Fig. 1 is a schematic view showing one example of the optical pick-up device employed in the present invention.

In optical pick-up device 1, laser diode (LD) 2 is a light source, and a blue laser beam at wavelength λ of 405 nm is employed. However, it is suitable to accept those in the wavelength λ range of 390 - 420 nm.

Beam slitter (BS) 3 transmits an incident beam from LD 2 in the direction of objective optical element (OBL) direction 4, but also functions to focus the reflected light (returned light) from optical disk 5 (optical information recording medium) via sensor lens (SL) 6 to light receiving sensor (PD) 7.

A light beam ejected from LD 2 is incident to collimator (COL) 8 and thereby is collimated to infinite parallel light, and then is incident to objective lens OBL 4 via beam slitter (BS) 3. Thereafter, it forms a focal point on information recording plane 5b via protective substrate 5a of optical disk (optical information recording media) 5. Subsequently, after the light is reflected on information recording plane 5b, it traces the same path and is deflected to the polarizing direction by 1/4 wavelength plate (Q) 9 and the path is curved by BS 3 and is focused on sensor (PD) 7 via sensor lens (SL) 6. Photoelectric conversion is performed by the above sensor to produce electric signals.

Objective optical element OBL 4 is an optical resin lens in the form of a single lens which is prepared via injection molding of resins, and aperture (AP) 10 is mounted on the light incident side and the light beam diameter is set. Herein, the incident light beam is narrowed to a diameter of 3 mm, and focusing or tracking is carried out via actuator (AC) 11.

The numerical aperture demanded for objective optical element OBL 4 differs depending on the thickness of the protective substrate of the optical information recording media, and the pit size. Herein, the numerical aperture of the high density objective optical element is set to 0.85. Example 1-1

### (Preparation of Optical Resin Lenses)

### (Optical Resin Lens 1-1): Present Invention

Employing the POLY LABO SYSTEM (produced by EKO Seiki Co., Ltd.), 200 g of Ethylene·Norbornene Copolymer A-1, prepared in Synthesis Example 1-1, was kneaded under a nitrogen atmosphere at 190 °C for 10 minutes. Under the same conditions as above, 10 batches were kneaded and the produced materials pulverized. The pulverized materials were subjected to injection molding at a clamping pressure of 50 t, a die temperature of 120 °C and an injection pressure of 69.0 MPa employing an in-line injection molding machine, whereby 20 lenses at a diameter of 1 cm were produced. (Optical Resin Lens 1-2): Present Invention

Twenty lenses at a diameter of 1 cm were produced in the same manner as for Optical Resin Lens 1, except that Norbornene·1-Hexane Copolymer B-1 prepared in Synthesis Example 1-2 was employed.

### (Optical Resin Lens 1-3): Comparative Example

Twenty lenses at a diameter of 1 cm were produced in the same manner as for Optical Resin Lens 1-1, except that Ethylene-Norbornene Copolymer C-1 prepared in Comparative Synthesis Example 1-1 was employed.

### (Durability Evaluation of Optical Resin Lenses)

Optical Resin Lens 1-1 and 1-2 of the present invention, as well as Comparative Optical Resin Lens 1-3, prepared as above, were employed as an objective lens of the light pick-up device shown in Fig. 1. After continuous exposure to a 15 mW blue laser beam (at a wavelength of 405 nm) at 60 °C for 500 and 2,000 hours, the degree of cloudiness of each of the lenses after continuous exposure was visually observed and evaluated based on the following rankings. Table 1 shows the evaluation results.
A: no cloudiness was noted (rated as commercially viable)
B: slight cloudiness was noted (rated as commercially viable)
C: obvious cloudiness was noted (rated as commercially unviable)

**(Table 1)**

| Lens | 500 Hours | 2,000 Hours |
|---|---|---|
| Optical Resin Lens 1-1 (Present Invention) | A | A |
| Optical Resin Lens 1-2 (Present Invention) | A | B |
| Optical Resin Lens 1-3 (Comparative Example) | C | C |

As can clearly be seen from Table 1, the durability of Optical Resin Lenses 1-1 and 1-2 of the present invention was superior to that of Comparative Lens 1-3.

### Example 1-2

### (Preparation of Optical Resin Lenses)

### (Optical Resin Lens 1-4): Present Invention

Twenty lenses at a diameter of 1 cm were produced in the same manner as for Optical Resin Lens 1-1, except that Hydrogenated Copolymer A-2, prepared in Synthesis Example 1-3, was employed.

### (Optical Resin Lens 1-5): Present Invention

Twenty lenses at a diameter of 1 cm were produced in the same manner as for Optical Resin Lens 1-1, except that Hydrogenated Copolymer B-2, prepared in Synthesis Example 3, was employed.

### (Optical Resin Lens 1-6): Comparative Example

Twenty lenses at a diameter of 1 cm were produced in the same manner as for Optical Resin Lens 1-1, except that Hydrogenated Copolymer C-2, prepared in Comparative Synthesis Example 1-2, was employed.

### (Durability Evaluation of Optical Resin Lenses)

Optical Resin Lenses 1-4 and 1-5, as well as Comparative Resinous Lens 1-6, prepared as above, were evaluated in the same manner as Example 1-1. Table 2 shows the results.

**(Table 2)**

| Lens | 500 Hours | 2,000 Hours |
|---|---|---|
| Optical Resin Lens 1-4 (Present Invention) | A | A |
| Optical Resin Lens 1-5 (Present Invention) | A | B |
| Optical Resin Lens 1-6 (Comparative Example) | C | C |

As can clearly be seen from Table 2, the durability of Optical Resin Lenses 1-4 and 1-5 of the present invention was superior to that of Comparative Lens 1-6.

### Example 1-3

### (Preparation of Optical Resin Lens)

### (Optical Resin Lens 1-7): Present Invention

Ethylene·Norbornene Copolymer A-1, which was prepared in Synthesis Example 1-1, was pulverized in the same manner as for the preparation of Optical Resin Lens 1-1 in Example 1-1. The pulverized materials were subjected to injection molding at a clamping pressure of 50 t, a die temperature of 120 °C and an injection pressure of 67.0 MPa, employing an in-line injection molding machine. During this injection molding, 0.5 g of IRGANOX 1010 (being a phenol based antioxidant, produced by Ciba Specialty Chemicals Co.) with respect to 100 g of the supplied resins was added, and 20 lenses at a diameter of 1 cm were produced.

### (Optical Resin Lens 1-8): Present Invention

Twenty lenses at a diameter of 1 cm were prepared in the same manner as Optical Resin Lens 1-7, except that Norbornene-1-Hexane Copolymer B-1, prepared in Synthetic Example 1-2, was employed.

### (Optical Resin Lens 1-9): Comparative Example

Twenty lenses at a diameter of 1 cm were prepared in the same manner as Optical Resin Lens 1-7, except that Ethylnene-Norbornene Copolymer C-1, prepared in Comparative Synthetic Example 1-1, was employed.

### (Optical Resin Lens 1-10): Present Invention

Twenty lenses at a diameter of 1 cm were prepared in the same manner as Optical Resin Lens 1-7, except that Hydrogenated Copolymer A-2, prepared in Synthetic Example 1-3, was employed.

### (Optical Resin Lens 1-11): Present Invention

Twenty lenses at a diameter of 1 cm were prepared in the same manner as Optical Resin Lens 1-7, except that Hydrogenated Copolymer B-2, prepared in Synthetic Example 1-4, was employed.

### (Optical Resin Lens 1-11): Present Invention

Twenty lenses at a diameter of 1 cm were prepared in the same manner as Optical Resin Lens 1-7, except that Hydrogenated Copolymer C-2, prepared in Comparative Synthetic Example 1-2, was employed.

### (Durability Evaluation of Optical Resin Lenses)

Optical Resin Lenses 1-7, 1-8, 1-10, and 1 -11 of the present invention, prepared as above, as well as Comparative Resinous Optical Lenses 1-9 and 1-12 were evaluated in the same manner as Example 1-2. Table 3 shows the results.

**(Table 3)**

| Lens | 500 Hours | 2,000 Hours |
|---|---|---|
| Optical Resin Lens 1-7 (Present Invention) | A | A |
| Optical Resin Lens 1-8 (Present Invention) | A | B |
| Optical Resin Lens 1-9 (Comparative Example) | C | C |
| Optical Resin Lens 1-10 (Present Invention) | A | A |
| Optical Resin Lens 1-11 (Present Invention) | A | A |
| Optical Resin Lens 1-12 (Comparative Example) | C | C |

As can clearly be seen from Table 3, the durability of Optical Resin Lenses 1-7, 1-8, 1-10, and 1-11 of the present invention was superior to that of Comparative Lenses 1-9 and 1-12.

### Example 2

### (Preparation of Catalyst Components)

### <Preparation of Catalyst First Component A: Present Invention>

Added to 20 g of commercial AA type titanium trichloride was all of 3.0 g (16.7 mmol) of hexamethyl phosphate triamide (HMPTA), and under an argon atmosphere, the resulting mixture was blended and milled at room temperature for 20 hours, employing a ball mill, whereby Catalyst First Component A was prepared.

### <Preparation of Catalyst First Component B: Present Invention>

Catalyst First Component B was prepared in the same manner as above Catalyst First Component A, except that HMPTA was replaced with 3.4 g (16.8 mmol) of trin-butyl phosphine (TNBP).

### <Preparation of Catalyst First Component C: Present Invention>

Catalyst First Component C was prepared in the same manner as above Catalyst First Component A, except that HMPTA was replaced with 1.8 g (15.5 mmol) of tetramethylethylenediamine (TMEDA).

### <Preparation of Catalyst First Component D: Comparative Example>

Catalyst First Component D was prepared in the same manner as above Catalyst First Component A, except that HMPTA was replaced with 2.9 g (16.0 mmol) of benzophenone.

### (Synthesis of Copolymers and Hydrogenated Copolymers)

### (Synthesis Example 2-1: Synthesis of Ethylene-Norbornene Copolymer A-1: Present Invention)

At room temperature, charged into a 15 L autoclave, which had been dried under vacuum, the ambience of which was replaced with nitrogen, were 887 g (9.42 mmol) of norbornene, 777 ml of cyclohexane, and 1.78 g (8.98 mol) of triisobutyl aluminum. Subsequently, while stirring, the pressure of ethylene was increased to 588 kPa and then released. This pressure increase and decrease operation was repeated three times. Thereafter, the pressure in the system was increased to 147 kPa with ethylene, and the temperature was raised to 80 °C. Subsequently, the inner pressure was increased to reach 588 kPa. After stirring for 15 minutes, copolymerization of ethylene and norbornene was initiated by adding 449.0 mg of Catalyst First Component A into the system. During polymerization, the inner pressure was maintained at 588 kPa by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and a solid portion (copolymers) was collected via filtration. Under a flow of nitrogen, drying was conducted at 130 °C and 46.6 kPa for 12 hours.

The yield of Ethylene-Norbornene Copolymer A-1, prepared as above, was 291 g. The number average molecular weight Mn, determined via GPC, was 98,200, Mw/Mn was 1.81, and the glass transition temperature (Tg) was 132 °C, while the norbornene content was 47.3 mol%.

### (Synthesis Example 2-2: Synthesis of Norbornene-1-Hexane Copolymer B-1 (Present Invention))

At room temperature, charged into a 15 L autoclave, which had been dried under vacuum, the ambient atmosphere of which had been replaced with nitrogen, were 887 g (9.42 mol) of norbornene, 1,178 ml of 1-hexane (9.42 mol), 777 ml of cyclohexane, and 1.78 g (8.98 mmol) of triisobutyl aluminum. Subsequently, while stirring, the pressure of nitrogen was increased to 688 kPa and then released. This pressure increase and release operation was repeated three times. Thereafter, the pressure of nitrogen in the system was increased to 147 kPa, and the temperature was raised to 100 °C. Subsequently, the inner pressure was increased to reach 588 kPa employing nitrogen. After stirring for 15 minutes, copolymerization of norbornene and 1-hexane was initiated by adding 449.52mg of Catalyst First Component B, prepared as above, into the system. During polymerization, the inner pressure was maintained at 588 kPa by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1: 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, washing was sufficiently carried out employing acetone, and a solid portion (copolymers) was collected via filtration. Under a flow of nitrogen, drying was conducted at 130 °C and 46.6 kPa for 12 hours.

The yield of Norbornene-1-Hexane Copolymer B-1, prepared as above, was 278 g. The number average molecular weight Mn, determined via GPC, was 89,700, Mw/Mn was 1.91, and the glass transition temperature (Tg) was 125 °C, while the norbornene content was 58.1 mol%.

### (Synthesis Example 2-3: Synthesis of Ethylene·Norbornene Copolymer C-1 (Present Invention))

Ethylene·Norbornene Copolymer C-1 was prepared in the same manner as above Synthesis Example 2-1, except that Catalyst First Component A was replaced with 44.9 mg of Catalyst First Component C prepared as above. The yield of resulting Ethylene-Norbornene Copolymer C-1, prepared as above, was 283 g. The number average molecular weight Mn, determined via GPC, was 87,200, Mw/Mn was 1.72, and the glass transition temperature (Tg) was 130 °C, while the norbornene content was 48.6 mol%.

### (Synthesis Example 2-4: Synthesis of Ethylene-Norbornene Copolymer D-1 (Comparative Example))

Ethylene-Norbornene Copolymer C-1 was prepared in the same manner as above Synthesis Example 2-1, except that Catalyst First Component A was replaced with 44.9 mg of Catalyst First Component C prepared as above. The yield of resulting Ethylene·Norbornene Copolymer C-1, prepared as above, was 283 g. The number average molecular weight Mn, determined via GPC, was 87,200, Mw/Mn was 1.72, and the glass transition temperature (Tg) was 130 °C, while the norbornene content was 48.6 mol%.

### (Synthesis Example 2-5: Synthesis of Copolymer A-2 in which the carbon-carbon double bond is hydrogenated (Present Invention))

In a 25 L autoclave, 250.0 g of Ethylene.Norbornene Copolymer A-1 prepared as in above Synthesis Example 2-1 was dissolved in dried tetrahydrofuran (13.5 L), and a dried tetrahydrofuran solution (1.5 L) incorporating dichlorotris(triphenylphosphine)ruthenium (200 mg, 0.21 mmol) and trimethyl aluminum (125 mg, 1.06 mmol) previously prepared as a hydrogenation catalyst was added, and then hydrogenation was performed at a hydrogen pressure of 8.5 MPa and 165 °C for 5 hours. Thereafter, the temperature was lowered to room temperature and the hydrogen gas was released.

While stirring, the resulting hydrogenated polymer incorporating solution was added to methanol (50 L), and the hydrogenated products were precipitated. After collecting the precipitates via filtration, the precipitates were subjected to vacuum drying, whereby white powder Hydrogenated Polymer A-2 was prepared. The prepared Hydrogenated Polymer A-2, in which the carbon-carbon double bond was hydrogenated, exhibited no peak assigned to the proton of the primary chain whereby the hydrogenation ratio, based on 1H-NMR, was 100%. The number average molecular weight Mn, determined via GPC, was 94,200, Mw/Mn was 1.71, and the glass transition temperature determined via DSC was 131 °C.

### (Synthesis Example 2-6: Synthesis of Copolymer B-2 in which the carbon-carbon double bond is hydrogenated (Present Invention))

White powder Hydrogenated Copolymer Product B-2, in which the carbon-carbon double bond was hydrogenated, was prepared in the same manner as above Synthesis Example 2-5, except that Ethylene-Norbornene Copolymer A-1, prepared in Synthesis Example 2-1, was replaced with Norbornene·1-Hexane Copolymer B-1 prepared in Synthesis Example 2-2.

Prepared Hydrogenated Polymer B-2 in which the carbon-carbon double bond was hydrogenated exhibited no peak assigned to the proton of the primary chain whereby the hydrogenation ratio based on 1H-NMR was 100%. The number average molecular weight Mn, determined via GPC, was 83,700, Mw/Mn was 1.86, and the glass transition temperature, determined via DSC, was 120 °C.

### (Synthesis Example 2-7: Synthesis of Copolymer C-2 in which the carbon-carbon double bond is hydrogenated (Comparative Example))

White powder Copolymer C-2, in which the carbon-carbon double bond was hydrogenated, was prepared in the same manner as above Synthesis Example 2-5, except that Ethylene·Norbornene Copolymer A-1, prepared in Synthesis

### Example 2-1, was replaced with Ethylene-Norbornene Copolymer C-1, prepared in Synthesis Example 2-3.

Prepared Polymer C-2, in which the carbon-carbon double bond was hydrogenated, exhibited no peak assigned to the proton of the primary chain whereby the hydrogenation ratio based on 1H-NMR was 100%. The number average molecular weight Mn, determined via GPC, was 80,300, Mw/Mn was 1.67, and the glass transition temperature, determined via DSC, was 127 °C.

### (Synthesis Example 2-8: Synthesis of Copolymer D-2 in which the carbon-carbon double bond is hydrogenated (Comparative Example))

White powder Copolymer D-2, in which the carbon-carbon double bond was hydrogenated, was prepared in the same manner as above Synthesis Example 2-5, except that prepared in Synthesis Example 2-1 was replaced with Ethylene.Norbornene Copolymer A-1 prepared in Synthesis Example 2-4.

Prepared Polymer D-2 in which the carbon-carbon double bond was hydrogenated exhibited no peak assigned to the proton of the primary chain whereby the hydrogenation ratio based on 1H-NMR was 100%. The number average molecular weight Mn, determined via GPC, was 82,900, Mw/Mn was 1.64, and the glass transition temperature, determined via DSC, was 125 °C.

### Example 2-1

### <<Preparation of Optical Resin Lenses>>

### (Optical Resin Lens 2-1): Present Invention

Employing the POLY LABO SYSTEM (produced by EKO Seiki Co., Ltd.), 200 g of Ethylene-Norbornene Copolymer A-1 prepared in Synthesis Example 2-1 was kneaded under a nitrogen atmosphere at 190 °c for 10 minutes. Under the same conditions as above, 10 batches were kneaded and the produced materials were pulverized. The pulverized materials were subjected to injection molding at a clamping pressure of 490 kN, a die temperature of 120 °C and an injection pressure 69.0 MPa employing an in-line injection molding machine, whereby 20 lenses at a diameter of 1 cm were produced.

### (Optical Resin Lens 2-2): Present Invention

Twenty lenses at a diameter of 1 cm were produced in the same manner as for above Optical Resin Lens 2-1, except that Ethylene·Norbornene Copolymer A-1 was replaced with Norbornene-1-Hexane Copolymer B-1, prepared in Synthesis Example 2-2.

### (Preparation of Optical Resin Lens 2-3: Present Invention)

Twenty Optical Resin Lenses 2-3 at a diameter of 1 cm were produced in the same manner as for above Optical Resin Lens 2-1, except that Ethylene·Norbornene Copolymer A-1 was replaced with Ethylene·Norbornene Copolymer C-1, prepared in Synthesis Example 2-3.

### (Preparation of Optical Resin Lens 2-4: Comparative Example)

Twenty Optical Resin Lenses 2-4 at a diameter of 1 cm were produced in the same manner as for above Optical Resin Lens 2-1, except that Ethylene-Norbornene Copolymer A-1 was replaced with Ethylene-Norbornene Copolymer D-1, prepared in Synthesis Example 2-4.

### (Durability Evaluation of Optical Resin Lenses)

Each of Optical Resin Lenses 2-1 - 2-4, prepared as above, was employed as an objective lens of the light pick-up device shown in Fig. 1. After continuous exposure to a 15 mW blue laser beam (at a wavelength of 405 nm) at 60 °C for 500 and 2,000 hours, the degree of cloudiness of each of the lenses after such continuous exposure was visually observed and evaluated based on the following rankings.
A: negligible cloudiness was noted, and that cloudiness was in the commercially viable range
B: slight cloudiness was noted, but the cloudiness was still in the commercially viable range
C: obvious cloudiness was noted, and that cloudiness was in the commercially unviable range
Table 4 shows the results.

**(Table 4)**

| Lens | 500 Hours | 2,000 Hours |
|---|---|---|
| Optical Resin Lens 2-1 (Present Invention) | A | A |
| Optical Resin Lens 2-2 (Present Invention) | A | A |
| Optical Resin Lens 2-3 (Present Invention) | A | B |
| Optical Resin Lens 2-4 (Comparative Example) | C | C |

As can clearly be seen from Table 4, the durability of Optical Resin Lenses 2-1 - 2-3 of the present invention exhibited excellent durability compared to Comparative Example 2-4.

### Example 2-2

### <<Preparation of Optical Resin Lenses>>

### (Optical Resin Lens 2-5: Present Invention)

Twenty Optical Resin Lenses 2-5 at a diameter of 1 cm were prepared in the same manner as for Optical Resin Lens 2-1 described in Example 2-1, except that Ethylene·Norbornene Copolymer A-1 was replaced with Copolymer A-2, in which the carbon-carbon double bond was hydrogenated, as prepared in above Synthesis Example 5.

### (Preparation of Optical Resin Lens 2-6: Present Invention)

Twenty Optical Resin Lenses 2-6 at a diameter of 1 cm were prepared in the same manner as for above Optical Resin Lens 2-5, except that Copolymer A-2 in which the carbon-carbon double bond was hydrogenated was replaced with Copolymer B-2, in which the carbon-carbon double bond was hydrogenated, prepared as in above Synthesis Example 2-6.

### (Preparation of Optical Resin Lens 2-6: Present Invention)

Twenty Optical Resin Lenses 2-7 at a diameter of 1 cm were prepared in the same manner as for above Optical Resin Lens 2-5, except that Copolymer A-2 in which the carbon-carbon double bond was hydrogenated was replaced with Copolymer A-2, in which the carbon-carbon double bond was hydrogenated.

### (Preparation of Optical Resin Lens 2-8: Comparative Example)

Twenty Optical Resin Lenses 2-8 at a diameter of 1 cm were prepared in the same manner as for above Optical Resin Lens 2-5, except that Copolymer A-2 in which the carbon-carbon double bond was hydrogenated was replaced with Copolymer D-2, in which the carbon-carbon double bond was hydrogenated, as prepared in above Synthesis Example 2-8.

### <<Durability Evaluation of Optical Resin Lenses>>

Each of Optical Resin Lenses 2-5 - 2-8, prepared as above, as was evaluated for durability, employing the same method described in Example 2-1. Table 5 shows the results.

**(Table 5)**

| Lens | 500 Hours | 2,000 Hours |
|---|---|---|
| Optica Resin Lens 2-5 (Present Invention) | A | A |
| Optical Resin Lens 2-6 (Present Invention) | A | A |
| Optical Resin Lens 2-7 (Present Invention) | A | B |
| Optical Resin Lens 2-8 (Comparative Example) | C | C |

As can clearly be seen from Table 5, the durability of Optical Resin Lenses 2-5 - 2-7 of the present invention exhibited excellent durability compared to Comparative Optical Resin Lens 2-8.

### Example 2-3

### <<Preparation of Optical Resin Lenses>>

### (Preparation of Optical Resin Lens 2-9)

Ethylene·Norbornene Copolymer A-1, prepared in above Synthesis Example 2-1, was prepared employing the same method as for the preparation of Optical Resin Lens 2-1 described in Example 2-1 and was subsequently pulverized. The pulverized materials were subjected to injection molding at a clamping pressure of 490 kN, a die temperature of 120 °C and an injection pressure of 67.0 MPa, employing an in-line injection molding machine. During molding, 0.5 g of IRGANOX 1010 (being a phenol based antioxidant, produced by Ciba-Geigy Corp.), with respect to the resin feeding amount 100 g, whereby 20 lenses at a diameter of 1 cm were produced.

### (Preparation of Optical Resin Lenses 2-10 - 2-16)

Optical Resin Lenses 2-10 - 2-16 were prepared in the same manner as for above Optical Resin Lens 2-7, except that Ethylene·Norbornene Copolymer was replaced with each of Norbornene·1-Hexane Copolymer B-1, prepared in above Synthesis Example 2-2, Ethylene·Norbornene Copolymer C-1, prepared in Synthesis Example 2-3, Ethylene·Norbornene Copolymer D-1, prepared in Synthesis Example 2-4, Copolymer A-2, in which the carbon-carbon double bond was hydrogenated, prepared in Synthesis Example 2-5, Copolymer B-2, in which the carbon-carbon double bond was hydrogenated, prepared in Synthesis Example 2-6, Copolymer C-2, in which the carbon-carbon double bond was hydrogenated, prepared in Synthesis Example 2-7, and Copolymer D-2, in which the carbon-carbon double bond was hydrogenated, prepared in Synthesis Example 2-8.

### <<Durability Evaluation of Optical Resin Lenses>>

Each of Optical Resin Lenses 2-9 - 2-16, prepared as above, was evaluated for durability, employing the same method described in Example 2-1. Table 6 shows the results.

**(Table 6)**

| Lens | 500 Hours | 2,000 Hours |
|---|---|---|
| Optica Resin Lens 2-9 (Present Invention) | A | A |
| Optical Resin Lens 2-10 (Present Invention) | A | A |
| Optical Resin Lens 2-11 (Present Invention) | A | B |
| Optical Resin Lens 2-12 (Comparative Example) | C | C |
| Optical Resin Lens 2-13 (Present Invention) | A | A |
| Optical Resin Lens 2-14 (Present Invention) | A | A |
| Optical Resin Lens 2-15 (Present Invention) | A | A |
| Optical Resin Lens 2-16 (Comparative Example) | C | C |

As can clearly be seen from the results described in Table 6, each of Optical Resin Lenses 2-9 - 2-11, and 2-13 - 2-15 exhibited excellent durability compared to Comparative Optical Resin Lenses 2-12 and 2-16.

### (Preparation of Catalyst Component (b))

In a flask, 12.2 g of scraped magnesium was vacuum-dried. Subsequently, 800 ml of dehydrated n-heptane, 0.02 g of iodine, and 10 ml of n-butyl chloride were added, and the resulting mixture was heated while stirring. When a reaction was initiated, 47.5 ml of n-butyl chloride was dripped over approximately 80 minutes while refluxed. After completion of the dripping, refluxing was continued for an additional 6 hours. Thereafter, any unreacted magnesium and the resulting white powder were separated, and subsequently, magnesium and the reaction product of n-butyl chloride were isolated. Suspended into 50 ml of n-heptane was 5.8 g of the resulting white powder, and a mixed solution of 8 ml of diethyl ether and 50 ml of n-heptane was added. The resulting mixture underwent reaction at approximately 25 °C for one hour. After completion of the reaction, solvents were separated employing a glass filter, and while cooled to 0 °C, 20 ml of titanium tetrachloride was added, and the resulting mixture underwent reaction for two hours. The resulting reaction products were washed with 100 ml of n-heptane four times, and subsequently vacuum dried, whereby Solid Catalyst Component (b) was obtained. The resulting catalyst incorporated Ti, Mg, and Cl at a ratio of 1.7 : 20.5 : 67.8% by weight, respectively.

### (Synthesis Example 3-1) Synthesis of Ethylene-Norbornene Copolymer A-1: Present Invention

At room temperature, charged into a 15 L autoclave, which had been dried under vacuum, the ambient atmosphere of which had been replaced with nitrogen, were 887 g (9.42 mol) of norbornene, 777 ml of cyclohexane, 6.10 853.5 mmol)g of trimethyl aluminum as Catalyst Component (a), and 1.46 g (8.91 mmol) of isopropyl benzoate as Catalyst Component (c). Subsequently, while stirring, the pressure of ethylene was increased to 0.588 MPaG and then released. This pressure increase and release operation was repeated three times. Thereafter, the pressure in the system was increased to 0.147 MPaG with ethylene, and the temperature was raised to 80 °C. Subsequently, the inner pressure was increased to reach 0.588 MPaG employing ethylene. After stirring for 15 minutes, copolymerization of ethylene and norbornene was initiated by adding 178.2 mg of Catalyst Component (b) prepared as above. During polymerization, the inner pressure was maintained at 0.588 MPaG by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and a solid portion (being copolymers) was collected via filtration. Under a flow of nitrogen, drying was conducted at 130 °C and 4.67 x 10⁴ Pa for 12 hours.

The yield of Ethylene-Norbornene Copolymer A-1, prepared as above, was 355 g. The number average molecular weight Mn, determined via GPC, was 118,500, Mw/Mn was 1.72, and the glass transition temperature (Tg) was 136 °C, while the norbornene content was 48.2 mol%.

### (Synthesis Example 3-2) Synthesis of Norbornene·1-Hexane Copolymer B-1: Present Invention

At room temperature, charged into a 15 L autoclave, which had been dried under vacuum, the ambient atmosphere of which had been replaced with nitrogen, were 887 g (9.42 mol) of norbornene, 1,178 ml of 1-hexane (9.42 mol), 777 ml of cyclohexane, 6.11 g (53.5 mmol) of trimethyl aluminum as Catalyst Component (a), and 2.09 g (8.91 mmol) of cyclohexyl p-anisate as Catalyst Component (c). Subsequently, while stirring, the pressure of nitrogen was increased to 0.588 MPaG and then released. This pressure increase and release operation was repeated three times. Thereafter, the pressure of nitrogen in the system was increased to 0.147 NPaG, and the temperature was raised to 100 °C. Subsequently, the inner pressure was increased to reach 0.558 MPaG employing nitrogen. After stirring for 15 minutes, copolymerization of ethylene and 1-hexane was initiated by adding 178.2 mg of Catalyst Component (b) into the system. During polymerization, the inner pressure was maintained at 0.588 PaG by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and a solid portion (being copolymers) was collected via filtration. Under a flow of nitrogen, drying was conducted at 130 °C and 4.67 x 10⁴ Pa for 12 hours.

The yield of Norbornene·1-Hexane Copolymer B-1, prepared as above, was 312 g. The number average molecular weight Mn, determined via GPC, was 106,300, Mw/Mn was 1.83, and the glass transition temperature (Tg) was 131 °C, while the norbornene content was 61.3 mol%. (Synthesis Example 3-3) Synthesis of Ethylene·Norbornene Copolymer C-1; Present Invention

Ethylene·Norbornene Copolymer C-1 was synthesized in the same manner as Synthesis Example 3-1, except that Catalyst Component (c) was not incorporated in the system. The yield of Ethylene·Norbornene Copolymer C-1 was 342 g. The number average molecular weight Mn, determined via GPC, was 113,700, Mw/Mn was 1.87, and the glass transition temperature (Tg) was 133 °C, while the norbornene content was 48.2 mol%. (Synthesis Example 3-4) Synthesis of Ethylene·Norbornene Copolymer D-1; Comparative Example

Ethylene·Norbornene Copolymer D-1 was synthesized in the same manner as Synthesis Example 3-1, except that 4.39 g (26.7 mmol) isopropyl benzoate as Catalyst Component (c) was incorporated in the system. The yield of Ethylene·Norbornene Copolymer D-1 was 306 g. The number average molecular weight Mn, determined via GPC, was 111,900, Mw/Mn was 1.91, and the glass transition temperature (Tg) was 138 °C, while the norbornene content was 47.9 mol%.

### (Synthesis Example 3-5) Synthesis of a copolymer in which the carbon-carbon double bond is hydrogenated: Present Invention

In a 25 L autoclave, 250.0 g of Copolymer Powder A-1 prepared in Synthesis Example 3-1 was dissolved in dried tetrahydrofuran (13.5 L), and a dried tetrahydrofuran solution (1.5 L) incorporating dichlorotris(triphenylphosphine)ruthenium (200 mg, 0.21 mmol) previously prepared and trimethyl aluminum (125 mg, 1.06 mmol) previously prepared as a hydrogenation catalyst were added, and hydrogenation was performed at a hydrogen pressure of 8.5 MPa and 165 °C for 5 hours. Thereafter, the temperature was lowered to room temperature and the hydrogen gas was released.

While stirring, the resulting hydrogenated copolymer incorporating solution was added to methanol (50 L) to precipitate the above hydrogenated copolymer. After collecting the precipitates via filtration, the precipitates were vacuum dried, whereby white powder Hydrogenated Product A-2 was prepared. The prepared hydrogenated polymer exhibited no peak assigned to the proton of the primary chain whereby the calculated hydrogenation ratio, based on 1H-NMR, was 100%. The number average molecular weight Mn, determined via GPC, was 109,400, and Mw/Mn was 1.71, while the glass transition temperature, determined via DSC, was 132 °C. (Synthesis Example 3-6) Synthesis of a copolymer in which the carbon-carbon double bond is hydrogenated: Present Invention

White powder Hydrogenated Copolymer Product B-2 was prepared in the same manner as Synthesis Example 3-5, except that powder Copolymer A-1, prepared in Synthesis Example 3-1, was replaced with powder Copolymer B-1, prepared in Synthesis Example 3-2.

The prepared hydrogenated polymer exhibited no peak assigned to the proton of the primary chain whereby the calculated hydrogenation ratio, based on 1H-NMR, was 1000. The number average molecular weight Mn, determined via GPC, was 100,700 and Mw/Mn was 1.78, while the glass transition temperature, determined via DSC, was 125 °C.

### (Synthesis Example 3-7) Synthesis of a copolymer in which the carbon-carbon double bond is hydrogenated; Present Invention

White powder Hydrogenated Copolymer Product C-2 was prepared in the same manner as Synthesis Example 3-5, except that powder Copolymer A-1, prepared in Synthesis Example 3-1, was replaced with powder Copolymer C-1, prepared in Synthesis Example 3-3.

The prepared hydrogenated polymer exhibited no peak assigned to the proton of the primary chain whereby the calculated hydrogenation ratio, based on 1H-NMR, was 100%. The number average molecular weight Mn, determined via GPC, was 111,600 and Mw/Mn was 1.82, while the glass transition temperature, determined via DSC, was 128 °C.

### (Synthesis Example 3-8) Synthesis of a copolymer in which the carbon-carbon double bond is hydrogenated; Comparative Example

White powder Hydrogenated Copolymer Product D-2 was prepared in the same manner as Synthesis Example 3-5, except that powder Copolymer A-1, prepared in Synthesis Example 3-1, was replaced with powder Copolymer D-1, prepared in Synthesis Example 3-4.

The prepared hydrogenated polymer exhibited no peak assigned to the proton of the primary chain whereby the calculated hydrogenation ratio, based on 1H-NMR, was 100%. The number average molecular weight Mn, determined via GPC, was 108,700, and Mw/Mn was 1.84, while the glass transition temperature, determined via DSC, was 134 °C.

### Example 3-1

### <<Preparation of Optical Resin Lens 3-1>>: Present Invention

Employing the POLY LABO SYSTEM (produced by EKO Seiki Co., Ltd.), 200 g of Ethylene·Norbornene Copolymer A-1, prepared in Synthesis Example 3-1, was kneaded under a nitrogen atmosphere at 190 °C for 10 minutes. Under the same conditions as above, 10 batches were kneaded and the produced materials were pulverized. The pulverized materials were subjected to injection molding at a clamping pressure of 50 t, a die temperature of 120 °C and an injection pressure 69.0 MPa, employing an in-line injection molding machine, whereby 20 lenses at a diameter of 1 cm were produced.

### <<Preparation of Optical Resin Lens 3-2>>: Present Invention

Twenty lenses at a diameter of 1 cm were produced in the same manner as for Optical Resin Lens 3-1, except that Norbornene·1-Hexane Copolymer B-1, prepared in Synthesis Example 3-2, was employed.

### <<Preparation of Optical Resin Lens 3-3): Present Invention

Twenty lenses at a diameter of 1 cm were produced in the same manner as for Optical Resin Lens 3-1, except that Ethylene·Norbornene Copolymer C-1, prepared in Synthesis Example 3-3, was employed.

### <<Preparation of Optical Resin Lens 3-4): Comparative Example

Twenty lenses at a diameter of 1 cm were produced in the same manner as for Optical Resin Lens 3-1, except that Ethylene·Norbornene Copolymer D-1, prepared in Synthesis Example 3-4, was employed.

### <<Durability Evaluation of Optical Resin Lenses>>

It is possible to evaluate optical anisotropy via visual observation.

Each of Optical Resin Lenses 3-1, 3-2, and 3-3 of the present invention, as well as Comparative Optical Resin Lens 3-4, prepared as above, was employed as an objective lens of the light pick-up device shown in Fig. 1. After continuous exposure to a 15 mW blue laser beam (at a wavelength of 405 nm) at 60 °C for 500 and 2,000 hours, the degree of cloudiness of each of the lenses after continuous exposure was visually observed and evaluated based on the rankings as follows. Table 7 shows the evaluation results.

**(Table 7)**

| Lens | 500 Hours | 2,000 Hours |
|---|---|---|
| Optical Resin Lens 3-1 (Present Invention) | A | A |
| Optical Resin Lens 3-2 (Present Invention) | A | B |
| Optical Resin Lens 3-3 (Present Invention) | A | A |
| Optical Resin Lens 3-4 (Comparative Example) | C | C |

| | | |
|---|---|---|
| A: no cloudiness was noted (rated as commercially viable) B: slight cloudiness was noted (rated as commercially viable) C: obvious cloudiness was noted (rated as commercially unviable) | | |

As can clearly be seen from Table 7, the durability of Optical Resin Lenses 3-1, 3-2, and 3-3 of the present invention was superior to that of Comparative Lens 3-4. Example 3-2

### <<Preparation of Optical Resin Lens 3-5>>: Present Invention

Twenty lenses at a diameter of 1 cm were produced in the same manner as for Optical Resin Lens 3-1, except that Hydrogenated Copolymer A-2, prepared in Synthesis Example 3-5, was employed.

### <<Preparation of Optical Resin Lens 3-6)>>: Present Invention

Twenty lenses at a diameter of 1 cm were produced in the same manner as for Optical Resin Lens 3-1, except that Hydrogenated Copolymer B-2, prepared in Synthesis Example 3-6, was employed.

### <<Preparation of Optical Resin Lens 3-7)>>: Present Invention

Twenty lenses at a diameter of 1 cm were produced in the same manner as for Optical Resin Lens 3-1, except that Hydrogenated Copolymer C-2, prepared in Synthesis Example 3-7 was, employed.

### <<Preparation of Optical Resin Lens 3-8)>>: Comparative Example

Twenty lenses at a diameter of 1 cm were produced in the same manner as for Optical Resin Lens 3-1, except that Hydrogenated Copolymer D-2, prepared in Synthesis Example 3-8, was employed.

### <<Durability Evaluation of Optical Resin Lenses>>

It is possible to evaluate optical anisotropy via visual observation. The degree of cloudiness of each of Optical Resin Lenses 3-5, 3-6, and 3-7 of the present invention, as well as Comparative Optical Resin Lens 3-8, prepared as above, was visually observed and evaluated based on the following rankings. Table 8 shows the results.

**(Table 8)**

| Lens | 500 Hours | 2,000 Hours |
|---|---|---|
| Optical Resin Lens 3-5 (Present Invention) | A | A |
| Optical Resin Lens 3-6 (Present Invention) | A | B |
| Optical Resin Lens 3-7 (Present Invention) | A | A |
| Optical Resin Lens 3-8 (Comparative Example) | C | C |

| | | |
|---|---|---|
| A: no cloudiness was noted (rated as commercially viable) B: slight cloudiness was noted (rated as commercially viable) C: clear cloudiness was noted (rated as commercially unviable) | | |

As can clearly be seen from Table 8, Optical Resin Lenses 3-5, 3-6, and 3-7 of the present invention exhibited excellent durability, compared to Comparative Lens 3-4.

### Example 3-3

### <<Preparation of Optical Resin Lens 3-9>>: Present Invention

Ethylene-Norbornene Copolymer A-1, prepared in Synthesis Example 3-1, was pulverized employing the same method as for the preparation of Optical Resin Lens 3-1 described in Example 3-1. The pulverized materials were subjected to injection molding at a clamping pressure of 50 t, a die temperature of 120 °C and an injection pressure 67.0 MPa employing an in-line injection molding machine. During molding, 0.5 g of IRGANOX 1010 (being a phenol based antioxidant, produced by Ciba-Geigy Corp.) with respect to the resin feeding amount of 100 g, whereby 20 lenses at a diameter of 1 cm were produced.

Optical Resin Lenses 3-10 (present invention), 3-11 (present invention), and 3-12 (comparative example) were prepared in the same manner: employing Norbornene·1-hexane Copolymer B-1, prepared in Synthesis Example 3-3; Ethylene·Norbornene Copolymer C-1, prepared in Synthesis Example 3-3; and Ethylene-Norbornene Copolymer D-1, prepared in Synthesis Example 3-4. Further, Optical Resin Lenses 3-13 (present invention), 3-14 (present invention), 3-15 (present invention), and 3-16 (comparative example) were prepared employing Hydrogenated Copolymer A-2, prepared in Synthesis Example 3-5; Hydrogenated Copolymer B-2, prepared in Synthetic Example 3-6; Hydrogenated Copolymer C-2, prepared in Synthetic Example 3-7; and Hydrogenated Copolymer D-2, prepared in Synthetic Example 3-8.

### <<Durability Evaluation of Optical Resin Lenses>>

It is possible to evaluate optical anisotropy via visual observation. The degree of cloudiness of each of Optical Resin Lenses 3-9, 3-10, 3-11, 3-13, 3-14, and 3-15 of the present invention, as well as Comparative Optical Resin Lenses 3-12 and 3-16, prepared as above, was visually observed and evaluated based on the following rankings. Table 9 shows the results.

**(Table 9)**

| Lens | 500 Hours | 2,000 Hours |
|---|---|---|
| Optical Resin Lens 3-9 (Present Invention) | A | A |
| Optical Resin Lens 3-10 (Present Invention) | A | B |
| Optical Resin Lens 3-11 (Present Invention) | A | A |
| Optical Resin Lens 3-12 (Comparative Example) | C | C |
| Optical Resin Lens 3-13 (Present Invention) | A | A |
| Optical Resin Lens 3-14 (Present Invention) | A | A |
| Optical Resin Lens 3-15 (Present Invention) | A | A |
| Optical Resin Lens 3-16 (Comparative Example) | C | C |

| | | |
|---|---|---|
| A: no cloudiness was noted (rated as commercially viable) B: slight cloudiness was noted (rated as commercially viable) C: clear cloudiness was noted (rated as commercially unviable) | | |

As can clearly be seen from Table 9, Optical Resin Lenses 3-9, 3-10, 3-11, 3-13, 3-14, and 3-15 of the present invention exhibited excellent durability, compared to Comparative Lenses 3-12 and 3-16.

### Example 4

### (Synthesis of n-Butylmagnesium-1-propoxide)

Charged into a 300 ml flask, in which the ambient atmosphere had been replaced with dried nitrogen, were 8 g of magnesium metal powder and 100 ml of methylcyclohexane, and the resulting mixture was stirred at the refluxing temperature. Subsequently, a mixture consisting of 6.6 g (110 mmol) of 1-propyl alcohol and 10.2 g (110 mmol) of n-butyl chloride was dripped into the mixture over 10 minutes and the resulting mixture was stirred for 30 minutes under the same conditions. Further, under the same conditions, 10.2 g (110 mmol) of n-butyl chloride was dripped into the mixture over 10 minutes and stirring was further continued for additional two hours, whereby the reaction was completed. After completion of the reaction, unreacted magnesium metal and magnesium chloride were separated employing a filter, whereby an n-butylmagnesium-1-propoxide was obtained in the form of a 1.06 mol/L methylcyclohexane solution (1). (Preparation of Titanium-Incorporating Solid Catalyst Component 4-1): Present Invention

Charged into a flask, in which the ambient atmosphere was replaced with dried nitrogen, was 9.4 ml (10 mmol) of Methylchclohexane Solution (1), prepared as above. While stirring at room temperature, 10 mmol of silicon tetrachloride was gradually dripped and stirring was continued for one hour, whereby the reaction composition was a transparent homogeneous solution. Subsequently, the temperature was raised to 100 °C and stirring was continued for an additional one hour, whereby during the increase in temperature, cloudiness resulted and precipitates were formed. After raising the temperature to room temperature, solvents were distilled out under vacuum and drying was conducted, whereby a white powder was obtained. Subsequently, 200 mmol of titanium tetrachloride was added to the white powder and heated to 130 °C and at the same temperature, reaction was performed for one hour. Thereafter, the reaction products were cooled to room temperature, and the supernatant was separated. The precipitates were washed four times with 100 ml of n-heptane, whereby pale brown Solid A was obtained. The titanium content of the resulting solid was 2.7% by weight.

### (Preparation of Titanium-Incorporating Solid Catalyst Component 4-2): Comparative Example

Catalyst Component B, incorporating 2.8% by weight of titanium, was prepared in the same manner as Titanium-incorporating Solid Catalyst Component Preparation 4-1, except that 2 mmol of ethyl benzoate and 10 mmol of silicon tetrachloride were simultaneously added.

### Synthesis Example 4-1

At room temperature, charged into a 15 L autoclave, which had been dried under vacuum, the ambient atmosphere of which had been replaced with nitrogen, were 887 g (9.42 mol) of norbornene, 777 ml of cyclohexane, 411.0 mg (3.60 mmol) of trimethyl aluminum, and 84.6 mg (0.56 mmol) of ethyl benzoate. Subsequently, while stirring, the pressure of ethylene was increased to 600 kPa and then released. This pressure increase and release operation was repeated three times. Thereafter, the pressure in the system was increased to 150 kPa with ethylene, and the temperature was raised to 80 °C. Subsequently, the inner pressure was increased to reach 600 kPa employing ethylene. After stirring for 15 minutes, copolymerization of ethylene and norbornene was initiated by adding 443.0 mg of Catalyst Component A, prepared in Titanium-Incorporating Solid Catalyst Component Preparation 1, into the system. During polymerization, the inner pressure was maintained at 600 kPa by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1 and then the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and polymers were precipitated. Thereafter, sufficient washing was carried out employing acetone, and a solid portion (being copolymers) was collected via filtration. Under a flow of nitrogen, drying was conducted at 130 °C and 47 kPa for 12 hours.

The yield of Ethylene-Norbornene Copolymer A-1, prepared as above, was 294 g. The number average molecular weight Mn, determined via GPC, was 86,300, Mw/Mn was 1.91, and the glass transition temperature (Tg) was 130 °C, while the norbornene content was 42.9 mol%.

### Synthesis Example 4-2

### Synthesis of Norbornene-1-Hexane Copolymer B-1: Present Invention

At room temperature, charged into a 15 L autoclave, which had been dried under vacuum, the ambient atmosphere of which had been replaced with nitrogen, were 887 g (9.42 mol) of norbornene, 1,178 ml of 1-hexane (9.42 mol), 777 ml of cyclohexane, 410.0 mg (3.59 mmol) of trimethyl aluminum, and 85.0 mg (0.56 mmol) of ethyl benzoate. Subsequently, while stirring, the pressure of nitrogen was increased to 600 kPa and then released. This pressure increase and release operation was repeated three times. Thereafter, the pressure of nitrogen in the system was increased to 150 kPa, and the temperature was raised to 100 °C. Subsequently, the inner pressure was increased to reach 600 kPa employing nitrogen. After stirring for 15 minutes, copolymerization of ethylene and norbornene was initiated by adding 443.0 mg of Catalyst Component A, prepared in Titanium-Incorporating Solid Catalyst Component Preparation 1. During polymerization, the inner pressure was maintained at 600 kPa by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1, and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and a solid portion (copolymers) was collected via filtration. Under a flow of nitrogen, drying was conducted at 130 °C and 47 kPa for 12 hours.

The yield of Norbornene·1-Hexane Copolymer B-1, prepared as above, was 285 g. The number average molecular weight Mn, determined via GPC, was 79,100 and Mw/Mn was 1.76, and the glass transition temperature (Tg) was 127 °C, while the norbornene content was 58.5 mol%.

### Comparative Synthesis Example 4-1

### Synthesis of Ethylene-Norbornene Copolymer C-1: Comparative Example

Synthesis was performed in the same manner as Synthesis Example 4-1, except that 442.6 g (9.33 mol) of Catalyst Component B, prepared in Titanium-Incorporating Solid Catalyst Component Preparation 4-2. The yield of Ethylene·Norbornene Copolymer C-1 was 311 g. The number average molecular weight Mn, determined via GPC, was 96,400 and Mw/Mn was 1.87, and the glass transition temperature (Tg) was 123 °C, while the norbornene content was 41.8 mol%. Synthesis Example 4-3

### Synthesis of copolymer in which the carbon-carbon double bond is hydrogenated: Present Invention

In a 25 L autoclave, 250.0 g of Copolymer Powder A-1 prepared in Synthesis Example 1 was dissolved in dried tetrahydrofuran (13.5 L), and a dried tetrahydrofuran solution (1.5 L) incorporating dichlorotris(triphenylphosphine)ruthenium (200 mg, 0.21 mmol) and trimethyl aluminum (125 mg, 1.06 mmol), previously prepared as a hydrogenation catalyst, was added, and hydrogenation was performed at a hydrogen pressure of 8.5 MPa and 165 °C for 5 hours. Thereafter, the temperature was lowered to room temperature and the hydrogen gas was released.

While stirring, the resulting ring-opening metathesis hydrogenated polymer incorporating solution was added to methanol (50 L), and Hydrogenated Polymer Product A-2 was precipitated. After collecting the precipitates via filtration, they were subjected to vacuum drying, whereby white powder Hydrogenated Polymer A-2 was prepared. Prepared Hydrogenated Polymer A-2 in which the carbon-carbon double bond was hydrogenated exhibited no peak assigned to the proton of the primary chain whereby the hydrogenation ratio based, on 1H-NMR, was 100%. The number average molecular weight Mn, determined via GPC, was 84,700 and Mw/Mn was 1.83, while the glass transition temperature, determined via DSC, was 127 °C.

### Synthesis Example 4-4

### Synthesis of a copolymer in which the carbon-carbon double bond is hydrogenated: Present Invention

White powder Hydrogenated Copolymer Product B-2, in which the carbon-carbon double bond was hydrogenated, was prepared in the same manner as Synthesis Example 4-3, except that powder Copolymer A-1, prepared in Synthesis Example 2, was replaced with white powder Hydrogenated Copolymer B-1, prepared in Synthesis Example 2.

Prepared Hydrogenated Polymer B-2, in which the carbon-carbon double bond was hydrogenated, exhibited no peak assigned to the proton of the primary chain whereby the hydrogenation ratio, based on 1H-NMR, was 100%. The number average molecular weight Mn, determined via GPC, was 81,300 and Mw/Mn was 1.65, while the glass transition temperature, determined via DSC, was 122 °C.

### Comparative Synthesis Example 4-2

### Synthesis of a copolymer in which the carbon-carbon double bond is hydrogenated: Comparative Example '

White powder Hydrogenated Copolymer Product C-2 was prepared in the same manner as Synthesis Example 4-3, except that powder Copolymer A-1, prepared in Synthesis Example 4-1, was replaced with white powder Copolymer C-1, prepared in Synthesis Example 4-1.

Prepared Hydrogenated Polymer C-2 exhibited no peak assigned to the proton of the primary chain, whereby the hydrogenation ratio, based on 1H-NMR, was 100%. The number - average molecular weight Mn, determined via GPC, was 94,700 and Mw/Mn was 1.77, while the glass transition temperature, determined via DSC, was 117 °C.

### Example 4-1

### (Preparation of Optical Resin Lenses)

### (Optical Resin Lens 4-1): Present Invention

Employing the POLY LABO SYSTEM (produced by EKO Instruments Co., Ltd.), 200 g of Ethylene-Norbornene Copolymer A-1, prepared in Synthesis Example 4-1, was kneaded under a nitrogen atmosphere at 190 °C for 10 minutes. Under the same conditions as above, 10 batches were kneaded and materials were produced and pulverized. The pulverized materials were subjected to injection molding at a clamping pressure of 50 t, a die temperature of 120 °C and an injection pressure of 69.0 MPa employing an in-line injection molding machine, whereby 20 lenses at a diameter of 1 cm were produced.

### (Optical Resin Lens 2): Present Invention

Twenty lenses at a diameter of 1 cm were produced in the same manner as for Optical Resin Lens 4-1, except that Norbornene-1-Hexane Copolymer B-1, prepared in Synthesis Example 4-2, was employed.

### (Optical Resin Lens 4-3): Comparative Example

Twenty lenses at a diameter of 1 cm were produced in the same manner as for Optical Resin Lens 4-1, except that Ethylene-Norbornene Copolymer C-1, prepared in Comparative Synthesis Example 4-1, was employed.

### (Durability Evaluation of Optical Resin Lenses)

Optical Resin Lenses 4-1 and 4-2 of the present invention, as well as Comparative Optical Resin Lens 4-3, prepared as above, were employed as an objective lens of the light pick-up device shown in Fig. 1. After continuous exposure to a 15 mW blue laser beam (at a wavelength of 405 nm) at 60 °C for 500 and 2,000 hours, the degree of cloudiness of each of the lenses after continuous exposure was visually observed and evaluated based on the following rankings. Table 10 shows the evaluation results.
A: no cloudiness was noted (rated as commercially viable)
B: slight cloudiness was noted (rated as commercially viable)
C: obvious cloudiness was noted (rated as commercially unviable)

**(Table 10)**

| Lens | 500 Hours | 2,000 Hours |
|---|---|---|
| Optical Resin Lens 4-1 (Present Invention) | A | B |
| Optical Resin Lens 4-2 (Present Invention) | A | A |
| Optical Resin Lens 4-3 (Comparative Example) | C | C |

As can clearly be seen from Table 10, the durability of Optical Resin Lenses 4-1 and 4-2 of the present invention was superior to that of Comparative Lens 4-3.

### Example 4-2

### (Preparation of Optical Resin Lenses)

### (Optical Resin Lens 4-4): Present Invention

Twenty lenses at a diameter of 1 cm were produced in the same manner as for Optical Resin Lens 4-1, except that Hydrogenated Copolymer A-2, prepared in Synthesis Example 4-3, was employed.

### (Optical Resin Lens 4-5): Present Invention

Twenty lenses at a diameter of 1 cm were produced in the same manner as for Optical Resin Lens 4-1, except that Hydrogenated Copolymer B-2, prepared in Synthesis Example 4-3, was employed.

### (Optical Resin Lens 4-6): Comparative Example

Twenty lenses at a diameter of 1 cm were produced in the same manner as for Optical Resin Lens 4-1, except that Hydrogenated Copolymer C-2, prepared in Comparative Synthesis Example 4-2, was employed.

### (Durability Evaluation of Optical Resin Lenses)

Optical Resin Lenses 4-4 and 4-5, as well as Comparative Resinous Lens 4-6, prepared as above, were evaluated in the same manner as Example 4-1. Table 11 shows the results.

**(Table 11)**

| Lens | 500 Hours | 2,000 Hours |
|---|---|---|
| Optical Resin Lens 4-1 (Present Invention) | A | B |
| Optical Resin Lens 4-2 (Present Invention) | A | A |
| Optical Resin Lens 4-3 (Comparative Example) | C | C |

As can clearly be seen from Table 11, the durability of Optical Resin Lenses 4-4 and 4-5 of the present invention was superior to that of Comparative Lens 4-6.

### Example 4-3

### (Preparation of Optical Resin Lenses)

### (Optical Resin Lens 4-7): Present Invention

Ethylene·Norbornene Copolymer A-1, which was prepared in Synthesis Example 4-1, was pulverized. The pulverized materials were subjected to injection molding at a clamping pressure of 50 t, a die temperature of 120 °C and an injection pressure of 67.0 MPa employing an in-line injection molding machine. During this injection molding, 0.5 g of IRGANOX 1010 (being a phenol based antioxidant, produced by Ciba Specialty Chemicals Co.) with respect to 100 g of the supplied resins was added, and 20 lenses at a diameter of 1 cm were produced.

### (Optical Resin Lens 4-8): Present Invention

Twenty lenses at a diameter of 1 cm were prepared in the same manner as Optical Resin Lens 4-7, except that Norbornene·1-Hexane Copolymer B-1, prepared in Synthetic Example 2, was employed.

### (Optical Resin Lens 4-9): Comparative Example

Twenty lenses at a diameter of 1 cm were prepared in the same manner as Optical Resin Lens 4-7, except that Ethylene·Norbornene Copolymer C-1, prepared in Comparative Synthetic Example 4-1, was employed.

### (Optical Resin Lens 4-10): Present Invention

Twenty lenses at a diameter of 1 cm were prepared in the same manner as Optical Resin Lens 4-7, except that Hydrogenated Copolymer A-2, prepared in Synthetic Example 4-3, was employed.

### (Optical Resin Lens 4-11): Present Invention

Twenty lenses at a diameter of 1 cm were prepared in the same manner as Optical Resin Lens 4-7, except that Hydrogenated Copolymer B-2, prepared in Synthetic Example 4-4, was employed.

### (Optical Resin Lens 4-12): Comparative Example

Twenty lenses at a diameter of 1 cm were produced in the same manner as for Optical Resin Lens 4-7, except that Hydrogenated Copolymer C-2, prepared in Comparative Synthesis Example 4-2, was employed.

### (Durability Evaluation of Optical Resin Lenses)

Optical Resin Lenses 4-7, 4-8, 4-10, and 4-11 of the present invention, as well as Comparative Resinous Lens 4-9 and 4-12, prepared as above, were evaluated in the same manner as Example 4-1. Table 12 shows the results.

**(Table 12)**

| Lens | 500 Hours | 2,000 Hours |
|---|---|---|
| Optical Resin Lens 4-7 (Present Invention) | A | A |
| Optical Resin Lens 4-8 (Present Invention) | A | A |
| Optical Resin Lens 4-9 (Comparative Example) | C | C |
| Optical Resin Lens 4-10 (Present Invention) | A | A |
| Optical Resin Lens 4-11 (Present Invention) | A | A |
| Optical Resin Lens 9-12 (Comparative Example) | C | C |

As can clearly be seen from Table 12, the durability of Optical Resin Lenses 4-7, 4-8, 4-10, and 4-11 of the present invention was superior to that of Comparative Lenses 4-9 and 4-12.

### Example 5

### (1) Preparation of a Magnesium Compound

Charged into a 500 ml four-necked flask, in which the atmosphere had been replaced with dried nitrogen, were 100 ml of toluene and a 3.5 mol/L n-butyl magnesium chloride di-n-butyl ether solution. Subsequently, while maintaining 25 °C, 6.5 ml (70 mmol) of i-butyl alcohol was dripped while stirring. The mol ratio of i-butyl alcohol/n-C₄H₉MgCl was 1.0. After completion of the addition, stirring was continued at 25 °C for one hour. The resulting reaction products were washed with 150 ml of heptane 5 times. Thereafter, heptane was distilled out under vacuum, and drying was conducted, whereby white Solid Powder (1) was obtained. The analysis result of the resultant solid showed that the composition was approximately i-C₄H₉OMgCl.

### (2) Preparation of Polysilanol Compounds

Charged into a 1,000 ml four-necked flask were 500 ml of heptane and 50 g (236 mmol) of phenylsilane trichloride. Subsequently, 100 ml of an aqueous 3.25 mol/L sodium hydroxide solution was dripped under vigorous stirring. After completion of the addition, stirring was continued at 20 °C for additional one hour. The resulting reaction products were washed three times with 100 ml of water. The content was collected via filtration and dried under vacuum, whereby 27.3 g of White Powder (2) was obtained. The content of the OH group was 10.1 mmol/g.

### (3) Titanium-Incorporating Catalyst Component Preparation 5-1

Charged into a 500 ml four-necked flask, in which the ambient atmosphere had been replaced with dried nitrogen were 100 ml of toluene, 9.39 g (70 mmol) of white Solid Powder (1) prepared in the above magnesium compound preparation, and 7.0 g (70 mmol in terms of OH group) of White Powder (2) prepared in the above polysilanol compound preparation. While stirring, the temperature was increased to 80 °C, and the reaction was performed for 1.5 hours at the above temperature. Subsequently, toluene was distilled out and a heating treatment was carried out under vacuum for one hour at 180 °C. Subsequently, 14 ml of a 0.5 mol/L ethyl benzoate toluene solution was charged and stirring was continued at 110 °C for one hour. Subsequently, toluene was distilled out under vacuum and drying was conducted, whereby white Solid Powder (3) was prepared.

Subsequently, charged was 154 ml (1.4 mol) of titanium tetrachloride. While stirring, the temperature was increased to 130 °C, and stirring was continued for 0.5 hour at the above temperature. The reaction products were washed with heptane until no presence of chlorine in the heptane effluent was detected, whereby pale yellowish brown Titanium-Incorporating Solid Catalyst Component (A) was prepared. The content of titanium was 2.3% by weight.

### (4) Titanium-Incorporating Catalyst Component Preparation 5-2

Catalyst Component (B), incorporating 2.2% by weight of titanium, was prepared in the same manner as above (3) Titanium-Incorporating Catalyst Component Preparation 5-1, except that no ethyl benzoate was employed.

### (5) Titanium-Incorporating Catalyst Component Preparation 5-3

Catalyst Component (C), incorporating 2.8% by weight of titanium, was prepared in the same manner as above (3) Titanium-Incorporating Catalyst Component Preparation 5-1, except that 35 ml of a ethyl benzoate toluene solution was added.

### (Synthesis Example 5-1) Ethylene-Norbornene Copolymer Synthesis (A-1); Present Invention

At room temperature, charged to a 15 L autoclave, which had been dried under vacuum, the ambient atmosphere of which had been replaced with nitrogen, were 887 g (9.42 mol) of norbornene, 777 ml of cyclohexane, and 173.9 mg (1.52 mmol) of trimethyl aluminum. Subsequently, while stirring, the pressure of ethylene was increased to 588 MPaG and then released. This pressure increase and release operation was repeated three times. Thereafter, the pressure in the system was increased to 0.147 MPaG with ethylene, and the temperature was raised to 80 °C. Subsequently, the inner pressure was increased to reach 0.588 MPaG employing ethylene. After stirring for 15 minutes, copolymerization of ethylene and norbornene was initiated by adding 317.1 mg (0.152 mmol) Catalyst Component A, prepared in "Titanium-Incorporating Solid Catalyst Component Preparation 1", into the system. The mol ratio of Al/Ti was 10. During polymerization, the inner pressure was maintained at 0.588 MPaG by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1, and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and polymers were precipitated. Thereafter, sufficient washing was carried out employing acetone, and a solid portion (being copolymers) was collected via filtration. Under a flow of nitrogen, drying was conducted at 130 °C and 4.67 x 10⁴ Pa for 12 hours.

The yield of Ethylene-Norbornene Copolymer A-1, prepared as above, was 280 g. The number average molecular weight Mn, determined via GPC, was 78,600, Mw/Mn was 1.78, and the glass transition temperature (Tg) was 132 °C, while the norbornene content was 45.3 mol%.

### (Synthesis Example 5-2) Synthesis of Norbornene-1-Hexane Copolymer B-1: Present Invention

At room temperature, charged into a 15 L autoclave, which had been dried under vacuum, the ambient atmosphere of which had been replaced with nitrogen, were 887 g (9.42 mol) of norbornene, 1,178 ml (9.42 mol) of 1-hexane, 777 ml of cyclohexane, and 173.9 mg (1.52 mmol) of triethyl aluminum. Subsequently, while stirring, the pressure of nitrogen was increased to 0.588 MPaG and then released. This pressure increase and release operation was repeated three times. Thereafter, the pressure of nitrogen in the system was increased to 0.147 MPaG, and the temperature was raised to 100 °C. Subsequently, the inner pressure was increased to reach 0.588 MPaG employing nitrogen. After stirring for 15 minutes, copolymerization of norbornene and 1-hexane was initiated by adding 317.1 mg (0.152 mmol) of Catalyst Component B, prepared in "Titanium-Incorporating Solid Catalyst Component Preparation 2", into the system. The mol ratio of Al/Ti was 10. During polymerization, the inner pressure was maintained at 0.588 MPaG by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1, and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and polymers were precipitated. Thereafter, sufficient washing was carried out employing acetone, and a solid portion (copolymers) was collected via filtration. Under a flow of nitrogen, drying was conducted at 130 °C and 67 x 10⁴ Pa for 12 hours.

The yield of Norbornene·1-Hexane Copolymer B-1, prepared as above, was 265 g. The number average molecular weight Mn, determined via GPC, was 64,300, Mw/Mn was 1.86, and the glass transition temperature (Tg) was 125 °C, while the norbornene content was 65.3 mol%.

### (Synthesis Example 5-3) Synthesis of Ethylene-Norbornene Copolymer C-1; Comparative Example

Synthesis was performed in the same manner as Synthesis Example 5-1, except that 317.1 mg (0.152 mmol) of Catalyst Component C, prepared in "Titanium-Incorporating Solid Catalyst Component Preparation 5-3". The yield of Ethylene·Norbornene Copolymer C-1 was 329 g. The number average molecular weight Mn, determined via GPC, was 96,400, Mw/Mn was 1.91, and the glass transition temperature (Tg) was 139 °C, while the norbornene content was 47.2 mol%.

### (Synthesis Example 5-4) Synthesis of a copolymer in which the carbon-carbon double bond is hydrogenated; Present Invention

In a 25 L autoclave, 250.0 g of Copolymer Powder A-1, prepared in Synthesis Example 1, was dissolved in dried tetrahydrofuran (13.5 L), and a dried tetrahydrofuran solution (1.5 L) incorporating dichlorotris(triphenylphosphine)ruthenium (200 mg, 0.21 mmol) and triethyl aluminum (125 mg, 1.06 mmol), previously prepared as a hydrogenation catalyst, was added, and hydrogenation was performed at a hydrogen pressure of 8.5 MPaG and 165 °C for 5 hours. Thereafter, the temperature was lowered to room temperature and the hydrogen gas was released.

While stirring, the resulting hydrogenated copolymer incorporating solution was added to methanol (50 L) to precipitate the above hydrogenated copolymer. After collecting the precipitates via filtration, the precipitates were subjected to vacuum drying, whereby white powder Hydrogenated Product A-2 was prepared. The prepared hydrogenated polymer exhibited no peak assigned to the proton of the primary chain whereby the calculated hydrogenation ratio, based on 1H-NMR, was 100%. The number average molecular weight Mn, determined via GPC, was 76,700, and Mw/Mn was 1.71, while the glass transition temperature, determined via DSC, was 129 °C.

### (Synthesis Example 5-5) Synthesis of a copolymer in which the carbon-carbon double bond is hydrogenated; Present Invention

White Powder Hydrogenated Copolymer Product B-2 was prepared in the same manner as Synthesis Example 5-4, except that powder Copolymer A-1, prepared in Synthesis Example 5-1, was replaced with powder Copolymer B-1, prepared in Synthesis Example 5-2.

The prepared hydrogenated polymer exhibited no peak assigned to the proton of the primary chain, whereby the calculated hydrogenation ratio, based on 1H-NMR, was 100%. The number average molecular weight Mn, determined via GPC, was 62,800 and Mw/Mn was 1.78, while the glass transition temperature, determined via DSC, was 122 °C.

### (Synthesis Example 5-6) Synthesis of Copolymer; Comparative Example

White Powder Hydrogenated Copolymer C-2 was prepared in the same manner as Synthesis Example 5-4, except that powder Copolymer A-1, prepared in Synthesis Example 5-1, was replaced with powder Copolymer C-1, prepared in Synthesis Example 5-3.

The prepared hydrogenated polymer exhibited no peak assigned to the proton of the primary chain, whereby the calculated hydrogenation ratio, based on 1H-NMR, was 100%. The number average molecular weight Mn, determined via GPC, was 94,400 and Mw/Mn was 1.87, while the glass transition temperature, determined via DSC, was 136 °C.

### Example 5-1

### <<Preparation of Optical Resin Lens 5-1>>: Present Invention

Employing the POLY LABO SYSTEM (produced by EKO Instruments Co., Ltd.), 200 g of Ethylene-Norbornene Copolymer A-1, prepared in Synthesis Example 5-1, was kneaded under a nitrogen atmosphere at 190 °C for 10 minutes. Under the same conditions as above, 10 batches were kneaded and materials were produced and pulverized. The pulverized materials were subjected to injection molding at a clamping pressure of 50 t, a die temperature of 120 °C and an injection pressure of 69.0 MPa employing an in-line injection molding machine, whereby 20 lenses at a diameter of 1 cm were produced.

### <<Preparation of Optical Resin Lens 5-2>>: Present Invention

Twenty lenses at a diameter of 1 cm were produced in the same manner as for Optical Resin Lens 5-1, except that Norbornene-1-Hexane Copolymer B-1, prepared in Synthesis Example 5-2, was employed.

### <<Optical Resin Lens 5-3>>: Comparative Example

Twenty lenses at a diameter of 1 cm were produced in the same manner as for Optical Resin Lens 5-1, except that Ethylene-Norbornene Copolymer C-1, prepared in Synthesis Example 5-3, was employed.

### <<Durability Evaluation of Optical Resin Lenses>>

It is possible to visually evaluate optical anisotropy. Each of Optical Resin Lenses 5-1 and 5-2 of the present invention, as well as Comparative Optical Resin Lens 5-3, prepared as above, was employed as an objective lens of the light pick-up device shown in Fig. 1. After continuous exposure at 60 °C to a 15 mW blue laser beam (at a wavelength of 405 nm) for 500 and 2,000 hours, the degree of cloudiness of each of the lenses after continuous exposure was visually observed and evaluated based on the following rankings. Table 13 shows the evaluation results.

**(Table 13)**

| Lens | 500 Hours | 2,000 Hours |
|---|---|---|
| Optical Resin Lens 5-1 (Present Invention) | A | B |
| Optical Resin Lens 5-2 (Present Invention) | A | A |
| Optical Resin Lens 5-3 (Comparative Example) | C | C |

| | | |
|---|---|---|
| A: no cloudiness was noted (rated as commercially viable) B: slight cloudiness was noted (rated as commercially viable) C: obvious cloudiness was noted (rated as commercially unviable) | | |

As can clearly be seen from Table 13, the durability of Optical Resin Lenses 5-1 and 5-2 of the present invention was superior to that of Comparative Lens 5-3.

### Example 5-2

### <<Preparation of Optical Resin Lens 5-4>>

Twenty lenses at a diameter of 1 cm were produced in the same manner as for Optical Resin Lens 5-4, except that Hydrogenated Copolymer A-2, prepared in Synthesis Example 5-4, was employed.

### <<Preparation of Optical Resin Lens 5-5): Present Invention

Twenty lenses at a diameter of 1 cm were produced in the same manner as for Optical Resin Lens 5-4, except that Hydrogenated Copolymer B-2, prepared in Synthesis Example 5-5, was employed.

### <<Preparation of Optical Resin Lens 5-6>>: Comparative Example

Twenty lenses at a diameter of 1 cm were produced in the same manner as for Optical Resin Lens 5-4, except that Hydrogenated Copolymer C-2, prepared in Synthesis Example 5-6, was employed.

### <<Durability Evaluation of Optical Resin Lenses>>

It is possible to visually evaluate optical anisotropy. Each of Optical Resin Lenses 5-4 and 5-5 of the present invention, as well as Comparative Optical Resin Lens 5-6, prepared as above, was employed as an objective lens of the light pick-up device shown in Fig. 1. After continuous exposure at 60 °C to a 15 mW blue laser beam (at a wavelength of 405 nm) for 500 and 2,000 hours, the degree of cloudiness of each of the lenses after continuous exposure was visually observed and evaluated based on the following rankings. Table 14 shows the evaluation results.

**(Table 14)**

| Lens | 500 Hours | 2,000 Hours |
|---|---|---|
| Optical Resin Lens 5-4 (Present Invention) | A | B |
| Optical Resin Lens 5-5 (Present Invention) | A | A |
| Optical Resin Lens 5-6 (Comparative Example) | C | C |

| | | |
|---|---|---|
| A: no cloudiness was noted (rated as commercially viable) B: slight cloudiness was noted (rated as commercially viable) C: obvious cloudiness was noted (rated as commercially unviable) | | |

As can clearly be seen from Table 14, the durability of Optical Resin Lenses 5-4 and 5-5 of the present invention was superior to that of Comparative Lens 5-6.

### Example 5-3

### <<Preparation of Optical Resin Lens 5-7>>: Present Invention

Ethylene·Norbornene Copolymer A-1, which was prepared in Synthesis Example 5-1, was pulverized in the same manner as for the preparation of Optical Resin Lens 5-1 in Example 5-1. The pulverized materials were subjected to injection molding at a clamping pressure of 50 t, a die temperature of 120 °C and an injection pressure of 67.0 MPa employing an in-line injection molding machine. During this injection molding, 0.5 g of IRGANOX 1010 (being a phenol based antioxidant, produced by Ciba Specialty Chemicals Co.) with respect to 100 g of the supplied resins was added, and 20 lenses at a diameter of 1 cm were produced.

Employing the same method, Optical Resin Lenses 5-8 (Present Invention) and 5-9 (Comparative Example) were prepared employing each of Norbornene-1-Hexane Copolymer B-1 prepared in Synthesis Example 5-2 and Ethylene-Norbornene Copolymer C-1, prepared in Synthesis Example 5-3.

Further, Optical Resin Lenses 5-10 (Present Invention), 5-11 (Present Invention), and 5-12 (Comparative Example) were prepared in the same manner as Optical Resin Lens 5-7 employing: Hydrogenated Copolymer A-2, prepared in Synthesis Example 5-4; Hydrogenated Copolymer B-2, prepared in Synthesis Example 5; and Hydrogenated Copolymer C-2, prepared in Synthesis Example 5-6.

### <<Durability Evaluation of Lenses>>

It is possible to visually evaluate optical anisotropy. Each of Optical Lenses 5-7, and 5-8 of the present invention, and 5-9 of the comparative example, prepared as above, was evaluated in the same manner as for Example 5-1 and the degree of cloudiness was visually observed and evaluated based on the following rankings. Table 15 shows the results.

**(Table 15)**

| Lens | 500 Hours | 2,000 Hours |
|---|---|---|
| Optical Resin Lens 5-7 (Present Invention) | A | A |
| Optical Resin Lens 5-8 (Present Invention) | A | A |
| Optical Resin Lens 5-9 (Comparative Example) | C | C |
| Optical Resin Lens 5-10 (Present Invention) | A | A |
| Optical Resin Lens 5-11 (Present Invention) | A | A |
| Optical Resin Lens 5-12 (Comparative Example) | C | C |

| | | |
|---|---|---|
| A: no cloudiness was noted (rated as commercially viable) B: obvious cloudiness was noted (rated as commercially unviable) | | |

As can clearly be seen from Table 15, the durability of Optical Resin Lenses 5-7, 5-8, and 5-10 of the present invention was superior to that of Comparative Lenses 5-9 and 5-12.

### Example 6

### (Synthesis Example of Titanium-Incorporating Solid Catalyst Component)

### (Titanium-Incorporating Solid Catalyst Component Preparation 6-1: Present Invention)

Charged into a 500 ml flask, in which the atmosphere had been replaced with dried nitrogen, were 40 mmol of diphenylsilanediol and toluene. Subsequently, 25 ml of a 3.2 mmol/ml n-butyl magnesium chloride n-butyl ether solution was added at 25 °C while vigorously stirred. After completion of the addition, stirring was conducted at 25 °C for an additional hour. Subsequently, the temperature was raised to 70 °C and stirring was continued for an additional hour. After cooling to 25 °C, while vigorously stirring, 6 ml of a 1.0 mmol/ml ethyl bonzoate toluene solution was added. After completion of the addition, the temperature was raised to 110 °C, and stirring was continued for 1.5 hours. Added to the resulting white powder was 800 mmol of titanium tetrachloride and the temperature was raised to 130 °C. During the increase in temperature, black brown viscous products in a semi-melt state were formed. At 130 °C, stirring was conducted for 0.5 hour, and subsequently, 200 ml of n-heptane was added, whereby a large amount of precipitates were formed. The supernatant was separated, and the precipitates were washed with 200 ml of heptane 5 times, whereby pale yellow-brown Titanium-Incorporating Solid Catalyst Component A was prepared. The titanium content of the prepared Titanium-Incorporating Solid Catalyst Component A was 5.2 % by weight.

### (Titanium-Incorporating Solid Catalyst Component Preparation 6-2: Comparative Example)

Titanium-Incorporating Solid Catalyst Component C at a titanium content of 5.0% by weight was prepared in the same manner as above Titanium-Incorporating Solid Catalyst Component Preparation 6-1, except that 20 ml of a toluene ethyl benzoate solution was added.

### (Synthesis of Copolymers and Hydrogenated Products)

### (Synthesis Example 6-1: Synthesis of Ethylene·Norbornene Copolymer A-1 (Present Invention))

At room temperature, charged into a 15 L autoclave, which had been dried under vacuum, the ambient atmosphere of which had been replaced with nitrogen, were 887 g (9.42 mol) of norbornene, 777 ml of cyclohexane, and 220.4 mg (1.93 mmol) of trimethyl aluminum. Subsequently, while stirring, the pressure of ethylene was increased to 588 kPa and then released. This pressure increase and release operation was repeated three times. Thereafter, the pressure in the system was increased to 147 kPa with ethylene, and the temperature was raised to 80 °C. Subsequently, the inner pressure was increased to reach 588 kPa employing ethylene. After stirring for 15 minutes, copolymerization of ethylene and norbornene was initiated by adding 344.5 mg of Titanium-Incorporating Solid Catalyst A, prepared in Titanium-Incorporating Solid Catalyst Component Preparation 1 into the system. During polymerization, the inner pressure was maintained at 688 kPa by continuously feeding ethylene. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1, and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and copolymers were precipitated. Thereafter, sufficient washing was carried out employing acetone, and a solid portion (being copolymers) was collected via filtration. Under a flow of nitrogen, drying was conducted at 130 °C and 350 mmHg for 12 hours.

The yield of Ethylene-Norbornene Copolymer A-1, prepared as above, was 273 g. The number average molecular weight Mn, determined via GPC, was 105,100, Mw/Mn was 1.79, and the glass transition temperature (Tg) was 131 °C, while the norbornene content was 45.3 mol%.

### (Synthesis Example 6-2: Synthesis of Norbornene-1-Hexane Copolymer B-1 (Present Invention))

At room temperature, charged into a 15 L autoclave, which had been dried under vacuum, the ambient atmosphere of which had been replaced with nitrogen, were 887 g (9.42 mol) of norbornene, 1,178 ml (9.42 mol) of 1-hexane, 777 ml of cyclohexane, and 220.9 mg (1.93 mmol) of triethyl aluminum. Subsequently, while stirring, the pressure of nitrogen was increased to 588 kPa and then released. This pressure increase and release operation was repeated three times. Thereafter, the pressure of nitrogen in the system was increased to 147 kPa, and the temperature was raised to 100 °C. Subsequently, the inner pressure was increased to reach 588 kPa employing nitrogen. After stirring for 15 minutes, copolymerization of norbornene and 1-hexane was initiated by adding 350.0 mg of Titanium-Incorporating Solid Catalyst Component B, prepared in Titanium-Incorporating Solid Catalyst Component Preparation 2 into the system. During polymerization, the inner pressure was maintained at 588 kPa by continuously feeding nitrogen. After 60 minutes, the polymerization reaction was terminated by the addition of isopropyl alcohol. After lowering the pressure, the polymer solution was removed and washed with an aqueous solution prepared by adding 5 ml of concentrated hydrochloric acid to 1 L of water at an amount ratio of 1 : 1, and the residual catalyst was transferred to the water phase. After allowing the catalyst mixing solution to stand, the water phase was separated and removed, and washed twice with distilled water, whereby the polymerization liquid phase was subjected to oil water separation. Subsequently, the polymerization liquid phase, which had been subjected to oil water separation, was brought into contact with acetone at a volume factor of 3 under vigorous stirring, and polymers were precipitated. Thereafter, washing was sufficiently carried out employing acetone, and a solid portion (being copolymers) was collected via filtration. Under a flow of nitrogen, drying was conducted at 130 °C and 350 mmHg for 12 hours.

The yield of Norbornene-1-Hexane Copolymer B-1, prepared as above, was 266 g. The number average molecular weight Mn, determined via GPC, was 83,900, Mw/Mn was 1.94, and the glass transition temperature (Tg) was 124 °C, while the norbornene content was 60.2 mol%.

### (Synthesis Example 6-3: Synthesis of Ethylene-Norbornene Copolymer C-1 (Comparative Example))

Ethylene-Norbornene Copolymer C-1 was prepared in the same manner as above Synthesis Example 6-1, except that 221.3 mg (1.94 mmol) of Titanium-Incorporating Solid Catalyst Component A, prepared in Titanium-Incorporating Solid Catalyst Component Preparation 6-1, was added to the system. The yield of Ethylene·Norbornene Copolymer C-1 was 296 g. The number average molecular weight Mn, determined via GPC, was 112,400, Mw/Mn was 1.84, and the glass transition temperature (Tg) was 134 °C, whiule the norbornene content was 48.6 mol%.

### Synthesis Example 6-4: Synthesis of Copolymer A-2 in which the carbon-carbon double bond is hydrogenated (Present Invention))

In a 25 L autoclave, 250.0 g of Ethylene.Norbornene Copolymer Powder A-1, prepared in above Synthesis Example 1, was dissolved in dried tetrahydrofuran (13.5 L), and a dried tetrahydrofuran solution (1.5 L) incorporating dichlorotris(triphenylphosphine)ruthenium (200 mg, 0.21 mmol) and trimethyl aluminum (125 mg, 1.06 mmol), previously prepared as a hydrogenation catalyst, was added, and hydrogenation was performed at a hydrogen pressure of 8.5 MPa and 165 °C for 5 hours. Thereafter, the temperature was lowered to room temperature and the hydrogen gas was released.

While stirring, the resulting hydrogenated copolymer incorporating solution was added to methanol (50 L) to precipitate the above hydrogenated copolymer. After collecting the precipitates via filtration, the precipitates were subjected to vacuum drying, whereby white powder Hydrogenated Copolymer A-2, in which the carbon-carbon double bond was hydrogenated, was prepared. Prepared Hydrogenated Copolymer A-2, in which the double bond was hydrogenated, exhibited no peak assigned to the proton of the primary chain whereby the calculated hydrogenation ratio based on 1H-NMR was 100%. The number average molecular weight Mn, determined via GPC, was 98,700, and Mw/Mn was 1.69, while the glass transition temperature, determined via DSC, was 128 °C.

### (Synthesis Example 6-5: Synthesis of Copolymer B-2 in which the carbon-carbon double bond is hydrogenated (Present Invention))

White powder Hydrogenated Copolymer Product B-2 was prepared in the same manner as above Synthesis Example 6-4, except that Ethylene-Norbornene Copolymer A-1, prepared in above Synthesis Example 6-1, was replaced with Norbornene-1-Hexane Copolymer B-1, prepared in Synthesis Example 6-2.

The prepared Hydrogenated Copolymer B-2, in which the carbon-carbon double bond was hydrogenated, exhibited no peak assigned to the proton of the primary chain, whereby the calculated hydrogenation ratio, based on 1H-NMR, was 100%. The number average molecular weight Mn, determined via GPC, was 82,500, and Mw/Mn was 1.83, while the glass transition temperature, determined via DSC, was 119 °C.

### (Synthesis Example 6-6: Synthesis of Copolymer C-2 in which the carbon-carbon double bond is hydrogenated (Comparative Example))

White powder Copolymer Product C-2, in which the carbon-carbon double bond was hydrogenated, was prepared in the same manner as above Synthesis Example 6-4, except that Ethylene·Norbornene Copolymer A-1, prepared in Synthesis Example 6-1, was replaced with Ethylene-Norbornenel Copolymer C-1, prepared in Synthesis Example 6-3.

The prepared Hydrogenated Copolymer C-2, in which the carbon-carbon double bond was hydrogenated, exhibited no peak assigned to the proton of the primary chain, whereby the calculated hydrogenation ratio, based on 1H-NMR, was 100%. The number average molecular weight Mn, determined via GPC, was 103,700, and Mw/Mn was 1.71, while the glass transition temperature, determined via DSC, was 124 °C.

### Example 6-1

### (Preparation of Optical Resin Lens 6-1: Present Invention)

Employing the POLY LABO SYSTEM (produced by EKO Seiki Co., Ltd.), 200 g of Ethylene-Norbornene Copolymer A-1, prepared in Synthesis Example 6-1, was kneaded under a nitrogen atmosphere at 190 °C for 10 minutes. Under the same conditions as above, 10 batches were kneaded and materials were produced and pulverized. The pulverized materials were subjected to injection molding at a clamping pressure of 490 kN, a die temperature of 120 °C, and an injection pressure of 69.0 MPa employing an in-line injection molding machine, whereby 20 lenses at a diameter of 1 cm were produced. (Preparation of Optical Resin Lens 6-2: Present Invention

Twenty lenses at a diameter of 1 cm were produced in the same manner as for above Optical Resin Lens 6-1, except that Ethylene·Norbornene Copolymer A-1 was replaced with Norbornene·1-Hexane Copolymer B, prepared in Synthesis Example 6-2.

### (Optical Resin Lens 6-3: Comparative Example)

Twenty lenses at a diameter of 1 cm were produced in the same manner as for Optical Resin Lens 6-1, except that Ethylene·Norbornene Copolymer A-1 was replaced with Ethylene·Norbornene Copolymer C-1, prepared in Synthesis Example 6-3.

### <<Durability Evaluation of Optical Resin Lenses>>

Each of Optical Resin Lenses 6-1 - 6-3, prepared as above, was employed as an objective lens of the light pick-up device shown in Fig. 1. After continuous exposure at 60 °C to a 15 mW blue laser beam (at a wavelength of 405 nm) for 500 and 2,000 hours, the degree of cloudiness of each of the lenses after continuous exposure was visually observed and evaluated based on the following rankings.
A: no cloudiness was noted, being rated as commercially viable
B: slight cloudiness was noted, being rated as commercially viable
C: obvious cloudiness was noted being rated as commercially unviable

Table 16 shows the results.

**(Table 16)**

| Lens | 500 Hours | 2,000 Hours |
|---|---|---|
| Optical Resin Lens 6-1 (Present Invention) | A | B |
| Optical Resin Lens 6-2 (Present Invention) | A | A |
| Optical Resin Lens 3-3 (Comparative Example) | C | C |

As can clearly be seen from Table 16, the durability of Optical Resin Lenses 6-1 and 6-2 of the present invention was superior to that of Comparative Lens 6-3.

### Example 6-2

### <<Preparation of Optical Resin Lenses>>

### (Optical Resin Lens 6-4: Present Invention)

Twenty lenses at a diameter of 1 cm were prepared in the same manner as for Optical Resin Lens 6-1, except that Ethylene-Norbornene A-1 was replaced with Copolymer A-2, prepared in above Synthesis Example 6-4, in which the carbon-carbon double bond was hydrogenated.

### (Preparation of Optical Resin Lens 6-5: Present Invention)

Twenty lenses at a diameter of 1 cm were produced in the same manner as for above Optical Resin Lens 6-4, except that Copolymer A-2, in which the carbon-carbon double bond was hydrogenated, was replaced with Copolymer B-2, in which the carbon-carbon double bond was hydrogenated, prepared in above Synthesis Example 6-5.

### (Preparation of Optical Resin Lens 6-6: Comparative Example)

Twenty lenses at a diameter of 1 cm were produced in the same manner as for above Optical Resin Lens 6-4, except that Copolymer A-2, in which the carbon-carbon double bond was hydrogenated was replaced with Copolymer C-2 in which the carbon-carbon double bond was hydrogenated, prepared in above Synthesis Example 6-6.

### <<Durability Evaluation of Optical Resin Lenses>>

Each of Optical Resin Lenses 6-4 - 6-6, prepared as above, was evaluated for durability in the same manner as Example 6-1. Table 17 shows the results.

**(Table 17)**

| Lens | 500 Hours | 2,000 Hours |
|---|---|---|
| Optical Resin Lens 6-4 (Present Invention) | A | B |
| Optical Resin Lens 6-5 (Present Invention) | A | A |
| Optical Resin Lens 6-6 (Comparative Example) | C | C |

As can clearly be seen from Table 17, the durability of Optical Resin Lenses 6-4 and 6-5 of the present invention was superior to that of Comparative Lens 6-6.

### Example 6-3

### <<Preparation of Optical Resin Lenses>>

### (Preparation of Optical Resin Lens 6-7)

Ethylene·Norbornene Copolymer A-1, which was prepared in Synthesis Example 6-1, was pulverized in the same manner as for the preparation of Optical Resin Lens 6-1 in Example 1-1. The pulverized materials were subjected to injection molding at a clamping pressure of 490 kN, a die temperature of 120 °C and an injection pressure of 67.0 MPa employing an in-line injection molding machine. During this injection molding, 0.5 g of IRGANOX 1010 (being a phenol based antioxidant, produced by Ciba Specialty Chemicals Co.) with respect to 100 g of the supplied resins was added, and 20 pieces of Optical Resin Lens 6-7 at a diameter of 1 cm were produced.

### (Preparation of Optical Resin Lenses 6-8 - 6-12)

Optical Resin Lenses 6-8 - 6-12 were prepared in the same manner as above Optical Resin Lens 6-7, except that Ethylene·Norbornene Copolymer A-1 was replaced with each of Norbornene·1-Hexane Copolymer B-1, Ethylene·Norbornene Copolymer C-1, Copolymer A-2 in which the carbon-carbon double bond was hydrogenated, prepared in Synthesis Example 6-4, Copolymer B-2 in which the carbon-carbon double bond was hydrogenated, prepared in Synthesis Example 6-5, and Copolymer C-2 in which the carbon-carbon double bond was hydrogenated, prepared in Synthesis Example 6-6.

### (Durability Evaluation of Optical Resin Lenses)

Each of Optical Resin Lenses 6-7 - 6-12, prepared as above, was evaluated for durability in the same manner as Example 6-1. Table 18 shows the results.

**(Table 18)**

| Lens | 500 Hours | 2,000 Hours |
|---|---|---|
| Optical Resin Lens 6-7 (Present Invention) | A | A |
| Optical Resin Lens 6-8 (Present Invention) | A | A |
| Optical Resin Lens 6-9 (Comparative Example) | C | C |
| Optical Resin Lens 6-10 (Present Invention) | A | A |
| Optical Resin Lens 6-11 (Present Invention) | A | A |
| Optical Resin Lens 6-12 (Comparative Example) | C | C |

As can clearly be seen from the results in Table 18, the durability of Optical Resin Lenses 6-7, 6-8, 6-10, and 6-11 of the present invention was superior to that of Comparative Lenses 6-9 and 6-12.

### APPLICABILITY IN INDUSTRY

According to the present invention, it is possible to provide a highly durable optical resin lens which results in no degradation of optical characteristics even under conditions of exposure to laser beams or other radiation for an extended period of time, and to provide a production method of optical resin materials.

## Claims

1. An optical resin lens comprising a polymer which is prepared via a production method including a process which polymerizes olefin in the presence of a catalyst comprised of titanium halide and the organic aluminum represented by Formula RₙAlX₃₋ₙ (wherein 1 < n ≤ 2, R represents a hydrocarbon group, and X represents a halogen atom).

2. An Optical Resin Lens comprising a polymer which is prepared via a production method including a process which polymerizes olefin employing a catalyst comprised of titanium halide and the organic aluminum represented by Formula RₙAlX₃₋ₙ (wherein 1 < n ≤ 2, R represents a hydrocarbon group, and X represents a halogen atom) and a process which hydrogenates said polyolefin.

3. An optical resin lens comprising a polymer which is prepared via a production method including a process which polymerizes olefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended and pulverized, and B) an organic aluminum compound. 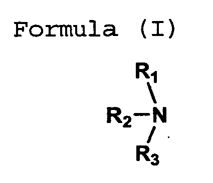 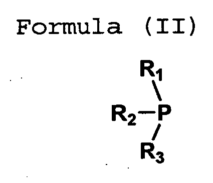 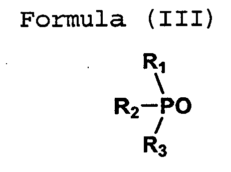 In above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂, and R₃ may be combined to form a ring.

4. An optical resin lens comprising a polymer which is prepared via a production method including a process which polymerizes olefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended and pulverized, and B) an organic aluminum compound, and a process which hydrogenates said polyolefin. 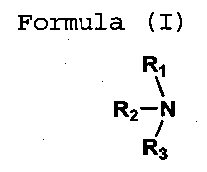 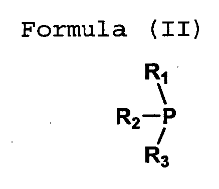 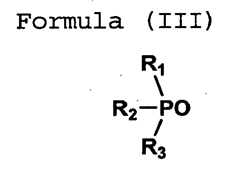 In above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂, and R₃ may be combined to form a ring.

5. An optical resin lens comprising a polymer which is prepared via a production method including a process which polymerizes olefin, in a catalyst system comprising (a) an organic aluminum compound, (b) a reaction product of a magnesium compound with titanium halide, and (c) a Lewis base, employing, as such a Lewis base, an aromatic carboxylic acid ester (0 ≤ (c)/(a) < 1/3 (mol/mol) of alcohol having a secondary or tertiary carbon.

6. An optical resin lens comprising a polymer which is prepared via a production method including a process which prepares polyolefin via polymerizing olefin, in a catalyst system comprising (a) an organic aluminum compound, (b) a reaction product of a magnesium compound with titanium halide, and (c) a Lewis base, employing, as such a Lewis base, an aromatic carboxylic acid ester (0 ≤ (c)/(a) < 1/3 (mol/mol) of alcohol having a secondary or tertiary carbon, and a process which hydrogenates said polyolefin.

7. An optical resin lens comprising a polymer which is prepared via a production method comprising a process which polymerizes olefin, employing a catalyst system comprising A) a titanium-incorporating solid catalyst component which is prepared via a contact reaction of (a) an organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ (wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), and (c) titanium halide, and B) an organic aluminum compound.

8. An optical resin lens comprising a polymer which is prepared via a production method including a process to prepare polyolefin by polymerizing olefin, employing a catalyst system comprising A) a titanium-incorporating solid catalyst component which is prepared via a contact reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ (wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), and (c) titanium halide, and B) an organic aluminum compound, and a process which hydrogenates said polyolefin.

9. An optical resin lens comprising a polymer which is prepared via a production method including a process which polymerizes olefin, employing a catalyst system comprising A) a titanium-incorporating solid catalyst component which is prepared via the contact of (a) at least one of the silanol or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2), (c) at least one of titanium halides, and d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) an organic aluminum compound.

10. An optical resin lens comprising a polymer which is prepared via a production method including a process which polymerizes olefin to prepare polyolefin, employing a catalyst system comprising A) a titanium-incorporating solid catalyst component which is prepared via the contact of (a) at least one of the silanol or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) organic aluminum compound, and a process which hydrogenates said polyolefin.

11. An optical resin lens comprising a polymer which is prepared via a production method including a process which polymerizes olefin, employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) an organic aluminum compound

12. An optical resin lens comprising a polymer which is prepared via a production method comprising a process which polymerizes olefin to prepare polyolefin, employing a catalyst system comprising A) a titanium- incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0'.1 (mol/mol), and B) organic aluminum compound, and B) an organic aluminum compound, and a process which hydrogenates said polyolefin.

13. The optical resin lens described in any one of claims 1 - 12, wherein said olefin comprises a cyclic olefin.

14. The optical resin lens described in claim 13, wherein said olefin comprises a cyclic olefin and a non-cyclic olefin.

15. The optical resin lens described in any one of claims 1 - 14, wherein said olefin comprises a plasticizer or an antioxidant.

16. The optical resin lens described in any one of claims 1 - 15, which is employed in a pick-up device employing at least a blue laser beam.

17. A production method of an optical resin material including a process to polymerize olefin employing a catalyst comprised of titanium halide and the organic aluminum represented by Formula RₙAlX₃₋ₙ (wherein 1 < n ≤ 2, R represents a hydrocarbon group, and X represents a halogen, atom) .

18. A production method of an optical resin material, which includes a process to polymerize olefin to prepare polyolefin employing a catalyst comprised of titanium halide and the organic aluminum represented by Formula RₙAlX₃₋ₙ (wherein 1 < n ≤ 2, R represents a hydrocarbon group, and X represents a halogen atom).

19. A production method of an optical resin material including a process to polymerize olefin employing a catalyst comprised of a mixture of A) a solid powder material which is prepared in such a way that the entire compound, which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound, is fed, blended and pulverized, and B) an organic aluminums compound. 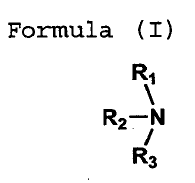 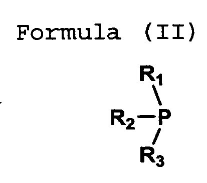 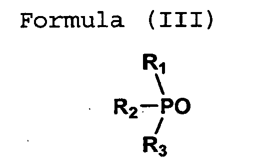 In the above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂ and R₃ may be combined to form a ring.

20. A production method of an optical resin material including a process to polymerize olefin to prepare polyolefin employing a catalyst comprised of a mixture of A) a solid powder material which is prepared in such a way that the entire compound which is prepared by allowing (a) a low valence eutectic which is prepared by reducing titanium halide or a mixture of titanium halide and vanadium halide to contact with (b) at least one selected from the compounds represented by the following Formulas (I) - (III), or at least one selected from the compounds represented by the following Formulas (I) - (III) and an organic aluminum compound is fed, blended, and pulverized, and B) an organic aluminum compound, and a process which hydrogenates said polyolefin. 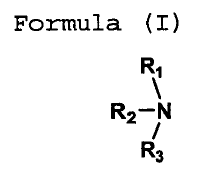 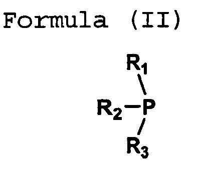 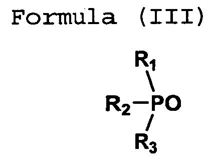 In the above Formulas (I) - (III), R₁, R₂, and R₃ each represents a hydrogen atom, a hydrocarbon group, an alkoxy group, an amino group, a substituted amino group, an aminoalkyl group, or a substituted aminoalkyl group, and each of R₁ or R₂ and R₃ may be combined to form a ring.

21. A production method of an optical resin material including a process to polymerize olefin in a catalyst system comprising (a) an organic aluminum compound, (b) a reaction product of a magnesium compound with titanium halide, and (c) a Lewis base, employing an aromatic carboxylic acid ester (0 ≤ (c) / (a) < 1/3 (mol/mol) of alcohol having a secondary or tertiary carbon as said Lewis base.

22. A production method of an optical resin material including a process to polymerize olefin to prepare polyolefin employing, in a catalyst system comprising (a) an organic aluminum compound, (b) a reaction product of a magnesium compound with titanium halide, and (c) a Lewis base, an aromatic carboxylic acid ester (0 ≤ (c)/(a) < 1/3 (mol/mol) of alcohol having a secondary or tertiary carbon, as such a Lewis base, and a process which hydrogenates said polyolefin.

23. A production method of an optical resin material including a process to polymerize olefin employing a catalyst system comprising A) a titanium-incorporating solid catalyst component which is prepared via a contact reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), (c) a titanium halide, as well as B) an organic aluminum compound.

24. A production method of an optical resin material including a process to polymerize olefin to prepare polyolefin employing a catalyst system comprising A) a titanium-incorporating solid catalyst component which is prepared via a catalytic reaction of (a) the organic magnesium compound represented by Formula R₁MgOR₂ (wherein R₁ and R₂ each represents an aliphatic or aromatic hydrocarbon group, and may be the same or different), (b) the halide represented by Formula R₃₍ₙ₋ₘ₎MXₘ wherein M represents an element in Group 3B, 4B, or 5B in the periodic table, R₃ represents an aliphatic or aromatic hydrocarbon group, and X represents a halogen atom, while n represents the valence of M, and m represents an integer of at least 1), (c) a titanium halide, as well as B) an organic aluminum compound, and a process which hydrogenates said polyolefin.

25. A production method of an optical resin material including a process to polymerize olefin employing a catalyst system comprising A) a titanium-incorporating solid catalyst component which is prepared via the contact of (a) at least one of the silanol compounds or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) an organic aluminum compound.

26. A production method of an optical resin material comprising a process to polymerize olefin to prepare polyolefin employing a catalyst system comprising A) a titanium-incorporating solid catalyst component which is prepared via the contact of (a) at least one of the silanol compounds or polysilanol compounds, (b) at least one of the compounds represented by Formula Mg(OR)ₙX₂₋ₙ (wherein R represents a hydrocarbon group having 1 - 20 carbon atoms, X represents a halogen atom, and n represents an integer of 0 < n ≤ 2, (c) at least one of titanium halides, and (d) at least one electron-donating compound selected from amine, carboxylic acid amide, phosphine, phosphoric acid ester, phosphoric acid amide, ketone, and carboxylic acid ester under the relationship of 0 ≤ (d)/(b) < 0.2 (mol/mol), and B) an organic aluminum compound, and a process which hydrogenates said polyolefin.

27. A production method of an optical resin material including a process to polymerize olefin employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) an organic aluminum compound.

28. A production method of an optical resin material comprising a process to polymerize olefin to prepare polyolefin employing a catalyst system comprising A) a titanium-incorporating solid catalyst component which is prepared via the contact of (a) at least one of the silanol compounds, (b) at least one of the Grignard compounds, (c) at least one of titanium halides, and (d) at least one electron-donating compound selected from amine, carboxylic acid amide, phosphine, phosphoric acid ester, phosphoric acid amide, ketone, and carboxylic acid ester under the condition of 0 ≤ (d)/(b) < 0.1 (mol/mol), and B) an organic aluminum compound, and a process which hydrogenate said polyolefin.

29. The production method of an optical resin material described in any one of claims 17 - 28, wherein said olefin comprises a cyclic olefin.

30. The production method of an optical resin material described in claim 29, wherein said olefin comprises a cyclic olefin and a non-cyclic olefin.

31. The production method of an optical resin material described in any one of claims 17 - 28, which includes a process which incorporates a plasticizer or an antioxidant in said polymer.
